(19) Europäisches Patentamt
European Patent Office
Office européen des brevets

(11) **EP 4 084 546 B1**

(12) **EUROPEAN PATENT SPECIFICATION**

(45) Date of publication and mention
of the grant of the patent:
**11.03.2026 Bulletin 2026/11**

(21) Application number: **20915082.0**

(22) Date of filing: **23.01.2020**

(51) International Patent Classification (IPC):
*H04L 1/1867* (2023.01)   *H04L 1/1829* (2023.01)
*H04L 1/1822* (2023.01)   *H04W 72/02* (2009.01)
*H04L 5/00* (2006.01)

(52) Cooperative Patent Classification (CPC):
**H04L 1/1861; H04L 1/1822; H04L 1/1874;
H04L 1/188; H04L 1/1893; H04L 5/0055;
H04W 72/02**

(86) International application number:
**PCT/CN2020/073967**

(87) International publication number:
**WO 2021/147068 (29.07.2021 Gazette 2021/30)**

(54) **COMMUNICATION PROCESSING METHOD AND COMMUNICATION DEVICE**

KOMMUNIKATIONSVERARBEITUNGSVERFAHREN UND KOMMUNIKATIONSVORRICHTUNG

PROCÉDÉ DE TRAITEMENT DE COMMUNICATION ET DISPOSITIF DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.11.2022 Bulletin 2022/44**

(73) Proprietor: **Huawei Technologies Co., Ltd.
Shenzhen, Guangdong 518129, (CN)**

(72) Inventors:
• **LIU, Nannan**
**Shenzhen, Guangdong 518129 (CN)**
• **ZHANG, Xiangdong**
**Shenzhen, Guangdong 518129 (CN)**
• **CHANG, Junren**
**Shenzhen, Guangdong 518129 (CN)**
• **WEI, Dongdong**
**Shenzhen, Guangdong 518129 (CN)**

(74) Representative: **Körber, Martin Hans
Mitscherlich PartmbB
Karlstraße 7
80333 München (DE)**

(56) References cited:
**WO-A1-2017/126266      CN-A- 110 661 602
US-A1- 2013 223 356**

• **ERICSSON: "Feature lead summary#2 on
Resource allocation for NR sidelink Mode 1", vol.
RAN WG1, no. Chongqing, China; 20191118 -
20191122, 25 November 2019 (2019-11-25),
XP051830828, Retrieved from the Internet
<URL:https://ftp.3gpp.org/tsg_ran/WG1_RL1/
TSGR1_99/Docs/R1-1913547.zip R1-1913547 -
Feature lead summary 3 on Resource allocation
for NR sidelink Mode.docx> [retrieved on
20191125]**
• **INTERDIGITAL, INC.: "NR Sidelink Mode 2
Resource Allocation", 3GPP DRAFT;
R1-1912740, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG1, no. Reno, USA; 20191118 - 20191122, 8
November 2019 (2019-11-08), Mobile
Competence Centre ; 650, route des Lucioles ;
F-06921 Sophia-Antipolis Cedex ; France,
XP051820176**

EP 4 084 546 B1

**(Cont. next page)**

- **LENOVO, MOTOROLA MOBILITY: "Discussion on resource allocation for NR sidelink Mode 1", 3GPP DRAFT; R1-1912323, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 8 November 2019 (2019-11-08), Mobile Competence Centre ; 650, route des Lucioles ; F-06921 Sophia-Antipolis Cedex ; France, XP051819997**
- **LENOVO, MOTOROLA MOBILITY: "Discussion on resource allocation for NR sidelink Mode 1", 3GPP DRAFT; R1-1912323, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 8 November 2019 (2019-11-08), Mobile Competence Centre ; 650, route des Lucioles ; F-06921 Sophia-Antipolis Cedex ; France, XP051819997**
- **HUAWEI, HISILICON: "Sidelink feedback for NR V2X", 3GPP DRAFT; R1-1814302, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 November 2018 (2018-11-16), Mobile Competence Centre ; 650, route des Lucioles ; F-06921 Sophia-Antipolis Cedex ; France, pages 1 - 3, XP051494755**

## Description

## TECHNICAL FIELD

This application relates to communication technologies, and in particular, to a communication processing method and a communication device.

## BACKGROUND

In a 5G new radio (New Radio, NR) vehicle-to-everything (vehicle-to-everything, V2X) communication system, a terminal device may send HARQ feedback such as an acknowledgement (acknowledgement, ACK) or a negative acknowledgement (negative acknowledgement, NACK) to a base station, to indicate, to the base station, whether the terminal device successfully performs transmission on a sidelink (sidelink, SL) of the terminal device. For example, when the terminal device fails to perform transmission on the SL, the terminal device may send a NACK to the base station, to request a retransmission resource from the base station. Alternatively, when the base station successfully performs transmission on the SL, the terminal device may send an ACK to the base station.

Because the base station determines a transmission status of the sidelink of the terminal device by using the HARQ feedback of the sidelink of the terminal device, when the base station cannot receive the feedback from the terminal device for various reasons, the base station cannot learn the transmission status of the sidelink of the terminal device. If it is specified that in this case, the base station schedules a retransmission resource for the terminal device, a waste of system resources may be caused. Alternatively, if it is specified that in this case, the base station does not schedule a retransmission resource for the terminal device, service data transmission in a system may be affected. Possible behavior of the base station in this case and an urgent technical problem resulting from the possible behavior need to be studied and resolved. US 2013/223356 Al discusses an example where UE A transmits data to UE B on the D2D link. For data that is successfully received, UE B may generate one or more ACKs, and for data that is unsuccessfully (or not) received, UE B may generate one or more NACKs. InterDigital, Inc., "NR Sidelink Mode 2 Resource Allocation", 3GPP Draft; R1-1912740, discusses if Rx UE successfully receives data from Tx UE, then other UEs in the coverage of the Rx UE may reuse the resource reserved for data retransmission if it detects ACK from the Rx UE. Lenovo, Motorola Mobility, "Discussion on resource allocation for NR sidelink Mode 1", 3GPP Draft; R1-1912323 discloses that Tx UE may report ACK when SL-HARQ is disabled.

## SUMMARY

When a network device does not receive HARQ feedback of a sidelink from a terminal device, the network device may have the following two possible understandings and/or possible actions:

First possibility: The network device considers that the terminal device fails to perform transmission on a resource of the sidelink. In this understanding, the network device may schedule a sidelink retransmission resource for the terminal device.

Second possibility: The network device considers that the terminal device successfully performs transmission on a resource of the sidelink. In this understanding, the network device does not schedule a sidelink retransmission resource for the terminal device.

However, if the terminal device does not transmit data by using the resource that is of the sidelink and that is scheduled by the network device, the terminal device does not give HARQ feedback of the sidelink to the network device. In this case, the network device does not receive the HARQ feedback of the sidelink from the terminal device. In this case, if the network device schedules a sidelink retransmission resource for the terminal device, a waste of resources may be caused.

Alternatively, if the terminal device feeds back a NACK to the network device, but the terminal device cannot successfully send the feedback due to a conflict with other transmission, a poor channel condition, or the like, the network device does not receive the feedback. In this case, if the network device does not schedule a NACK retransmission resource for the terminal device, transmission performance of sidelink data of the terminal device is affected.

In view of this, embodiments of this application provide a communication processing method, to avoid a waste of system resources and also ensure transmission performance of sidelink data. The application is set out in the appended set of claims.

A first aspect of embodiments of this application provides a communication processing method. The method includes:

A first terminal device generates first acknowledgement information when the first terminal device does not perform transmission on a sidelink by using a first resource, where the sidelink is a wireless direct communication link between the first terminal device and a second terminal device; and then, the first terminal device sends the first acknowledgement information to a network device.

In this embodiment, when the first terminal device does not perform transmission on the sidelink by using the first resource, that is, the first terminal device determines not to transmit data by using the first resource, the first terminal device generates the first acknowledgement information, and sends the first acknowledgement information to the network device. In this way, the network device does not schedule a retransmission resource for the first terminal device, thereby avoiding a waste of resources.

In a possible implementation, that the first terminal device sends the first acknowledgement information to a network device includes: The first terminal device sends the first acknowledgement information to the network device by using a first physical uplink control channel (physical uplink control channel, PUCCH) resource corresponding to the first resource.

In this possible implementation, the first acknowledgement information is fed back by using the PUCCH resource corresponding to the first resource allocated by the network device. In this way, the network device can determine that the first acknowledgement information is for a data transmission status of the first terminal device on the first resource, to prevent the network device from scheduling a retransmission resource for the first terminal device, thereby avoiding a waste of resources.

In another possible implementation, that the first terminal device does not perform transmission on a sidelink by using a first resource includes any one or more of the following: Transmission in a fifth hybrid automatic repeat request (hybrid automatic repeat request, HARQ) process succeeds or ends, and the first terminal device obtains a retransmission resource allocated by the network device to the fifth HARQ process, where the retransmission resource is the first resource; a HARQ buffer corresponding to a fifth HARQ process is empty, where the first resource is associated with the fifth HARQ process; or no data is obtained in a fifth HARQ process, where the first resource is associated with the fifth HARQ process.

In this possible implementation, a plurality of possible cases in which the first terminal device does not perform transmission on the sidelink by using the first resource are shown, thereby improving practicality and diversity of the solution in actual application.

In another possible implementation, that a first terminal device generates first acknowledgement information when the first terminal device does not perform transmission on a sidelink by using a first resource includes: The first terminal device generates the first acknowledgement information when the first terminal device does not perform transmission on the sidelink by using the first resource and a first preset condition is met. The first preset condition includes any one or more of the following: The first PUCCH resource corresponding to the first resource exists; the first resource is not preempted by a second resource, where the second resource is a resource scheduled by the network device for the first terminal device; or the first PUCCH resource corresponding to the first resource is not used to feed back ninth acknowledgement information associated with the fifth HARQ process to the network device.

In this possible implementation, a plurality of preset conditions in which the first terminal device generates the first acknowledgement information are shown, thereby further improving diversity of an application scenario of the solution and implementability of the solution in actual application.

In another possible implementation, the first resource includes any one or more of the following:

a resource of the sidelink;
a configured grant resource of the sidelink;
a dynamic grant resource of the sidelink;
a mode 1 resource of the sidelink;
a type 1 configured grant resource of the sidelink; or
a type 2 configured grant resource of the sidelink.

In this possible implementation, some possible types of the first resource are shown, thereby improving implementability and integrity of the solution in actual application.

In another possible implementation, the first acknowledgement information is generated by a physical (physical, PHY) layer of the first terminal device according to an instruction of a medium access control (medium access control, MAC) layer of the first terminal device; the first acknowledgement information is generated by a MAC layer of the first terminal device, and is sent by the MAC layer of the first terminal device to a PHY layer of the first terminal device; or the first acknowledgement information is generated by a PHY layer of the first terminal device.

In this possible implementation, a plurality of generation manners of the first acknowledgement information are provided, thereby improving integrity and implementability of the solution.

In another possible implementation, the method further includes: The first terminal device receives seventh instruction information from the network device, where the seventh instruction information is used to instruct the first terminal device to generate or send the first acknowledgement information when the first terminal device does not perform transmission on the sidelink by using the first resource and/or the first preset condition is met.

In this possible implementation, a mechanism in which the first terminal device generates the first acknowledgement information may be implemented by the network device through instruction by using the seventh instruction information. The network device instructs, by using the seventh instruction information, the first terminal device to generate or send the first acknowledgement information when the first terminal device does not perform transmission on the sidelink by using the first resource and/or the first preset condition is met.

In another possible implementation, the first acknowledgement information is an acknowledgement ACK.

A second aspect of embodiments of this application provides a communication processing method. The method includes:

A network device sends seventh instruction information to a first terminal device, where the seventh instruction information is used to instruct the first terminal device to generate or send first acknowledgement information when the first terminal device does not perform transmission on a sidelink by using a first resource and/or a first preset condition is met. The first preset condition includes any one or more of the following: The first PUCCH resource corresponding to the first resource exists; the first resource is not preempted by a second resource, where the second resource is a resource scheduled by the network device for the first terminal device; or the first PUCCH resource corresponding to the first resource is not used to feed back ninth acknowledgement information associated with a fifth HARQ process to the network device.

In this embodiment, the network device instructs, by using the seventh instruction information, the first terminal device to generate or send the first acknowledgement information when the first terminal device does not perform transmission on the sidelink by using the first resource and/or the first preset condition is met. In this way, when the first terminal device does not perform transmission on the sidelink by using the first resource, the first terminal device generates the first acknowledgement information, and sends the first acknowledgement information to the network device. In this case, the network device does not schedule a retransmission resource for the first terminal device, thereby avoiding a waste of resources.

A third aspect of embodiments of this application provides a communication processing method. The method includes:

A first terminal device receives second instruction information sent by a network device, where the second instruction information is used to instruct the first terminal device to: retransmit or newly transmit data of a sidelink by using a type 1 resource when a second preset condition is met, where the type 1 resource includes a resource scheduled by the network device for the first terminal device and/or a resource selected, contended for, or sensed by the first terminal device; and the first terminal device retransmits data of a first HARQ process by using a first sidelink grant when the second preset condition is met, where the first sidelink grant belongs to the type 1 resource. The second preset condition includes any one or several of the following: The first terminal device does not obtain, within first preset duration, a resource used for retransmission in the first HARQ process; the first terminal device does not obtain, when a first timer expires, a resource used for retransmission in the first HARQ process; before, during, or after a time domain position of a resource associated with a first HARQ process ID of the first HARQ process, the first terminal device does not obtain a resource used for retransmission in the first HARQ process; for any one or more of the first HARQ process, a first HARQ process ID, a second sidelink grant, the data transmitted in the first HARQ process, and data transmitted on the second sidelink grant, a quantity of times the first terminal device sends a negative acknowledgement NACK to the network device does not reach a first preset threshold, where the first terminal device fails to perform transmission on the second sidelink grant; transmission in the first HARQ process fails; or transmission on a second sidelink grant fails.

In this possible implementation, the first terminal device retransmits or newly transmits the data of the first HARQ process by using the first sidelink grant when the second preset condition is met, that is, the first terminal device may retransmit or newly transmit the data of the first HARQ process in the second preset condition, to resolve the following problem: When the network device does not receive feedback from the first terminal device, the network device considers that the first terminal device successfully performs transmission on the sidelink, that is, the network device does not schedule a retransmission resource for the first terminal device, and consequently the first terminal device cannot transmit data.

In a possible implementation, the method further includes: The first terminal device determines that a third HARQ process ID associated with the first sidelink grant is different from the first HARQ process ID; and then, the first terminal device sends the first HARQ process ID to a second terminal device.

In this possible implementation, the first terminal device determines that the third HARQ process ID associated with the first sidelink grant is different from the first HARQ process ID, where the first sidelink grant is used to retransmit the data of the first HARQ process; and then, the first terminal device sends the first HARQ process ID to the second terminal device, to notify the second terminal device that data retransmitted by using the first sidelink grant is retransmitted data of the first HARQ process, so that the second terminal device can successfully receive the data retransmitted by the first terminal device by using the first sidelink grant.

In another possible implementation, the method further includes: The first terminal device determines that a third HARQ process ID associated with the first sidelink grant is different from the first HARQ process ID; and then, the first terminal device releases the first HARQ process and/or flushes a HARQ buffer corresponding to the first HARQ process.

In this possible implementation, the first terminal device newly transmits the data of the first HARQ process by using the first sidelink grant; and if the third HARQ process ID associated with the first sidelink grant is different from the first HARQ process ID, the first terminal device may release the first HARQ process and/or flush the HARQ buffer of the first HARQ process, to prevent the first HARQ process from being always occupied, thereby improving data transmission performance of the first terminal device.

In another possible implementation, the first sidelink grant includes any one or several of the following:

a resource of the sidelink;
a mode 1 resource of the sidelink;
a mode 2 resource of the sidelink;
a configured grant resource of the sidelink;
a type 1 configured grant resource of the sidelink;
a type 2 configured grant resource of the sidelink;
a configured grant resource set of the sidelink, where the configured grant resource set includes a configured grant resource corresponding to one or more configured grant resource indexes; or
a dynamic grant resource of the sidelink.

In this possible implementation, a plurality of possible types of the first sidelink grant are provided, thereby improving implementability and diversity of the solution in actual application.

In another possible implementation, that the first terminal device does not obtain, within first preset duration, a resource used for retransmission in the first HARQ process includes: The first terminal device does not obtain, within the first preset duration started or restarted after a second condition is met, the resource used for retransmission in the first HARQ process.

In another possible implementation, the second condition includes any one or several of the following:

The first terminal device sends second acknowledgement information to the network device, where the second acknowledgement information is used to indicate that the first terminal device fails to perform transmission on the sidelink, is used to indicate that the first terminal device fails to perform transmission on the second sidelink grant, is used to indicate that the first terminal device fails to perform transmission in a HARQ process corresponding to the first HARQ process ID, is used to request, from the network device, a resource used to retransmit the data of the sidelink, is used to request, from the network device, a resource used to retransmit the data that fails to be transmitted on the second sidelink grant, or is used to request, from the network device, a resource used to retransmit data that fails to be transmitted in the HARQ process corresponding to the first HARQ process ID;
before, during, or after a time domain position of a second PUCCH resource, where the second PUCCH resource has a correspondence with the second sidelink grant;
the first terminal device sends data on the second sidelink grant;
before, during, or after a time domain position of the second sidelink grant;
the first terminal device receives a NACK for the first HARQ process from the second terminal device;
the first terminal device does not receive feedback for the first HARQ process; or

before, during, or after a time domain position of a first PSFCH resource, where the second sidelink grant is associated with the first PSFCH resource.

The second sidelink grant is associated with any one or more of the second acknowledgement information, the first HARQ process ID, the first HARQ process, the second PUCCH resource, and the first PSFCH resource.

In this possible implementation, a plurality of conditions for starting or restarting the second preset duration are provided, thereby improving integrity and implementability of the solution in actual application.

In another possible implementation, the first sidelink grant is after the second sidelink grant.

In another possible implementation, the method further includes: stopping and/or resetting time counting of the first preset duration when any one or more of the following conditions are met: The first terminal device obtains a resource used for retransmission; transmission corresponding to the first preset duration succeeds or is completed; or transmission corresponding to the first HARQ process succeeds or is completed.

In another possible implementation, that the first terminal device does not obtain, when a first timer expires, a resource used for retransmission in the first HARQ process includes: The first timer is started or restarted when a second condition is met; and the first terminal device does not obtain, when the first timer expires, the resource used for retransmission in the first HARQ process.

In another possible implementation, the second condition includes any one or more of the following:

The first terminal device sends second acknowledgement information to the network device, where the second acknowledgement information is used to indicate that the first terminal device fails to perform transmission on the sidelink, is used to indicate that the first terminal device fails to perform transmission on the second sidelink grant, is used to indicate that the first terminal device fails to perform transmission in a HARQ process corresponding to the first HARQ process ID, is used to request, from the network device, a resource used to retransmit the data of the sidelink, is used to request, from the network device, a resource used to retransmit the data that fails to be transmitted on the second sidelink grant, or is used to request, from the network device, a resource used to retransmit data that fails to be transmitted in a HARQ process corresponding to the first HARQ process ID;
before, during, or after a time domain position of a second PUCCH resource, where the second PUCCH resource has a correspondence with the second sidelink grant;
the first terminal device sends data on the second sidelink grant;

before, during, or after a time domain position of the second sidelink grant;
the first terminal device receives a NACK for the first HARQ process from the second terminal device;
the first terminal device does not receive feedback for the first HARQ process; or
before, during, or after a time domain position of a first PSFCH resource, where the second sidelink grant is associated with the first PSFCH resource.

The second sidelink grant is associated with any one or more of the second acknowledgement information, the first HARQ process ID, the first HARQ process, the second PUCCH resource, and the first PSFCH resource.

In this possible implementation, a plurality of conditions for starting or restarting the first timer are provided, thereby improving integrity and implementability of the solution in actual application.

In another possible implementation, the method further includes: stopping and/or resetting the first timer when any one or more of the following conditions are met: The first terminal device obtains a resource used for retransmission; transmission corresponding to the first timer succeeds or is completed; or transmission corresponding to the first HARQ process succeeds or is completed.

In another possible implementation, the method further includes: The first terminal device sends second acknowledgement information to the network device when a sixth preset condition is met, where the second acknowledgement information is used to indicate that the first terminal device fails to perform transmission on the second sidelink grant, the second sidelink grant is associated with the first HARQ process ID, and the sixth preset condition includes any one or several of the following: The first terminal device does not receive feedback for a receiving status of the data in the first HARQ process and/or feedback for a receiving status of the data on the second sidelink grant; the first terminal device receives a first negative acknowledgement for the data in the first HARQ process and/or a first negative acknowledgement for the data on the second sidelink grant; the first terminal device receives a first acknowledgement sent by a third terminal device and a second negative acknowledgement sent by a fourth terminal device; a quantity of transmission times of the data of the sidelink and/or a quantity of transmission times in the first HARQ process do/does not reach a maximum quantity of transmission times or a maximum quantity of retransmission times; or transmission time of the data of the sidelink and/or transmission time in the first HARQ process do/does not reach maximum transmission time.

In this possible implementation, the first terminal device sends the second acknowledgement information to the network device when the sixth preset condition is met, to indicate that the first terminal device fails to perform transmission on the sidelink. In this way, the network device can schedule a retransmission resource for the first terminal device, to implement retransmission of the data of the first HARQ process.

A fourth aspect of embodiments of this application provides a communication processing method. The method includes:
A network device sends second instruction information to a first terminal device, where the second instruction information is used to instruct the first terminal device to retransmit data of a sidelink by using a type 1 resource when a second preset condition is met, and the type 1 resource includes a resource scheduled by the network device for the first terminal device and/or a resource selected, contended for, or sensed by the first terminal device; and the first terminal device retransmits data of a first HARQ process by using a first sidelink grant when the second preset condition is met, where the first sidelink grant belongs to the type 1 resource. The second preset condition includes any one or several of the following: The first terminal device does not obtain, within first preset duration, a resource used for retransmission in the first HARQ process; the first terminal device does not obtain, when a first timer expires, a resource used for retransmission in the first HARQ process; before, during, or after a time domain position of a resource associated with a first HARQ process ID of the first HARQ process, the first terminal device does not obtain a resource used for retransmission in the first HARQ process; for any one or more of the first HARQ process, a first HARQ process ID, a second sidelink grant, the data transmitted in the first HARQ process, and data transmitted on the second sidelink grant, a quantity of times the first terminal device sends a NACK to the network device does not reach a first preset threshold, where the first terminal device fails to perform transmission on the second sidelink grant; transmission in the first HARQ process fails; or transmission on a second sidelink grant fails, where the first HARQ process ID is associated with the first HARQ process, and the second sidelink grant is associated with the first HARQ process ID or the first HARQ process.

In this embodiment, the network device instructs, by using the second instruction information, the first terminal device to retransmit the data of the sidelink by using the type 1 resource when the second preset condition is met. In this way, the first terminal device can retransmit the data of the first HARQ process when the second preset condition is met, to resolve the following problem: When the network device does not receive feedback from the first terminal device, the network device considers that the first terminal device successfully performs transmission on the sidelink, that is, the network device does not schedule a retransmission resource for the first terminal device, and consequently the first terminal device cannot transmit data.

In a possible implementation, the method further includes: The network device receives second acknowledgement information sent by the first terminal device, where the second acknowledgement information is used to indicate that the first terminal device fails to perform transmission on the sidelink, is used to indicate that the first terminal device fails to perform transmission on the second sidelink grant, is used to indicate that the first terminal device fails to perform transmission in a HARQ process corresponding to the first HARQ process ID, is used to request, from the network device, a resource used to retransmit the data of the sidelink, is used to request, from the network device, a resource used to retransmit the data that fails to be transmitted on the second sidelink grant, or is used to request, from the network device, a resource used to retransmit data that fails to be transmitted in a HARQ process corresponding to the first HARQ process ID, where the second sidelink grant is associated with the first HARQ process ID.

In this possible implementation, the network device receives the second acknowledgement information sent by the first terminal device, to indicate that the first terminal device fails to perform transmission on the sidelink. In this way, the network device can schedule a retransmission resource for the first terminal device, to implement retransmission of the data of the first HARQ process.

In another possible implementation, after the network device receives the second acknowledgement information sent by the first terminal device, the method further includes: The network device schedules a retransmission resource of the first HARQ process for the first terminal device within seventh preset duration or before a fifth timer expires.

In this possible implementation, after the network device receives the second acknowledgement information sent by the first terminal device, the network device schedules the retransmission resource of the first HARQ process for the first terminal device within the seventh preset duration or before the fifth timer expires, to avoid the following case: When the first terminal device does not obtain a retransmission resource of the first HARQ process, the first terminal device retransmits the data of the first HARQ process by determining or selecting a resource scheduled by the network device, but the network device further allocates a retransmission resource for the first HARQ process of the first terminal device during or after this time, causing a waste of resources.

In another possible implementation, that the network device schedules a retransmission resource of the first HARQ process for the first terminal device within seventh preset duration or before a fifth timer expires includes: The network device schedules the retransmission resource of the first HARQ process for the first terminal device within the seventh preset duration started or restarted after a sixth condition is met or before the fifth timer started or restarted after a sixth condition is met expires, where the sixth condition includes any one or several of the following: The network device receives the second acknowledgement information sent by the first terminal device; before, during, or after a time domain position of a second PUCCH resource; before, during, or after a time domain position of the second sidelink grant, where the second sidelink grant is associated with the first HARQ process; the network device does not receive acknowledgement information sent by the first terminal device; or before, during, or after a time domain position of a first PSFCH resource.

In this possible implementation, a plurality of conditions in which the network device starts time counting of the seventh preset duration or the fifth timer are provided, thereby providing an application scenario of this embodiment of this application, and improving implementability or diversity of the solution.

In another possible implementation, the method further includes: stopping and/or resetting time counting of the seventh preset duration when any one or more of the following conditions are met: The network device schedules, for the first terminal device, a resource used for retransmission; transmission corresponding to the seventh preset duration succeeds or is completed; or transmission corresponding to the first HARQ process succeeds or is completed.

In another possible implementation, the method further includes: stopping and/or resetting the fifth timer when any one or more of the following conditions are met: The network device schedules, for the first terminal device, a resource used for retransmission; transmission corresponding to the fifth timer succeeds or is completed; or transmission corresponding to the first HARQ process succeeds or is completed.

A fifth aspect of embodiments of this application provides a communication processing method. The method includes:

A first terminal device generates fourth acknowledgement information when a fourth preset condition is met, where the fourth acknowledgement information is used to indicate that the first terminal device fails to perform transmission on a sidelink, is used to indicate that the first terminal device fails to perform transmission on a sixth sidelink grant, is used to indicate that the first terminal device fails to perform transmission in a HARQ process corresponding to a seventh HARQ process ID, is used to request, from a network device, a resource used to retransmit data of a sidelink, is used to request, from a network device, a resource used to retransmit data that fails to be transmitted on a sixth sidelink grant, or is used to request, from a network device, a resource used to retransmit data that fails to be transmitted in a HARQ process corresponding to a seventh HARQ process ID, where the sixth sidelink grant is associated with the seventh HARQ process ID; and then, the first terminal device sends the fourth acknowledgement information to the network device by using a PUCCH resource corresponding to a fifth sidelink grant, where the fourth preset condition includes any one or several of the following:

The first terminal device does not obtain, within third preset duration, a resource used for retransmission in a seventh HARQ process;

the first terminal device does not obtain, when a third timer expires, a resource used for retransmission in a seventh HARQ process;

before, during, or after a time domain position of a resource associated with a seventh HARQ process ID, the first terminal device does not obtain a resource used for retransmission in a seventh HARQ process;

for any one or more of a seventh HARQ process, the seventh HARQ process ID, the sixth sidelink grant, data transmitted in the seventh HARQ process, and the data transmitted on the sixth sidelink grant, a quantity of times the first terminal device sends a NACK to the network device does not reach a third preset threshold, where the first terminal device fails to perform transmission on the sixth sidelink grant, and the sixth sidelink grant is associated with the seventh HARQ process ID;

transmission in a seventh HARQ process fails; or transmission on the sixth sidelink grant fails, where the seventh HARQ process is associated with the fourth acknowledgement information, the seventh HARQ process is associated with the seventh HARQ process, the sixth sidelink grant is associated with the seventh HARQ process ID, and the fifth sidelink grant is associated with the seventh HARQ process ID.

In this embodiment, the first terminal device generates the fourth acknowledgement information when the fourth preset condition is met; and then, the first terminal device sends the fourth acknowledgement information to the network device. In this way, an opportunity in which the first terminal device feeds back a transmission status of the sidelink to the network device (for example, feeds back a NACK to a base station) is added, so that the network device can allocate a retransmission resource for the seventh HARQ process based on the received fourth acknowledgement information, to implement retransmission of the data of the seventh HARQ process.

In a possible implementation, that the first terminal device sends the fourth acknowledgement information to the network device includes: The first terminal device sends the fourth acknowledgement information to the network device by using the PUCCH resource corresponding to the fifth sidelink grant, where a HARQ process ID associated with the fifth sidelink grant is the same as a HARQ process ID associated with the sixth sidelink grant.

In this possible implementation, the fourth acknowledgement information is fed back by using the PUCCH resource corresponding to the fifth sidelink grant. In this way, the network device can determine that the fourth acknowledgement information is for a data transmission status of the first terminal device in the seventh HARQ process associated with the sixth sidelink grant, so that the network device schedules a retransmission resource of the seventh HARQ process for the first terminal device.

In another possible implementation, the fifth sidelink grant includes any one of the following:

a resource of the sidelink;
a mode 1 resource of the sidelink;
a configured grant resource of the sidelink;
a type 1 configured grant resource of the sidelink;
a type 2 configured grant resource of the sidelink;
a dynamic grant resource of the sidelink; or
a configured grant resource set of the sidelink, where the configured grant resource set includes a configured grant resource corresponding to one or more configured grant resource indexes.

The sidelink is a wireless direct communication link between the first terminal device and a second terminal device.

In this possible implementation, a plurality of possible resource forms of the fifth sidelink grant are provided, thereby improving implementability and diversity of the solution in actual application.

In another possible implementation, the method further includes: The first terminal device receives fourth instruction information from the network device, where the fourth instruction information is used to instruct the first terminal device to generate or send the fourth acknowledgement information when the fourth preset condition is met.

In this possible implementation, a mechanism in which the first terminal device generates the fourth acknowledgement information may be implemented by the network device through instruction by using the fourth instruction information. The network device instructs, by using the fourth instruction information instruction, the first terminal device to generate or send the fourth acknowledgement information when the fourth preset condition is met. In this way, an opportunity in which the first terminal device feeds back a transmission status of the sidelink to the network device (for example, feeds back a NACK to a base station) can be added, so that the network device can allocate a retransmission resource for the seventh HARQ process based on the received fourth acknowledgement information, to implement retransmission of the data of the seventh HARQ process.

In another possible implementation, when a quantity of times the first terminal device sends a NACK to the network device reaches the third preset threshold, and the first terminal device does not obtain a retransmission resource of the seventh HARQ process, the method further includes any one or any several of the following:

The first terminal device discards the data of the seventh HARQ process;
the first terminal device releases the seventh HARQ process;

the first terminal device flushes a HARQ buffer corresponding to the seventh HARQ process;

the first terminal device stops sending the fourth acknowledgement information; or

the first terminal device retransmits or newly transmits data on the sidelink by using a type 1 resource.

The sidelink is a wireless direct communication link between the first terminal device and a second terminal device.

In this possible implementation, if a quantity of times the first terminal device feeds back the fourth acknowledgement information to the network device reaches the third preset threshold, the first terminal device performs any one or more of the foregoing, to prevent the seventh HARQ process from always meaninglessly occupying the first terminal device, thereby improving a data transmission capability of the first terminal device.

In another possible implementation, the fourth acknowledgement information is generated by a PHY layer of the first terminal device according to an instruction sent by a MAC layer of the first terminal device; the fourth acknowledgement information is generated by a MAC layer of the first terminal device, and is sent by the MAC layer of the first terminal device to a PHY layer of the first terminal device; or the fourth acknowledgement information is generated by a PHY layer of the first terminal device.

In this possible implementation, a plurality of generation manners of the fourth acknowledgement information are provided, thereby improving implementability and diversity of the solution.

In another possible implementation, that the first terminal device does not obtain a retransmission resource of a seventh HARQ process within third preset duration includes: The first terminal device does not obtain the retransmission resource of the seventh HARQ process within the third preset duration started or restarted after a fourth condition is met.

In this possible implementation, a plurality of conditions for starting or restarting the third preset duration are provided, thereby improving integrity and implementability of the solution in actual application.

In another possible implementation, that the first terminal device does not obtain a retransmission resource of a seventh HARQ process when a third timer expires includes: The first terminal device starts or restarts the third timer after a fourth condition is met; and the first terminal device does not obtain the retransmission resource of the seventh HARQ process when the third timer expires.

In another possible implementation, the fourth condition includes any one or several of the following:

The first terminal device sends fifth acknowledgement information to the network device, where the fifth acknowledgement information is used to indicate that the first terminal device fails to perform transmission on the sixth sidelink grant;

before, during, or after a time domain position of a fourth PUCCH resource, where the fourth PUCCH resource has a correspondence with the sixth sidelink grant;

the first terminal device sends data on the sixth sidelink grant;

before, during, or after a time domain position of the sixth sidelink grant;

the first terminal device receives a NACK for the seventh HARQ process from the second terminal device;

the first terminal device does not receive feedback for the seventh HARQ process; or

before, during, or after a time domain position of a third PSFCH resource, where the sixth sidelink grant is associated with any one or more of the fifth acknowledgement information, the seventh HARQ process ID, the seventh HARQ process, the fourth PUCCH resource, and the third PSFCH resource.

In another possible implementation, time counting of the third preset duration is stopped or reset when any one or more of the following conditions are met: The first terminal device obtains a resource used for retransmission; transmission corresponding to the third preset duration succeeds or is completed; or transmission corresponding to the seventh HARQ process succeeds or is completed.

In another possible implementation, the third timer is stopped or reset when any one or more of the following conditions are met: The first terminal device obtains a resource used for retransmission; transmission corresponding to the third timer succeeds or is completed: or transmission corresponding to the seventh HARQ process succeeds or is completed.

In another possible implementation, the fourth acknowledgement information is a NACK.

In another possible implementation, the sixth sidelink grant is before the fifth sidelink grant.

A sixth aspect of embodiments of this application provides a communication processing method. The method includes:

A network device sends fourth instruction information to a first terminal device, where the fourth instruction information is used to instruct the first terminal device to generate or send, to the network device, fourth acknowledgement information when a fourth preset condition is met.

The fourth preset condition includes any one or several of the following:

The first terminal device does not obtain, within third preset duration, a resource used for retransmission in a seventh HARQ process;

the first terminal device does not obtain, when a third timer expires, a resource used for retransmission in a seventh HARQ process;

before, during, or after a time domain position of a resource associated with a seventh HARQ process ID, the first terminal device does not obtain a resource used for retransmission in a seventh HARQ process;

for any one or more of a seventh HARQ process, a seventh HARQ process ID, a sixth sidelink grant, data transmitted in the seventh HARQ process, and data transmitted on the sixth sidelink grant, a quantity of times the first terminal device sends a NACK to the network device does not reach a third preset threshold, where the first terminal device fails to perform transmission on the sixth sidelink grant, and the sixth sidelink grant is associated with the seventh HARQ process ID;

transmission in a seventh HARQ process fails; or transmission on a sixth sidelink grant fails, where the seventh HARQ process is associated with the fourth acknowledgement information, the seventh HARQ process is associated with the seventh HARQ process, the sixth sidelink grant is associated with the seventh HARQ process ID, and the fifth sidelink grant is associated with the seventh HARQ process ID.

In this embodiment, the network device instructs, by using the fourth instruction information, the first terminal device to generate or send the fourth acknowledgement information when the fourth preset condition is met. In this way, an opportunity in which the first terminal device feeds back a transmission status of the sidelink to the network device (for example, feeds back a NACK to a base station) is added, so that the network device can allocate a retransmission resource for the seventh HARQ process based on the received fourth acknowledgement information, to implement retransmission of the data of the seventh HARQ process.

A seventh aspect of embodiments of this application provides a communication processing method. The method includes:

A first terminal device performs any one or several of the following when a fifth preset condition is met:

discarding data corresponding to a tenth HARQ process;
flushing a HARQ buffer corresponding to a tenth HARQ process;
releasing a tenth HARQ process;
deleting a correspondence related to a tenth HARQ process; or
deleting a correspondence related to first SCI.

The fifth preset condition includes any one or several of the following:

The first terminal device does not obtain, within fourth preset duration, a resource used for retransmission in the tenth HARQ process;

the first terminal device does not obtain, when a thirteenth timer expires, a resource used for retransmission in the tenth HARQ process;

for any one or more of the tenth HARQ process, a tenth HARQ process ID, an eighth sidelink grant, data transmitted in the tenth HARQ process, and data transmitted on the eighth sidelink grant, a quantity of times the first terminal device sends a NACK to the network device reaches a fourth preset threshold;

for any one or more of the tenth HARQ process, a tenth HARQ process ID, an eighth sidelink grant, data transmitted in the tenth HARQ process, and data transmitted on the eighth sidelink grant, a quantity of times the first terminal device receives a NACK reaches a fifth preset threshold;

before, on, or after a resource associated with a tenth HARQ process ID of the tenth HARQ process, the first terminal device does not obtain a resource used for retransmission in the tenth HARQ process;

the first terminal device does not receive the first SCI for L times, and the first SCI is SCI corresponding to the tenth HARQ process;

the first terminal device does not receive, within fifth preset duration, the first SCI sent by a second terminal device or data that corresponds to the first SCI and that is sent by a second terminal device;

the first terminal device does not receive, when a fourth timer expires, the first SCI sent by a second terminal device or data that corresponds to the first SCI and that is sent by a second terminal device; or

for any one or more of the tenth HARQ process, the first SCI, a tenth HARQ process ID, an eighth sidelink grant, data transmitted in the tenth HARQ process, and data transmitted on the eighth sidelink grant, a quantity of times the first terminal device sends a NACK to a second terminal device reaches a sixth preset threshold.

In this possible implementation, the first terminal device performs some operations shown above when the fifth preset condition is met, to prevent the tenth HARQ process from being meaninglessly occupied, thereby improving a data transmission capability of the first terminal device.

In a possible implementation, the method further includes: The first terminal device receives sixth instruction information sent by the network device, where the sixth instruction information is used to instruct the first terminal device to perform any one or several of the following when the fifth preset condition is met:

discarding the data corresponding to the tenth HARQ process;
flushing the HARQ buffer corresponding to the tenth HARQ process;
releasing the tenth HARQ process;
deleting the correspondence related to the tenth HARQ process; or
deleting the correspondence related to the first SCI.

In this possible implementation, the first terminal device may perform some foregoing related operations when the fifth preset condition is met, to prevent the tenth HARQ process from being meaninglessly occupied, thereby improving a data transmission capability of the first terminal device.

In another possible implementation, the fourth preset duration is first duration; the fourth preset duration is second duration; the fourth preset duration is the first duration plus the second duration; or the fourth preset duration is third duration, where the first duration is duration in which the first terminal device waits for a resource that is used for retransmission in the tenth HARQ process and that is scheduled by the network device for the first terminal device, the second duration is duration in which the first terminal device waits for the first terminal device to determine a resource used for retransmission in the tenth HARQ process and/or the first terminal device to contend for, select, or perceive a resource used for retransmission in the tenth HARQ process, and the third duration is duration in which the first terminal device waits for a resource used for retransmission in the tenth HARQ process.

In another possible implementation, that the first terminal device does not obtain a retransmission resource of the tenth HARQ process within fourth preset duration includes: The first terminal device does not obtain, within the fourth preset duration started or restarted after a first condition is met, a resource or a retransmission resource used for the tenth HARQ process, where the first condition includes any one or several of the following:

The first terminal device sends seventh acknowledgement information to the network device;
before, during, or after a time domain position of a fifth PUCCH resource;
the first terminal device sends data on the eighth sidelink grant;
before, during, or after a time domain position of the eighth sidelink grant;
the first terminal device receives a NACK for the tenth HARQ process;
the first terminal device does not receive feedback for the tenth HARQ process; or
before, during, or after a time domain position of a fourth PSFCH resource.

The fourth PSFCH resource is associated with any one or more of the eighth sidelink grant, the tenth HARQ process ID, and the tenth HARQ process.

In this possible implementation, a plurality of possible conditions for starting or restarting the fourth preset duration are shown, thereby improving diversity and implementability of the solution.

In another possible implementation, that the first terminal device does not obtain, when a thirteenth timer expires, a resource used for retransmission in the tenth HARQ process includes: The thirteenth timer is started or restarted if a first condition is met; and a resource or a retransmission resource used in the tenth HARQ process is not obtained when the thirteenth timer expires, where the first condition includes any one or more of the following:

The first terminal device sends seventh acknowledgement information to the network device;
before, during, or after a time domain position of a fifth PUCCH resource;
the first terminal device sends data on the eighth sidelink grant;
before, during, or after a time domain position of the eighth sidelink grant;
the first terminal device receives a NACK for the tenth HARQ process;
the first terminal device does not receive feedback for the tenth HARQ process; or
before, during, or after a time domain position of a fourth PSFCH resource.

The fourth PSFCH resource is associated with any one or more of the eighth sidelink grant, the tenth HARQ process ID, and the tenth HARQ process.

In this possible implementation, a plurality of possible conditions for starting or restarting the thirteenth timer are shown, thereby improving diversity and implementability of the solution.

In another possible implementation, the method further includes: The first terminal device stops and/or resets time counting of the fourth preset duration when a thirteenth condition is met, where the thirteenth condition includes any one or several of the following: The first terminal device obtains a resource used for retransmission in the tenth HARQ process; or transmission corresponding to the tenth HARQ process succeeds or is completed.

In another possible implementation, the method further includes: The first terminal device stops and/or resets the thirteenth timer when a thirteenth condition is met, where the thirteenth condition includes any one or several of the following: The first terminal device obtains a resource used for retransmission in the tenth HARQ process; or transmission corresponding to the tenth HARQ process succeeds or is completed.

In another possible implementation, that the first terminal device does not receive, within fifth preset duration, the first SCI sent by a second terminal device or data that corresponds to the first SCI and that is sent by a second terminal device includes: The first terminal device does not receive, within the fifth preset duration started or restarted when a ninth condition is met, the first SCI sent by the second terminal device or the data that corresponds to the first SCI and that is sent by the second terminal device, where the ninth condition includes any one or several of the following: The first terminal device receives the first SCI; or the first terminal device receives the data corresponding to the first SCI.

In another possible implementation, that the first terminal device does not receive, when a fourth timer expires, the first SCI sent by a second terminal device or data that corresponds to the first SCI and that is sent by a second terminal device includes: The first terminal device starts or restarts the fourth timer when a ninth condition is met; and does not receive, when the fourth timer expires, the first SCI sent by the second terminal device or the data that corresponds to the first SCI and that is sent by the second terminal device, where the ninth condition includes any one or several of the following: The first terminal device receives the first SCI; or the first terminal device receives the data corresponding to the first SCI.

In another possible implementation, the method further includes: The first terminal device stops or resets time counting of the fifth preset duration when a twelfth condition is met, where the twelfth condition includes any one or several of the following:

> The first terminal device successfully receives or successfully decodes the data corresponding to the first SCI;
> the first terminal device sends an acknowledgement to the second terminal device;
> a quantity of times the first terminal device receives the first SCI sent by the second terminal device or the data that corresponds to the first SCI and that is sent by the second terminal device reaches a maximum quantity of times, a maximum quantity of transmission times, or a maximum quantity of receiving times;
> duration in which the first terminal device receives the first SCI or the data corresponding to the first SCI is greater than or equal to sixth preset duration; or
> the first terminal device receives the first SCI or the data corresponding to the first SCI, where the first SCI includes an indication of the last time of transmission.

In another possible implementation, the method further includes: The first terminal device stops or resets the fourth timer when a twelfth condition is met, where the twelfth condition includes any one or several of the following:

> The first terminal device successfully receives or successfully decodes the data corresponding to the first SCI;
> the first terminal device sends an acknowledgement to the second terminal device;
> a quantity of times the first terminal device receives the first SCI sent by the second terminal device or the data that corresponds to the first SCI and that is sent by the second terminal device reaches a maximum quantity of times, a maximum quantity of transmission times, or a maximum quantity of receiving times; duration in which the first terminal device receives the first SCI or the data corresponding to the first SCI is greater than or equal to sixth preset duration; or the first terminal device receives the first SCI or the data corresponding to the first SCI, where the first SCI includes an indication of the last time of transmission.

In another possible implementation, the method further includes: The first terminal device receives sixth instruction information sent by the network device, where the sixth instruction information is used to instruct the first terminal device to perform any one or several of the following when the fifth preset condition is met: discarding the data corresponding to the tenth HARQ process; flushing the HARQ buffer corresponding to the tenth HARQ process; releasing the tenth HARQ process; deleting the correspondence related to the tenth HARQ process; or deleting the correspondence related to the first SCI.

An eighth aspect of embodiments of this application provides a communication processing method. The method includes:

A network device sends sixth instruction information to a first terminal device, where the sixth instruction information is used to instruct the first terminal device to perform any one or several of the following when a fifth preset condition is met: discarding data corresponding to a tenth HARQ process; flushing a HARQ buffer corresponding to a tenth HARQ process; releasing a tenth HARQ process; deleting a correspondence related to a tenth HARQ process; or deleting a correspondence related to first SCI, where the fifth preset condition includes any one or several of the following:

> The first terminal device does not obtain, within fourth preset duration, a resource used for retransmission in the tenth HARQ process;
> the first terminal device does not obtain, when a thirteenth timer expires, a resource used for retransmission in the tenth HARQ process;
> for any one or more of the tenth HARQ process, a tenth HARQ process ID, an eighth sidelink grant, data transmitted in the tenth HARQ process, and data transmitted on the eighth sidelink grant, a quantity of times the first terminal device sends a NACK to the network device reaches a fourth preset threshold;
> for any one or more of the tenth HARQ process, a tenth HARQ process ID, an eighth sidelink grant, data transmitted in the tenth HARQ process, and data transmitted on the eighth sidelink grant, a quantity of times the first terminal device receives a NACK reaches a fifth preset threshold;
> before, on, or after a resource associated with a tenth HARQ process ID of the tenth HARQ process, the first terminal device does not obtain a resource used for retransmission in the tenth HARQ process;
the first terminal device does not receive the first SCI for L times, and the first SCI is SCI corresponding to the tenth HARQ process;
the first terminal device does not receive, within fifth preset duration, the first SCI sent by a second terminal device or data that corresponds to the first SCI and that is sent by a second terminal device;
the first terminal device does not receive, when a fourth timer expires, the first SCI sent by a second terminal device or data that corresponds to the first SCI and that is sent by a second terminal device; or
for any one or more of the tenth HARQ process, the first SCI, a tenth HARQ process ID, an eighth sidelink grant, data transmitted in the tenth HARQ process, and data transmitted on the eighth sidelink grant, a quantity of times the first terminal device sends a NACK to a second terminal device reaches a sixth preset threshold.

A ninth aspect of embodiments of this application provides a communication processing method. The method includes:

A fifth terminal device monitors and/or decodes a PDCCH or DCI scrambled by using a first RNTI, where the fifth terminal device and a sixth terminal device share the first RNTI; and then, the fifth terminal device obtains a sixth resource, where the sixth resource may include any one or several of the following resources: a resource of a sidelink; a mode 1 resource of a sidelink; a configured grant resource of a sidelink; a type 2 configured grant resource of a sidelink; a dynamic grant resource of a sidelink; a resource of an uplink; a configured grant resource of an uplink; a type 2 configured grant resource of an uplink; a dynamic grant resource of an uplink; a resource of a downlink; a semi-persistent allocation resource of a downlink; or a dynamic allocation resource of a downlink.

In a possible implementation, the sixth resource includes any one or several of the following: a resource used for new transmission; or a resource used for retransmission.

In another possible implementation, the method further includes: The fifth terminal device obtains a sixth PUCCH resource, where the sixth PUCCH resource is used by the fifth terminal device and/or the sixth terminal device to feed back a transmission status on the sixth resource to a network device.

In another possible implementation, the method further includes: The fifth terminal device sends ninth negative acknowledgement information to the network device, where the ninth negative acknowledgement information is used to indicate that the fifth terminal device fails to perform transmission on the sidelink, is used to indicate that the fifth terminal device fails to perform transmission on an eighteenth sidelink grant, is used to indicate that the fifth terminal device fails to perform transmission in a HARQ process corresponding to an eleventh HARQ process ID, is used to request, from the network device, resource used to retransmit data of the sidelink, is used to request, from the network device, a resource used to retransmit data that fails to be transmitted on an eighteenth sidelink grant, or is used to request, from the network device, a resource used to retransmit data that fails to be transmitted in an eleventh HARQ process.

In another possible implementation, the method further includes: The fifth terminal device sends the ninth negative acknowledgement information to the network device by using the sixth PUCCH resource.

In another possible implementation, the method further includes: The first RNTI is associated with the sixth PUCCH resource; the fifth terminal device determines the sixth PUCCH resource based on the first RNTI; or the fifth terminal device determines the first RNTI based on the sixth PUCCH resource.

In another possible implementation, before the fifth terminal device monitors and/or decodes the PDCCH or the DCI scrambled by using the first RNTI, the method further includes: The fifth terminal device receives first information from the network device, a higher layer, or an upper layer, where the first information is used to instruct and/or configure the fifth terminal device to monitor and/or decode the PDCCH or the DCI scrambled by using the first RNTI.

In another possible implementation, the fifth terminal device monitors and/or decodes, in a first search space, the PDCCH or the DCI scrambled by using the first RNTI, where the first search space includes any one or several of the following: a common search space; a specific search space; or a group search space.

In another possible implementation, the method further includes: The fifth terminal device determines the first search space based on any one or several of the following content: the first RNTI, a C-RNTI, a TC-RNTI, a CS-RNTI, an SPS C-RNTI, an SLCS-RNTI, an SL-RNTI, an SL semi-persistent scheduling V-RNTI, or an SL semi-persistent scheduling V-RNTI.

In another possible implementation, before the fifth terminal device monitors and/or decodes the PDCCH or the DCI scrambled by using the first RNTI, the method further includes: The fifth terminal device receives the first RNTI sent by the network device; or the fifth terminal device determines the first RNTI.

In another possible implementation, that the fifth terminal device determines the first RNTI includes: The fifth terminal device determines the first RNTI based on an RNTI used for resource scheduling or an RNTI used for random access; and/or the fifth terminal device determines the first RNTI based on a PUCCH resource.

A tenth aspect of embodiments of this application provides a communication processing method. The method includes:

A network device sends a first RNTI to a fifth terminal device and a sixth terminal device, where the first RNTI is an RNTI configured by the network device to be shared by the fifth terminal device and the sixth terminal device, and the fifth terminal device and the sixth terminal device obtain, by using the first RNTI, a resource scheduled by the network device; and the network device schedules a sixth resource for the fifth terminal device and the sixth terminal device by using the first RNTI.

In a possible implementation, before the network device sends the first RNTI to the fifth terminal device and the sixth terminal device, the method further includes: The network device sends first information to the fifth terminal device and the sixth terminal device, where the first information is used to instruct and/or configure the fifth terminal device and the sixth terminal device to monitor or decode a PDCCH or DCI scrambled by using the first RNTI.

In another possible implementation, terminal devices that share the first RNTI include terminal devices of at least one group.

In another possible implementation, the terminal devices of the at least one group include terminal devices of a first group, and the fifth terminal device and the sixth terminal device belong to the terminal devices of the first group. The method further includes:
the network device allocates a sixth PUCCH resource to the terminal devices of the first group, where the sixth PUCCH resource is used by the terminal devices of the first group to feed back a transmission status on the sixth resource to the network device.

In another possible implementation, the terminal devices of the at least one group include terminal devices of a first group and terminal devices of a second group, the fifth terminal device belongs to the terminal devices of the first group, and the sixth terminal device belongs to the terminal devices of the second group. The method further includes:
the network device allocates a sixth PUCCH resource to the terminal devices of the first group, and allocates a seventh PUCCH resource to the terminal devices of the second group, where the sixth PUCCH resource is used by the terminal devices of the first group to feed back a transmission status on the sixth resource to the network device, and the seventh PUCCH resource is used by the terminal devices of the second group to feed back a transmission status on the sixth resource to the network device.

In another possible implementation, before the network device schedules the sixth resource for the fifth terminal device and the sixth terminal device by using the first RNTI, the method further includes:
the network device receives ninth negative acknowledgement information sent by the fifth terminal device, where the ninth negative acknowledgement information is used to indicate that the fifth terminal device fails to perform transmission on a sidelink, is used to indicate that the fifth terminal device fails to perform transmission on an eighteenth sidelink grant, is used to indicate that the fifth terminal device fails to perform transmission in a HARQ process corresponding to an eleventh HARQ process ID, is used to request, from the network device, resource used to retransmit data of a sidelink, is used to request, from the network device, a resource used to retransmit data that fails to be transmitted on an eighteenth sidelink grant, or is used to request, from the network device, a resource used to retransmit data that fails to be transmitted in an eleventh HARQ process.

An eleventh aspect of embodiments of this application provides a communication processing method. The method includes:
A first terminal device generates eighth acknowledgement information when HARQ feedback of a sidelink of the first terminal device is disabled, where the sidelink is a wireless direct communication link between the first terminal device and a second terminal device; and then, the first terminal device sends the eighth acknowledgement information to a network device.

In this embodiment, the first terminal device generates the eighth acknowledgement information when the HARQ feedback of the sidelink of the first terminal device is disabled, and sends the eighth acknowledgement information to the network device. In this way, the network device does not allocate a retransmission resource to the first terminal device, thereby avoiding a waste of resources.

In a possible implementation, that the first terminal device sends the eighth acknowledgement information to a network device includes: The first terminal device sends the eighth acknowledgement information to the network device by using an eighth PUCCH resource.

In this possible implementation, the first terminal device sends the eighth acknowledgement information to the network device by using the eighth PUCCH resource. In this way, the network device can determine, by using the eighth PUCCH resource, a corresponding process in which data is successfully transmitted or a corresponding resource on which data is successfully transmitted, so that the network device does not schedule a retransmission resource for this part of data of the first terminal device.

In another possible implementation, that a first terminal device generates eighth acknowledgement information when HARQ feedback of a sidelink of the first terminal device is disabled includes: The first terminal device generates the eighth acknowledgement information when the HARQ feedback of the sidelink of the first terminal device is disabled and a tenth preset condition is met.

The tenth preset condition includes any one or more of the following:

The first terminal device obtains an eighth resource;
the first terminal device performs sidelink transmission on an eighth resource;
an eighth resource has the corresponding eighth PUCCH resource; or
an eighth resource is not preempted by a ninth resource, where the ninth resource is a resource scheduled by the network device for the first terminal device.

In this possible implementation, the first terminal device generates the eighth acknowledgement information when the HARQ feedback of the sidelink of the first terminal device is disabled and one or more of the tenth preset conditions are met. A plurality of application scenarios of specifically generating the eighth acknowledgement information, thereby improving diversity and implementability of the solution.

In another possible implementation, the eighth resource includes any one or more of the following:

a resource of the sidelink;
a configured grant resource of the sidelink;
a dynamic grant resource of the sidelink;
a mode 1 resource of the sidelink;
a type 1 configured grant resource of the sidelink; or
a type 2 configured grant resource of the sidelink.

In this possible implementation, a plurality of possible resource forms of the eighth resource are provided, thereby improving implementability and diversity of the solution in actual application.

In another possible implementation, the eighth acknowledgement information is generated by a PHY layer of the first terminal device according to an instruction of a MAC layer of the first terminal device; the eighth acknowledgement information is generated by a MAC layer of the first terminal device, and is sent by the MAC layer of the first terminal device to a PHY layer of the first terminal device; or the eighth acknowledgement information is generated by a PHY layer of the first terminal device.

In this possible implementation, a plurality of possible generation manners of the eighth acknowledgement information are provided, thereby improving implementability and diversity of the solution.

In another possible implementation, the method further includes: The first terminal device receives eighth instruction information sent by the network device, where the eighth instruction information is used to instruct the first terminal device to generate the eighth acknowledgement information when the HARQ feedback of the sidelink of the first terminal device is disabled and/or the tenth preset condition is met, or instruct the first terminal device to send the eighth acknowledgement information to the network device when the HARQ feedback of the sidelink of the first terminal device is disabled and/or the tenth preset condition is met.

In this possible implementation, the first terminal device is instructed, by using the eighth instruction information, to send the eighth acknowledgement information to the network device when the HARQ feedback of the sidelink of the first terminal device is disabled and/or the tenth preset condition is met. In this way, after receiving the eighth acknowledgement information, the network device does not allocate a retransmission resource to the first terminal device, thereby avoiding a waste of resources.

A twelfth aspect of embodiments of this application provides another communication processing method. The method includes:
A network device sends eighth instruction information to a first terminal device, where the eighth instruction information is used to instruct the first terminal device to generate eighth acknowledgement information when HARQ feedback of a sidelink of the first terminal device is disabled and/or a tenth preset condition is met, or instruct the first terminal device to send eighth acknowledgement information to the network device when HARQ feedback of a sidelink of the first terminal device is disabled and/or a tenth preset condition is met, where the tenth preset condition includes any one or more of the following:

The first terminal device obtains an eighth resource;
the first terminal device performs sidelink transmission on an eighth resource;
an eighth resource has a corresponding eighth PUCCH resource; or
an eighth resource is not preempted by a ninth resource, where the ninth resource is a resource scheduled by the network device for the first terminal device.

In this possible implementation, the network device instructs, by using the eighth instruction information, the first terminal device to send the eighth acknowledgement information to the network device when the HARQ feedback of the sidelink of the first terminal device is disabled and/or the tenth preset condition is met. In this way, after receiving the eighth acknowledgement information, the network device does not allocate a retransmission resource to the first terminal device, thereby avoiding a waste of resources.

A thirteenth aspect of embodiments of this application provides a communication device. The communication device has a function of implementing the behavior of the first terminal device in the first aspect, the third aspect, the fifth aspect, the seventh aspect, and the eleventh aspect. The function may be implemented by hardware, or may be implemented by hardware by executing corresponding software. The hardware or the software includes one or more modules corresponding to the function.

A fourteenth aspect of embodiments of this application provides a communication device. The communication device has a function of implementing the behavior of the fifth terminal device in the ninth aspect. The function may be implemented by hardware, or may be implemented by hardware by executing corresponding software. The hardware or the software includes one or more modules corresponding to the function.

A fifteenth aspect of embodiments of this application provides a communication device. The communication device has a function of implementing the behavior of the network device in the second aspect, the fourth aspect, the sixth aspect, the eighth aspect, the tenth aspect, and the twelfth aspect. The function may be implemented by hardware, or may be implemented by hardware by executing corresponding software. The hardware or the software includes one or more modules corresponding to the function.

A sixteenth aspect of embodiments of this application provides a communication device. The communication device includes a processor, a memory, an input/output device, and a bus. The processor, the memory, and the input/output device are separately connected to the bus. The memory stores computer instructions. When executing the computer instructions in the memory, the processor is configured to implement any implementation in the first aspect, the third aspect, the fifth aspect, the seventh aspect, the ninth aspect, and the eleventh aspect.

A seventeenth aspect of embodiments of this application provides a communication device. The communication device includes a processor, a memory, an input/output device, and a bus. The processor, the memory, and the input/output device are separately connected to the bus. The memory stores computer instructions. When executing the computer instructions in the memory, the processor is configured to implement any implementation in the second aspect, the fourth aspect, the sixth aspect, the eighth aspect, the tenth aspect, and the twelfth aspect.

An eighteenth aspect of embodiments of this application provides a chip system. The chip system includes a processor, configured to support a network device in implementing the functions in the first aspect, the third aspect, the fifth aspect, the seventh aspect, the ninth aspect, and the eleventh aspect, for example, sending or processing data and/or information in the foregoing methods. In a possible design, the chip system further includes a memory. The memory is configured to store necessary program instructions and data of the network device. The chip system may include a chip, or may include a chip and another discrete component.

A nineteenth aspect of embodiments of this application provides a chip system. The chip system includes a processor, configured to support a network device in implementing the functions in the second aspect, the fourth aspect, the sixth aspect, the eighth aspect, the tenth aspect, and the twelfth aspect, for example, sending or processing data and/or information in the foregoing methods. In a possible design, the chip system further includes a memory. The memory is configured to store necessary program instructions and data of the network device. The chip system may include a chip, or may include a chip and another discrete component.

A twentieth aspect of embodiments of this application provides a computer program product that includes instructions. When the computer program product runs on a computer, the computer is enabled to perform any implementation in the first aspect to the twelfth aspect.

A twenty-first aspect of embodiments of this application provides a computer-readable storage medium, including instructions. When the instructions run on a computer, the computer is enabled to perform any implementation in the first aspect to the twelfth aspect.

BRIEF DESCRIPTION OF DRAWINGS

FIG. 1A is a schematic diagram of a system architecture according to an embodiment of this application;
FIG. 1B is a schematic diagram of a scenario according to an embodiment of this application;
FIG. 1C is a schematic diagram of another scenario according to an embodiment of this application;
FIG. 2 is a schematic diagram of an embodiment of a communication processing method according to an embodiment of this application;
FIG. 3 is a schematic diagram of another embodiment of a communication processing method according to an embodiment of this application;
FIG. 4 is a schematic diagram of another embodiment of a communication processing method according to an embodiment of this application;
FIG. 5A is a schematic diagram of another embodiment of a communication processing method according to an embodiment of this application;
FIG. 5B is a schematic diagram of another scenario of a communication processing method according to an embodiment of this application;
FIG. 5C is a schematic diagram of another scenario of a communication processing method according to an embodiment of this application;
FIG. 5D is a schematic diagram of another scenario of a communication processing method according to an embodiment of this application;
FIG. 6 is a schematic diagram of another embodiment of a communication processing method according to an embodiment of this application;
FIG. 7A is a schematic diagram of another embodiment of a communication processing method according to an embodiment of this application;
FIG. 7B is a schematic diagram of another scenario of a communication processing method according to an embodiment of this application;
FIG. 8 is a schematic diagram of another embodiment of a communication processing method according to an embodiment of this application;
FIG. 9 is a schematic diagram of a structure of a communication device according to an embodiment of this application;
FIG. 10 is a schematic diagram of another structure of a communication device according to an embodiment of this application;

FIG. 11 is a schematic diagram of another structure of a communication device according to an embodiment of this application; and

FIG. 12 is a schematic diagram of a communication processing system according to an embodiment of this application.

## DESCRIPTION OF EMBODIMENTS

The following describes the technical solutions in embodiments of this application with reference to the accompanying drawings in embodiments of this application. Features or content identified by a dashed line in the accompanying drawings may be understood as an optional operation or an optional structure in embodiments of this application. It should be understood that, all other embodiments obtained by a person skilled in the art based on embodiments in embodiments of this application fall within the protection scope of this application.

In the description of this application, words such as "first", "second", "operation 201", or "operation 202" are used only for purposes of distinguishing between descriptions and conveniently describing the context, and different sequence numbers have no specific technical meaning, and cannot be understood as an indication or an implication of relative importance, or an indication or an implication of an operation execution sequence.

Moreover, the terms "include", " comprise" and any other variants mean to cover the non-exclusive inclusion, for example, a process, method, system, product, or device that includes a list of steps or units is not necessarily limited to those units, but may include other units not expressly listed or inherent to such a process, method, product, or device.

In embodiments of this application, "transmission" may include the following three cases: data sending, data receiving, or data sending and data receiving. In embodiments of this application, "data" may include service data and/or signaling data.

The technical solutions in embodiments of this application may be applied to various communication systems, such as a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WIMAX) communication system, a 5th generation (5th generation, 5G) system, a new radio (new radio, NR) system, or a future communication system (for example, a 6G communication system or a 7G communication system).

A terminal device in embodiments of this application may also be referred to as user equipment, an access terminal, a subscriber unit, a subscriber station, a mobile station, a mobile, a remote station, a remote terminal, a mobile device, a user terminal, a terminal device, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A network device in embodiments of this application may be a device configured to communicate with a terminal device. The network device may be a base transceiver station (base transceiver station, BTS) in a global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay node, an access point, a vehicle-mounted device, a wearable device, a network device in a future 5G network, a network device in a future evolved PLMN network, or the like. This is not limited in embodiments of this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not particularly limited in embodiments of this application, provided that the execution body can implement the communication method provided in embodiments of this application by running code or a program that records the method provided in embodiments of this application. For example, the execution body of the method provided in embodiments of this application may be a terminal device or a network device, a functional module that can invoke a program and execute the program in the terminal device or the network device, or a chip that can invoke a program and execute the program in the terminal device or the network device.

In addition, aspects or features of this application may be implemented as a method, an apparatus or a product that uses standard programming and/or engineering technologies. The term "product" used in embodiments of this application includes a computer program that can be accessed from any computer-readable component, carrier, or medium. For example, the computer-readable medium may include a magnetic storage component (for example, a hard disk, a floppy disk, or a magnetic tape), an optical disc (for example, a compact disc (compact disc, CD)), a digital versatile disc (digital versatile disc, DVD), a smart card, and a flash memory component (for example, erasable programmable read-only memory (erasable programmable read-only memory, EPROM)). In addition, various storage media described in this specification may indicate one or more devices and/or other computer-readable media that are configured to store information.

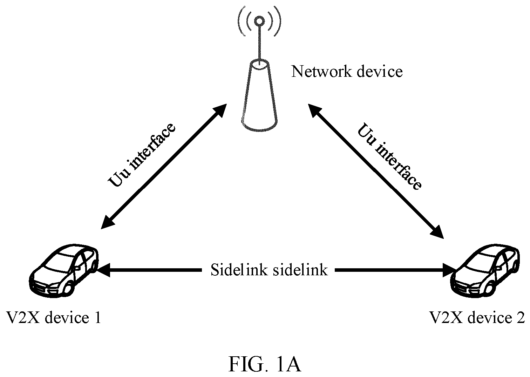

FIG. 1A is a schematic diagram of a system architecture according to an embodiment of this application. In FIG. 1A, in a V2X scenario, a communication link for performing direct wireless communication between a V2X device 1 and a V2X device 2 may be referred to as a sidelink (sidelink, SL). A wireless communication link between the V2X device 1 or the V2X device 2 and a network device may be referred to as an uplink (uplink, UL) or a downlink (downlink, DL). A UL or DL interface may be referred to as a Uu interface, and the UL or the DL may be referred to as a Uu interface link.

It should be noted that FIG. 1A shows an application scenario in which a V2X device communicates with a network device by using a Uu interface. In actual application, embodiments of this application are applicable to a scenario in which a terminal device (for example, a terminal device that has no V2X function, or a V2X device) communicates with a network device by using a Uu interface. This is not specifically limited in this application. FIG. 1A is only an example, and does not impose a limitation on embodiments of this application.

The following describes embodiments of this application in detail with reference to specific examples. It should be noted that the description is merely intended to help a person skilled in the art better understand embodiments of this application, but is not intended to limit the scope of embodiments of this application.

It should be understood that in embodiments of this application, "first", "second", and the like are merely intended to indicate different objects, and are not intended to indicate other limitations on the indicated objects. For example, "first" and "second" in "first preset duration", "second preset duration", "first resource", "second resource", and the like in embodiments of this application may be intended to number corresponding items to distinguish between applicable scenarios or references, and are not limited to specific duration or specific resources.

The following first describes an SL-related resource allocation mode.

An SL transmission resource used by a sending terminal device in two or more terminal devices may be determined in any one of the following manner A and manner B.

Manner A: A network device schedules the SL transmission resource.

A mode in which the network device schedules the SL transmission resource may include a resource configuration mode 1 (mode 1) (a name in NR) or a resource configuration mode 3 (mode 3) (a name in LTE).

The network device schedules the following two types of SL transmission resources:

First type: Configured grant (configured grant, CG) resource.

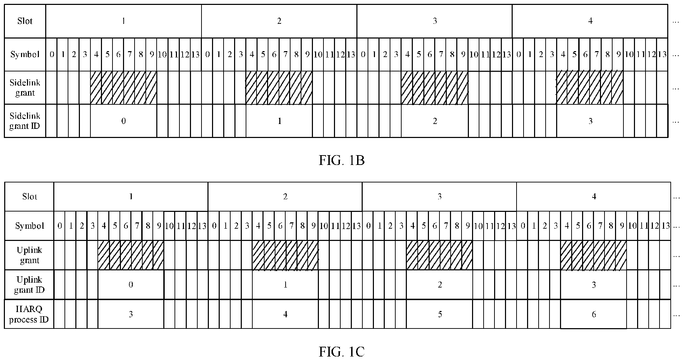

In this case, the network device does not need to separately allocate resources for all times of data transmission of the sending terminal device. After the network device allocates a resource to the sending terminal device for a specific time, the sending terminal device can use the allocated resource in a future period of time. This is characterized by "one-time allocation for multitime use". Specifically, the network device may configure, for the sending terminal device, a time domain resource that periodically appears. For example, referring to FIG. 1B, a time domain resource that appears for the first time in the time domain resource that periodically appears is a symbol 4 to a symbol 9 of a slot 1, and a period is one slot. A time domain resource that appears each time is one SL grant (referred to as a sidelink grant below). It may be understood that, in FIG. 1B, four sidelink grants are shown, and one sidelink grant corresponds to one sidelink grant ID. In this case, sidelink grant IDs corresponding to the four sidelink grants are respectively a sidelink grant 0, a sidelink grant 1, a sidelink grant 2, and a sidelink grant 3.

The CG resource may include a type 1 (type 1) CG (an SL configured grant type-1) resource, a type 2 (type 2) CG (an SL configured grant type-2) resource, a grant free (an SL grant free) resource, and a semi-persistent scheduling (an SL semi-persistent scheduling, SL SPS) resource. The type 1 CG resource may be an SL transmission resource directly configured by the network device for the sending terminal device by using radio resource control (radio resource control, RRC) signaling, and the sending terminal device can directly transmit data by using the CG resource, without additional activation. The type 2 CG resource may be an SL transmission resource, where the network device defines a period of the SL transmission resource by using RRC signaling, and then activates the SL transmission resource by using downlink control information (downlink control information, DCI) in a physical downlink control channel (physical downlink control channel, PDCCH), and the sending terminal device cannot directly transmit data by using the SL transmission resource, and can use the SL transmission resource only after activation. The grant free resource may be an SL transmission resource directly configured by the network device for the sending terminal device by using RRC signaling, and the sending terminal device can directly transmit data by using the SL transmission resource, without additional activation. The semi-persistent scheduling resource may be an SL transmission resource, where the network device defines a period of the SL transmission resource by using RRC signaling, and then activates the SL transmission resource by using DCI in a PDCCH, and the sending terminal device cannot directly transmit data by using the SL transmission resource, and can use the SL transmission resource only after activation.

Currently, for an SL, a plurality of CG resources may be supported on one carrier, and different CG resources may correspond to different indexes. For example, CG resources whose indexes are 1, 2, and 3 may be respectively denoted as a CG 1, a CG 2, and a CG 3.

Type 2: Dynamic grant (dynamic grant, DG) resource.

In this case, the network device needs to separately allocate resources for all times of data transmission of the sending terminal device. This is characterized by "one-time allocation for one-time use". For example, the DG resource may be an SL transmission resource dynamically allocated by the network device to the sending terminal device by using DCI. The DCI may be carried in a PDCCH.

A DG and a CG mainly differ in resource allocation flexibility and resource allocation overheads. For the DG, the network device needs to allocate a grant for each time of data transmission of the sending terminal device. Therefore, resource allocation is flexible, but resource allocation overheads are relatively large. For the CG, the sending terminal device can use, for a plurality of times, one grant allocated by the network device. Therefore, resource allocation overheads are relatively small, but resource allocation is inflexible because an allocated resource is not changed or adjusted for relatively long time. The DG is usually allocated by using a physical channel (for example, a PDCCH), and therefore is relatively rapidly allocated. The CG is usually configured by using higher layer signaling (for example, RRC signaling) or a combination of higher layer signaling (for example, RRC signaling) and a physical channel (for example, a PDCCH), and therefore resource allocation is relatively slow.

Manner B: The sending terminal device determines the SL transmission resource.

A mode in which the sending terminal device determines the SL transmission resource may include a resource configuration mode 2 (mode 2) (a name in NR) or a resource configuration mode 4 (mode 4) (a name in LTE).

In the manner B, the sending terminal device may independently obtain an SL transmission resource from an SL resource pool, to send a control signal and/or a data signal to a receiving terminal device. For example, when the sending terminal device is within a communication coverage area of the network device, the network device may configure an SL resource pool for the sending terminal device by using a system information block (system information block, SIB) message or dedicated RRC signaling, and the sending terminal device may independently obtain the SL transmission resource from the SL resource pool, to send the control signal and/or the data signal to the receiving terminal device. When the sending terminal device is outside the communication coverage area of the network device, the sending terminal device may independently obtain the SL transmission resource from a preconfigured SL resource pool, to send the control signal and/or the data signal to the receiving terminal device.

For example, when obtaining the SL transmission resource from the SL resource pool, the sending terminal device may select, perceive, or contend for the SL transmission resource. Specifically, the sending terminal device obtains an appropriate SL transmission resource from the SL resource pool by contending with another terminal device, to send the control signal and/or the data signal. A sending terminal device having a higher-priority to-be-transmitted V2X service or higher-priority to-be-transmitted V2X data has a greater opportunity to obtain an appropriate SL transmission resource from the SL resource pool through contention.

In LTE V2X, the mode 3 and the mode 4 cannot coexist. In NR V2X, the mode 1 and mode 2 can coexist.

To help a reader understand the solutions in embodiments of this application, the following describes some technical terms in this application.

1. A sidelink is a wireless direct communication link between a first terminal device and a second terminal device. Data transmitted between terminal devices may be referred to as SL data.

2. A resource of a sidelink includes a mode 1 resource of the sidelink and/or a mode 2 resource of the sidelink.

3. A mode 1 resource of a sidelink is a resource that is of the sidelink and that is scheduled by a network device for a terminal device, including a configured grant resource of the sidelink and/or a dynamic grant resource of the sidelink; and may include a resource configured by using the foregoing resource configuration mode 1 or a resource configured by using the foregoing resource configuration mode 3.

4. A mode 2 resource of a sidelink is a resource that is of the sidelink and that is selected, contended for, or sensed, and/or reserved by a terminal device; and may include a resource configured by using the foregoing resource configuration mode 2 or a resource configured by using the foregoing resource configuration mode 4.

5. A configured grant resource of a sidelink includes a type 1 configured grant resource of the sidelink and/or a type 2 configured grant resource of the sidelink. In this case, a network device does not need to separately allocate resources for all times of data transmission of a sending terminal device. After the network device allocates a resource to the sending terminal device for a specific time, the sending terminal device can use the allocated resource in a future period of time. This is characterized by "one-time allocation for multi-time use".

6. A type 1 configured grant resource of a sidelink is a sidelink configured grant directly configured by a network device for a terminal device by using RRC signaling, and the terminal device can directly transmit data by using the configured grant resource, without additional activation (for example, the configured grant resource is activated by using a PDCCH or DCI). For example, the configured grant resource is a type 1 configured grant (an SL configured grant type-1) resource or a grant free (an SL grant free) resource.

7. Type 2 configured grant resource of a sidelink: A network device defines a period of the configured grant by using RRC signaling, and then activates the configured grant by using a PDCCH or DCI, and a terminal device cannot directly transmit data by using the configured grant resource, and can use the configured grant resource only after activation. For example, the configured grant resource is a type 2 configured grant (an SL configured grant type-2) resource or a semi-persistent scheduling (an SL semi-persistent scheduling, SL SPS) resource.

8. A dynamic grant resource of a sidelink is a sidelink transmission resource dynamically allocated by a network device to a terminal device by using DCI or a PDCCH. The DCI may be carried in the PDCCH. The network device needs to separately allocate resources for all times of data transmission of the terminal device. This is characterized by "one-time allocation for one-time use".

9. Configured grant resource set of a sidelink: The configured grant resource set includes a configured grant resource corresponding to one or more configured grant resource indexes; and is, for example, a resource set including a configured grant 1, a configured grant 2, and a configured grant 3.

It should be noted that different configured grant resource sets are different types of resources. For example, a configured grant resource set 1 is a type of resource, and a configured grant resource set 2 is another type of resource.

10. An uplink is an uplink communication link between a first terminal device and a network device.

11. A resource of an uplink includes a configured grant resource of the uplink and/or a dynamic grant resource of the uplink.

12. A configured grant resource of an uplink includes a type 1 configured grant resource of the uplink and/or a type 2 configured grant resource of the uplink. In this case, a network device does not need to separately allocate resources for all times of data transmission of a sending terminal device. After the network device allocates a resource to the sending terminal device for a specific time, the sending terminal device can use the allocated resource in a future period of time. This is characterized by "one-time allocation for multi-time use".

13. A type 1 configured grant resource of an uplink is an uplink configured grant directly configured by a network device for a terminal device by using RRC signaling, and the terminal device can directly transmit data by using the configured grant resource, without additional activation (for example, the configured grant resource is activated by using a PDCCH or DCI). For example, the configured grant resource is a type 1 configured grant (configured grant type-1) resource or a grant free (grant free) resource.

14. Type 2 configured grant resource of an uplink: A network device defines a period of the configured grant by using RRC signaling, and then activates the configured grant by using a PDCCH or DCI, and a terminal device cannot directly transmit data by using the configured grant resource, and can use the configured grant resource only after activation. For example, the configured grant resource is a type 2 configured grant (configured grant type-2) resource or a semi-persistent scheduling (Semi-Persistent Scheduling, SPS) resource.

15. A dynamic grant resource of an uplink is an uplink transmission resource dynamically allocated by a network device to a terminal device by using DCI or a PDCCH. The DCI may be carried in the PDCCH. The network device needs to separately allocate resources for all times of data transmission of the terminal device. This is characterized by "one-time allocation for one-time use".

16. A downlink is a downlink communication link between a first terminal device and a network device.

17. A resource of a downlink includes a semi-persistent allocation resource of the downlink and/or a dynamic allocation resource of the downlink.

18. Semi-persistent allocation resource of a downlink: A network device defines a period of the resource of the downlink by using RRC signaling, and then activates the resource of the downlink by using a PDCCH or DCI, and a terminal device cannot directly receive data by using the resource, and can use the resource after activation. For example, the resource is a type 2 configured grant (configured grant type-2) resource or a semi-persistent scheduling (Semi-Persistent Scheduling, SPS) resource. In this case, the network device does not need to separately allocate resources for all times of data receiving of the terminal device. After the network device allocates a resource to the terminal device for a specific time, the terminal device can use the allocated resource in a future period of time. This is characterized by "one-time allocation for multi-time use".

19. A dynamic allocation resource of a downlink is a resource that is of the downlink and that is dynamically allocated by a network device to a terminal device by using downlink control information (downlink control information, DCI) or a PDCCH. The DCI may be carried in the physical downlink control channel. The network device needs to separately allocate resources for all times of data receiving of the terminal device. This is characterized by "one-time allocation for one-time use".

20. Second terminal device: In this specification, the second terminal device is a general terminal device, and may be any one or more terminal devices other than a first terminal device. For example, the second terminal device includes a third terminal device and a fourth terminal device.

21. Resource overlapping indicates that two or more resources completely overlap and/or partially overlap in time domain.

22. Contend includes has contended and/or to contend.

23. For example, data in embodiments of this application may be understood as a transport block (transport block, TB) or a medium access control protocol data unit (medium access control protocol data unit, MAC PDU). The data may also be referred to as a data packet or a packet.

24. Resource preemption includes preemption between two or more resources. For example, that a second sidelink grant preempts a first sidelink grant may specifically include the following scenario 1.1 and scenario 1.2.

Scenario 1.1: A first HARQ process ID associated with the first sidelink grant is the same as a second HARQ process ID associated with the second sidelink grant.

For example, the first HARQ process ID is a HARQ process ID that is associated with the first sidelink grant and that is calculated by a terminal device by using a preset algorithm (for example, a formula specified in a protocol) or a HARQ process ID that is associated with the first sidelink grant and that is indicated by a network device for the terminal device. Alternatively, the first HARQ process ID may be a HARQ process ID determined by the terminal device for the first sidelink grant. The second HARQ process ID is a HARQ process ID that is associated with the second sidelink grant and that is calculated by the terminal device by using a preset algorithm (for example, a formula specified in a protocol) or a HARQ process ID that is associated with the second sidelink grant and that is indicated by the network device for the terminal device. Alternatively, the second HARQ process ID may be a HARQ process identifier determined by the terminal device for the second sidelink grant.

In the scenario 1.1, optionally, if the terminal device receives information for configuring the second sidelink grant and the second HARQ process ID associated with the second sidelink grant is the same as the first HARQ process ID associated with the first sidelink grant, the terminal device may consider that the second sidelink grant preempts the first sidelink grant.

Optionally, the second sidelink grant is a DG resource, and the first sidelink grant is a CG resource.

Optionally, when a first terminal device receives the second sidelink grant, the first sidelink grant has not been used yet.

Optionally, when the first terminal device receives the second sidelink grant, a HARQ process associated with the first sidelink grant is still occupied.

Optionally, before the first terminal device receives the second sidelink grant, the first terminal device has obtained the first sidelink grant, and the first sidelink grant is associated with the first HARQ process ID.

Optionally, the first terminal device receives the second sidelink grant, and a HARQ process ID associated with the second sidelink grant is a HARQ process ID associated with the first sidelink grant. It may be understood that the first terminal device receives the second sidelink grant, and an identified HARQ process is configured for the first sidelink grant. Alternatively, it may be understood that the first sidelink grant is a previous sidelink grant associated with a same HARQ process ID, the first HARQ process ID, or the second HARQ process ID.

Scenario 1.2: The first sidelink grant overlaps (overlap) the second sidelink grant in time domain.

Overlap herein may be partial overlap or complete overlap.

In the scenario 1.2, optionally, if a terminal device receives information for configuring the second sidelink grant, and the second sidelink grant overlaps the first sidelink grant in time domain, the terminal device may consider that the second sidelink grant preempts the first sidelink grant or the first sidelink grant preempts the second sidelink grant.

Optionally, the second sidelink grant is a DG resource, and the first sidelink grant is a CG resource.

Optionally, in the scenario 1.1 and the scenario 1.2, the terminal device receives, on a PDCCH, the information for configuring the second sidelink grant, and DCI in the PDCCH is scrambled by using a radio network temporary identity (radio network tempory identity, RNTI).

25. A HARQ process is occupied: Optionally, in embodiments of this application, that a HARQ process is occupied includes any one or more of the following cases:

(1) Data transmission associated with the HARQ process has not been completed or has not ended yet. For example, in a scenario, when no HARQ feedback is performed, a quantity of times a first terminal sends data to another terminal device by using the HARQ process does not reach a quantity of blind retransmission or repetition (repetition) times.

(2) A first terminal device does not receive feedback for the HARQ process. For example, the first terminal device does not completely receive the feedback for the HARQ process. For example, in a scenario, the first terminal device sends data to another terminal device by using the HARQ process, and the first terminal device still waits to receive feedback from the another terminal device, or the first terminal device does not receive feedback information on an occasion on which the another terminal device performs feedback.

(3) A first terminal device receives a NACK for the HARQ process. For example, the first terminal device does not completely receive an ACK for the HARQ process. For example, in a scenario, the first terminal device sends data to another terminal device by using the HARQ process, and the first terminal device receives a NACK from the another terminal device.

(4) A first terminal device does not receive an ACK for the HARQ process. For example, in a scenario, the first terminal device sends data to another terminal device by using the HARQ process, and the first terminal device does not receive an ACK from the another terminal device. The first terminal device may receive a NACK, or may not receive any feedback information.

(5) A first terminal device does not feed back an ACK for the HARQ process to a network device.

(6) Data transmission associated with the HARQ process does not reach maximum transmission time, a maximum quantity of transmission times, or a maximum quantity of retransmission times.

(7) A first terminal device does not release the HARQ process.

(8) A first terminal device does not flush a HARQ buffer corresponding to the HARQ process.

(9) A first terminal device stores or does not release a correspondence associated with the HARQ process.

For example, a correspondence associated with a HARQ process is a correspondence between a sidelink grant associated with the HARQ process and a HARQ process ID that is associated with the HARQ process and that is determined by a first terminal device, a correspondence between a HARQ process ID that is associated with the HARQ process and that is determined by a first terminal device and a HARQ process ID that is associated with the HARQ process and that is determined by the first terminal device according to a preset algorithm (or indicated by a network device to the first terminal device), or a correspondence between a sidelink grant associated with the HARQ process, a HARQ process ID that is associated with the HARQ process and that is determined by a first terminal device, and a HARQ process ID that is associated with the HARQ process and that is determined by the first terminal device according to a preset algorithm (or indicated by a network device to the first terminal device).

26. HARQ: HARQ is a technology that combines forward error correction (or forward error correction code) (forward error correction, FEC) and an automatic repeat request (automatic repeat request, ARQ) method.

The following specifically describes content related to HARQ by using three parts: (a) to (c).

(a) Determining mechanism of a HARQ process ID in uplink transmission.

For a UL, one carrier supports one CG resource. One CG resource supports a maximum of 16 HARQ processes. For a CG resource, a HARQ process ID associated with each uplink grant in the CG resource may be calculated by using a formula specified in a protocol (for details, refer to section 5.4.1 in 3GPP TS 38.321: "NR; Medium Access Control (MAC); Protocol specification") (the formula is referred to as a preset algorithm 1), where a maximum range of the HARQ process ID is 0 to 15. Both a terminal device and a network device can calculate, according to the preset algorithm 1, the HARQ process ID corresponding to each uplink grant. For a DG resource, a network device may indicate, in DCI to a terminal device, a HARQ process ID associated with each uplink grant.

For example, when a subcarrier spacing (subcarrier spacing, SCS) is 15 KHZ, for one UL CG resource, a start system frame number (system frame number, SFN) is 5, a start slot is a slot 1, and a start symbol is a symbol 4; one uplink grant occupies six symbols; a period is one slot; a quantity of available HARQ processes of the CG resource is 16; and a HARQ process ID associated with each uplink grant may be obtained through calculation according to the preset algorithm 1. For details, refer to FIG. 1C.

(b) Determining mechanism of a HARQ process ID in SL transmission.

For an SL, a plurality of CG resources coexist on one carrier. In this case, a HARQ process ID associated with each sidelink grant may be calculated in the following first manner, second manner, or third manner (in the following content, any HARQ process is an SL HARQ process, and any HARQ process ID is an SL HARQ process ID).

First manner: A first terminal device determines, according to a preset algorithm or according to a calculation manner indicated by a network device, the HARQ process ID associated with the sidelink grant.

(1) For each CG resource, a HARQ process ID associated with each sidelink grant in the CG resource may be calculated by using a formula similar to the preset algorithm 1.

When the HARQ process ID associated with each sidelink grant is determined by using the manner C, HARQ process IDs associated with sidelink grants in different CG resources may overlap.

(2) HARQ process IDs associated with sidelink grants in different CG resources are calculated by using a preset algorithm 2. The preset algorithm 2 may be obtained by adding an offset (offset) to the preset algorithm 1, and the network device may configure a quantity of available HARQ processes and an offset of each CG resource, so that the sidelink grants in the different CG resources are associated with different HARQ process IDs. For example, if a quantity of available HARQ processes of a CG 1 is 4, and an offset 1=0; and a quantity of available HARQ processes of a CG 2 is 8, and an offset 2=4, available HARQ process IDs of the CG 1 are 0 to 3, and available HARQ process IDs of the CG 2 are 4 to 11. In this way, the HARQ process IDs of the CG 1 and the CG 2 are distinguished from each other.

Second manner: A network device indicates, to a first terminal device, the HARQ process ID associated with the sidelink grant.

A HARQ process ID associated with each sidelink grant in a mode 1 resource of the SL may be indicated by the network device to the terminal device.

Optionally, for a DG resource, the network device may determine a HARQ process ID, and indicate the HARQ process ID to the terminal device by using DCI. The HARQ process ID may overlap a HARQ process ID associated with another sidelink grant.

Third manner: A terminal device determines the HARQ process ID associated with the sidelink grant.

Optionally, a HARQ process ID associated with each sidelink grant in a mode 1 resource of the SL and/or a mode 2 resource of the SL may be determined by the terminal device.

For example, for one sidelink grant, a first terminal device determines an identifier of one unoccupied HARQ process as a HARQ process ID associated with the sidelink grant.

For example, for one sidelink grant, if the sidelink grant is used for retransmission, the first terminal device determines, as a HARQ process ID associated with the sidelink grant, a HARQ process ID corresponding to initial transmission or previous transmission corresponding to the sidelink grant.

For example, for a sidelink grant 1, if preemption occurs between the sidelink grant 1 and a sidelink grant 2, and the sidelink grant 1 preempts the sidelink grant 2, the first terminal device determines, as a HARQ process ID associated with the sidelink grant 1, a HARQ process ID associated with the sidelink grant 2.

(c) HARQ feedback.

Two HARQ feedback manners are supported.

This is described by using a manner F and a manner G.

Manner F: HARQ feedback is performed in a NACK only manner. After a transmit end sends data to a receive end, if the receive end correctly receives the data, the receive end performs no feedback; or if the receive end fails to receive the data, the receive end feeds back a NACK to the transmit end.

Manner G: HARQ feedback is performed in an ACK/a NACK manner. After a transmit end sends data to a receive end, if the receive end correctly receives the data, the receive end feeds back an ACK to the transmit end; or if the receive end fails to receive the data, the receive end feeds back a NACK to the transmit end.

27. ACK or NACK: The ACK in embodiments of this application is only an English abbreviation of acknowledgement. The ACK may be HARQ feedback in the conventional technology. The ACK may be information indicated by 1 bit (bit), where a value of the bit is 0 or 1, indicating an ACK. Alternatively, the ACK may be an indication message, where the indication message indicates that transmission succeeds; and may be information that occupies a plurality of bits, or may exist or be carried in indication information in another form. The NACK in embodiments of this application is only an English abbreviation of negative acknowledgement. The NACK may be HARQ feedback in the conventional technology. The NACK may be information indicated by 1 bit (bit), where a value of the bit is 0 or 1, indicating a NACK. Alternatively, the NACK may be an indication message, where the indication message indicates that transmission fails; and may be information that occupies a plurality of bits, or may exist or be carried in indication information in another form.

28. In embodiments of this application, "indicating, to a network device, that a terminal device fails to transmit data on a resource or in a HARQ process identified by a HARQ process ID" may be understood as "requesting a retransmission resource from the network device", and the two descriptions may be interchanged in this specification.

29. In embodiments of this application, a terminal device is used as an example to describe a specific implementation process of the terminal device. In actual application, embodiments of this application may be performed by any one or several of a MAC entity, a sidelink MAC entity, a HARQ entity, a sidelink HARQ entity, a HARQ process, a sidelink process, or a sidelink HARQ process of the terminal device.

30. In embodiments of this application, that a terminal device receives feedback for transmission on an SL may include any one or more of the following:

(1) A PHY layer of the terminal device receives feedback about transmission on the SL from another terminal device.
(2) Any one or more of a MAC layer, a MAC entity, and a sidelink MAC entity receive feedback from a physical layer.

Optionally, when HARQ feedback is performed in a NACK only manner, and for sidelink data or a HARQ process, the terminal device does not receive a NACK, the PHY layer sends an ACK to any one or more of the MAC layer, the MAC entity, and the sidelink MAC entity. For example, this is for a groupcast case.

Optionally, when HARQ feedback is performed in a NACK only manner, and for sidelink data or a HARQ process, the terminal device does not receive a NACK, the PHY layer does not send feedback to any one or more of the MAC layer, the MAC entity, and the sidelink MAC entity. For example, this is for a groupcast case.

Optionally, when HARQ feedback is performed in an ACK/a NACK manner, and for sidelink data or a HARQ process, the terminal device receives an ACK, the terminal device receives all expected ACKs, the terminal device receives only an ACK, or the terminal device receives an ACK and does not receive a NACK, the PHY layer sends an ACK to any one or more of the MAC layer, the MAC entity, and the sidelink MAC entity. For example, this is for a unicast or groupcast case.

Optionally, "the terminal device does not receive" may be understood as "the terminal device does not receive on a corresponding PSFCH resource".

Optionally, "the terminal device receives" may be understood as "the terminal device receives on a corresponding PSFCH resource".

(3) Any one or more of a MAC layer, a MAC entity, and a sidelink MAC entity send feedback to any one or more of a HARQ entity, a sidelink HARQ entity, a sidelink process, a HARQ process, and a sidelink HARQ process.

(4) A HARQ entity and/or a sidelink HARQ entity send/sends feedback to any one or more of a sidelink process, a HARQ process, and a sidelink HARQ process.

31. A generation manner of acknowledgement information in this specification includes the following three possible implementations:

Manner 1: A physical layer PHY layer of a first terminal device generates the acknowledgement information according to an instruction (for example, instruction information) of the first terminal device. Specifically, a MAC layer of the first terminal device instructs the PHY layer (instruct physical layer) of the first terminal device to generate the acknowledgement information. Optionally, the MAC layer of the first terminal device may be a MAC entity, a HARQ entity, a HARQ process, a sidelink process, a sidelink MAC entity, a sidelink HARQ entity, or a sidelink HARQ process of the first terminal device.

Manner 2: A MAC layer of a first terminal device generates the acknowledgement information, and then the MAC layer of the first terminal device sends the acknowledgement information to a PHY layer of the first terminal device. Optionally, the MAC layer of the first terminal device may be a MAC entity, a HARQ entity, a HARQ process, a sidelink process, a sidelink MAC entity, a sidelink HARQ entity, or a sidelink HARQ process of the first terminal device.

Manner 3: A PHY layer of a first terminal device directly generates the acknowledgement information.

32. HARQ process ID associated with/corresponding to a resource or a grant, or resource associated with/corresponding to a HARQ process ID, HARQ process associated with/corresponding to a resource or a grant, or resource associated with/corresponding to a HARQ process: The resource may be used in the HARQ process identified by the HARQ process ID, to send data in the HARQ process.

33. A PUCCH associated with/corresponding to a resource or a grant indicates that the PUCCH may be used to feed back a case in which data transmission on the resource succeeds or fails.

34. Various set values in this application, such as "threshold" and "duration", may be preconfigured by a network device for a terminal device; specified in a communication protocol; determined by a network device according to a specific rule, where the network device notifies a terminal device of the values; or stored in a terminal device at delivery of the terminal device. This is not specifically limited in this application.

35. HARQ process identified/corresponding to/associated with a HARQ process ID: An identifier of the HARQ process may include an identifier of the HARQ process ID. It should be understood that the identifier of the HARQ process may further include another identifier. For example, an identifier of a HARQ process on a sidelink may include a source ID (for example, a layer-1 source ID (Layer-1 source ID)), a destination ID (for example, a layer-1 destination ID (Layer-1 destination ID)), and a communication type (for example, a cast type) indicator. For another example, an identifier of a HARQ process on a Uu interface link between a terminal device and a network device includes a HARQ process ID, and the HARQ process ID uniquely identifies the HARQ process. A same sidelink HARQ process ID may identify a plurality of sidelink HARQ processes at different moments. One HARQ ID may be used to identify a maximum of one HARQ process at one moment. In this application, "releasing a HARQ process" may be interchanged with "discarding data of a HARQ process", "flushing a HARQ buffer corresponding to a HARQ process", or "deleting a correspondence related to a HARQ process".

36. Acknowledgement information associated with a HARQ process: The acknowledgement information is used to feed back a case in which data transmission in the HARQ process succeeds or fails.

37. Physical sidelink feedback channel (physical sidelink feedback channel, PSFCH) resource associated with/corresponding to a resource or a grant: A receiving terminal device feeds back, to a sending terminal device by using the PSFCH, a case in which transmission on the resource/the grant succeeds or fails.

38. That a first terminal device does not obtain, within preset duration used after/when a condition is met, a resource used for retransmission in a HARQ process may be understood as follows: The preset duration is started or restarted when the condition is met; and the first terminal device does not obtain, within the preset duration, a resource used for retransmission in the HARQ process; or may be understood as follows: The first terminal device does not obtain, within the preset duration started or restarted after the condition is met, a resource used for retransmission in the HARQ process.

Currently, a terminal device is supported in reporting an SL HARQ ACK and/or NACK to a network device. The SL HARQ ACK and/or NACK may be used to report a transmission status on an SL to the network device. For example, when the terminal device successfully performs transmission on the SL, the terminal device reports an ACK to the network device. The ACK is used to notify the network device that the terminal device successfully performs transmission on the SL. For example, when the terminal device fails to perform transmission on the SL, the terminal device reports a NACK to the network device. The NACK is used to notify the network device that the terminal device fails to perform transmission on the SL. and may be used to request a retransmission resource from the network device.

For a resource of a sidelink, when a network device does not receive feedback from a terminal device, the network device does not determine whether the terminal device performs transmission by using the resource of the sidelink. Therefore, the network device cannot determine whether the terminal device does not give feedback to the network device because the terminal device does not perform transmission by using the resource of the sidelink, the terminal device gives feedback to the network device but the network device does not receive the feedback, or the terminal device cannot successfully send feedback due to a conflict with other transmission when the terminal device sends the feedback to the network device. Therefore, when the network device does not receive feedback from the terminal device, the network device may have the following two possible understandings and/or possible actions:

> First case: When the network device considers that the terminal device fails to perform transmission on the resource of the sidelink, that is, when the network device does not receive feedback from the terminal device (for example, in a DTX state, Discontinuous Transmission state), the network device considers that the network device receives a negative acknowledgement; and/or for the resource of the sidelink, the network device can schedule a retransmission resource for the terminal device.
> For example, for the resource of the sidelink, when the terminal device does not transmit data by using the resource that is of the sidelink and that is scheduled by the network device, the terminal device does not give feedback to the network device. The network device considers that the terminal device fails to perform transmission on the resource of the sidelink, that is, considers that the network device receives a negative acknowledgement; and/or for the resource of the sidelink, the network device can schedule a retransmission resource for the terminal device. In this case, a waste of resources may be caused.
Second case: When the network device considers that the terminal device successfully performs transmission on the resource of the sidelink, that is, when the network device does not receive feedback from the terminal device (for example, in a DTX state, Discontinuous Transmission state), the network device considers that the network device receives an acknowledgement; and/or for the resource of the sidelink, the network device does not schedule a retransmission resource for the terminal device.

For example, for the resource of the sidelink, when the terminal device performs transmission on the sidelink by using the resource that is of the sidelink and that is scheduled by the network device, but the transmission fails, the terminal device feeds back a NACK to the network device, but the terminal device cannot successfully send the feedback due to a conflict with other transmission, and therefore the base station does not receive the feedback; or the terminal device feeds back a negative acknowledgement to the network device, but the network device cannot receive the feedback. The network device considers that the terminal device successfully performs transmission on the resource of the sidelink, that is, considers that the network device receives an acknowledgement, and/or for the resource of the sidelink, the network device does not schedule a retransmission resource for the terminal device. In this case, the terminal device cannot obtain a retransmission resource from the network device.

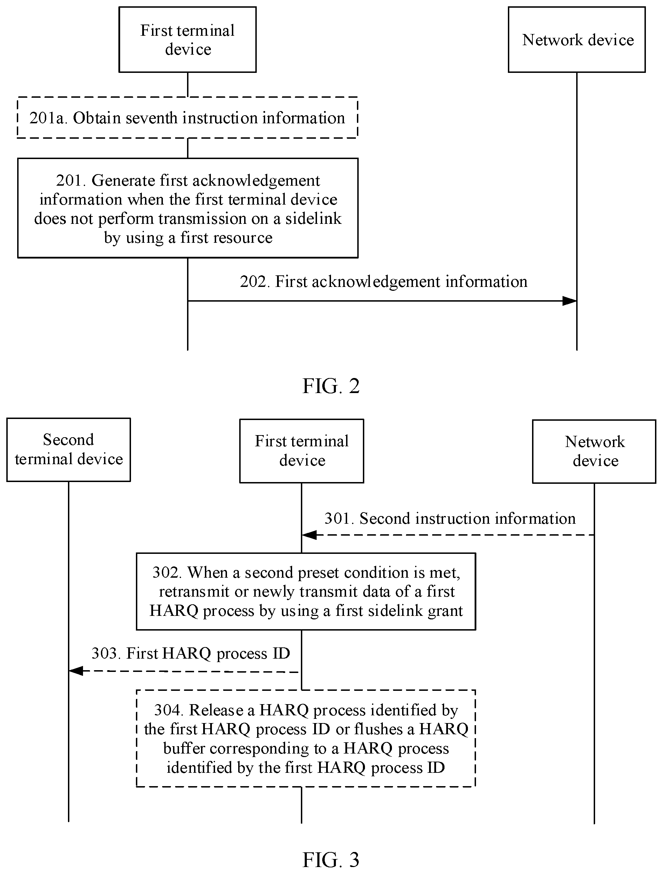

For the first case, in the technical solutions of embodiments of this application, a first terminal device obtains a first resource; and the first terminal device generates first acknowledgement information when the first terminal device does not perform transmission on a sidelink by using the first resource and/or a first preset condition is met, and sends the first acknowledgement information to a network device. When receiving the first acknowledgement information, the network device considers that the first terminal device successfully performs transmission on the sidelink by using the first resource, the first terminal device does not perform transmission on the first resource, the first terminal device does not request a retransmission resource from the network device, the first terminal device successfully performs sidelink transmission in a fifth HARQ process, or the first terminal device does not request a retransmission resource from the network device for any one or more of the first resource, a fifth HARQ process ID, and a fifth HARQ process. In this case, the network device does not allocate a retransmission resource to the first terminal device, avoiding a waste of resources. The implementation is specifically described by using an embodiment shown in FIG. 2.

For the second case, embodiments of this application provide a plurality of solutions. The following uses examples for description:

Solution 1: A first terminal device receives second instruction information from a network device, where the second instruction information is used to instruct to retransmit or newly transmit data of a sidelink by using a type 1 resource when a second preset condition is met, and the type 1 resource includes a resource scheduled by the network device for the first terminal device and/or a resource selected, contended for, or sensed by the first terminal device; and the first terminal device retransmits or newly transmits data of a first HARQ process by using a first sidelink grant when the second preset condition is met, where the type 1 resource includes the first sidelink grant, and the second preset condition includes any one or several of the following: The first terminal device does not obtain, within first preset duration, a resource used for retransmission in the first HARQ process; the first terminal device does not obtain, when a first timer expires, a resource used for retransmission in the first HARQ process; before, on, or after a resource associated with a first HARQ process ID of the first HARQ process, the first terminal device does not obtain a resource used for retransmission in the first HARQ process; for any one or more of the first HARQ process, a first HARQ process ID, a second sidelink grant, the data transmitted in the first HARQ process, and data transmitted on the second sidelink grant, a quantity of times the first terminal device sends a NACK to the network device does not reach a first preset threshold; transmission in the first HARQ process fails; or transmission on a second sidelink grant fails. Therefore, the first terminal device retransmits or newly transmits the data of the first HARQ process. The implementation is specifically described by using an embodiment shown in FIG. 3.

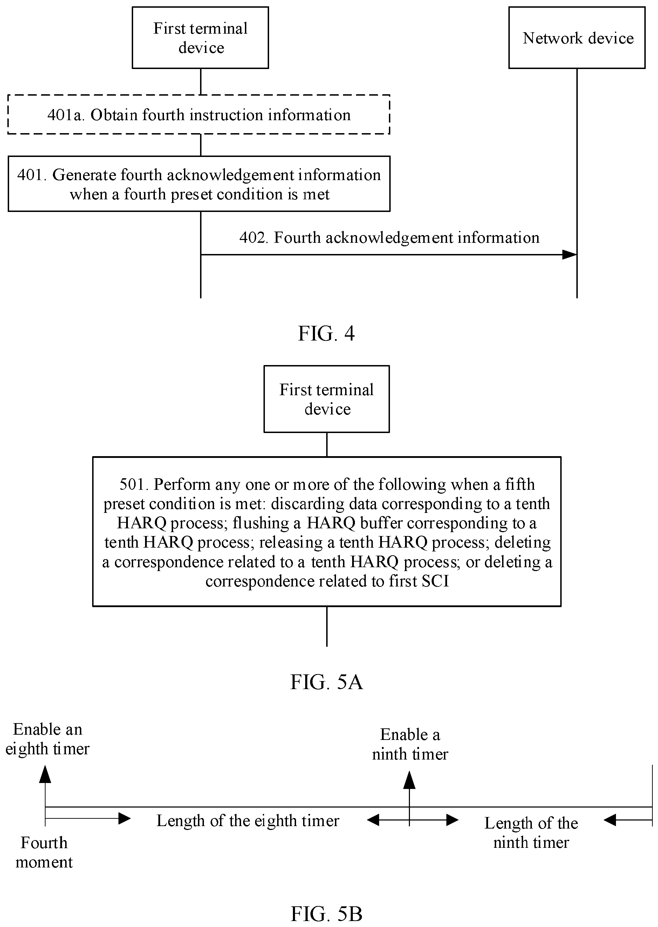

Solution 2: A first terminal device generates fourth acknowledgement information when a fourth preset condition is met; and then, the first terminal device sends the fourth acknowledgement information to a network device, where the fourth preset condition includes any one or several of the following: The first terminal device does not obtain, within third preset duration, a resource used for retransmission in a seventh HARQ process; the first terminal device does not obtain, when a third timer expires, a resource used for retransmission in a seventh HARQ process; before, on, or after a resource associated with a same HARQ process ID as a seventh HARQ process, the first terminal device does not obtain a resource used for retransmission in the seventh HARQ process; for any one or more of a seventh HARQ process, a seventh HARQ process ID, a sixth sidelink grant, data transmitted in the seventh HARQ process, and data transmitted on the sixth sidelink grant, a quantity of times the first terminal device sends a negative acknowledgement to the network device does not reach a third preset threshold; transmission in a seventh HARQ process fails; or transmission on a sixth sidelink grant fails. In this way, an opportunity in which the first terminal device feeds back a transmission status of a sidelink to the network device (for example, feeds back a NACK to a base station) is added, so that the network device can allocate a retransmission resource for the seventh HARQ process based on the received fourth acknowledgement information, to implement retransmission of the data of the seventh HARQ process. The implementation is specifically described by using an embodiment shown in FIG. 4.

Solution 3: A first terminal device performs any one or several of the following when a fifth preset condition is met: (1) discarding data corresponding to a tenth HARQ process; (2) flushing a HARQ buffer corresponding to a tenth HARQ process; (3) releasing a tenth HARQ process; (4) deleting a correspondence related to a tenth HARQ process; or (5) deleting a correspondence related to first SCI, to prevent the tenth HARQ process from being meaninglessly occupied, thereby improving a data transmission capability of the first terminal device. The implementation is specifically described by using an embodiment shown in FIG. 5A.

FIG. 2 is a schematic diagram of a communication processing method according to an embodiment of this application. The method includes the following steps.

201. A first terminal device generates first acknowledgement information when the first terminal device does not perform transmission on a sidelink by using a first resource.

Optionally, when the first terminal device does not perform transmission on the sidelink by using the first resource, the first terminal device generates first acknowledgement information corresponding to any one or more of the first resource, a fifth HARQ process, a fifth HARQ process ID, and a first PUCCH resource.

The first resource is associated with the fifth HARQ process ID.

A HARQ process corresponding to the fifth HARQ process ID may be referred to as the fifth HARQ process.

The first resource is associated with the first PUCCH resource.

Optionally, the fifth HARQ process ID is a HARQ process ID determined by the first terminal device for the first resource according to a preset algorithm or a calculation manner indicated by a network device; or is a HARQ process ID that is associated with the first resource and that is indicated by a network device for the first terminal device.

Optionally, that the first terminal device does not perform transmission on a sidelink by using a first resource may be understood as follows: The first terminal device flushes a HARQ buffer corresponding to a HARQ process associated with the first resource and/or the first terminal device ignores the first resource. Alternatively, that the first terminal device does not perform transmission on a sidelink by using a first resource may be understood as follows: The first terminal device does not perform transmission on the sidelink by using the first resource on a transmission occasion of a physical sidelink shared channel (physical sidelink shared channel, PSSCH) on which the first resource is located. Optionally, that the first terminal device does not perform transmission on a sidelink by using a first resource may be understood as follows: The first terminal device does not use the first resource, where the first resource is a resource of the sidelink.

Optionally, the first acknowledgement information may be an ACK.

The first resource is a resource scheduled by the network device for the first terminal device.

Optionally, the first resource includes any one or more of the following:

(1) a resource of the sidelink;
(2) a mode 1 resource of the sidelink;
(3) a configured grant resource of the sidelink;
(4) a type 1 configured grant resource of the sidelink;
(5) a type 2 configured grant resource of the sidelink;
(6) a dynamic grant resource of the sidelink; or
(7) a configured grant resource set of the sidelink, where the configured grant resource set includes a configured grant resource corresponding to one or more configured grant resource indexes.

Specifically, the first terminal device obtains the first resource; and the first terminal device generates the first acknowledgement information when the first terminal device does not perform transmission on the sidelink by using the first resource. Alternatively, the first terminal device obtains the first resource; and when the first terminal device does not perform transmission on the sidelink by using the first resource, the first terminal device generates first acknowledgement information corresponding to the first resource.

For example, if the first acknowledgement information corresponding to the first resource is an ACK corresponding to the first resource, when receiving the ACK, the network device considers that the first terminal device successfully performs transmission on the sidelink by using the first resource, the first terminal device does not perform transmission on the first resource, the first terminal device does not request a retransmission resource from the network device, the first terminal device successfully performs sidelink transmission in the fifth HARQ process, or the first terminal device does not request a retransmission resource from the network device for any one or more of the first resource, the fifth HARQ process ID, and the fifth HARQ process. In this case, the network device does not allocate a retransmission resource for the first terminal device. Optionally, that the first terminal device does not request a retransmission resource from the network device may be understood as follows: For the first resource, the first terminal device does not request a retransmission resource from the network device.

That the first terminal device does not perform transmission on a sidelink by using a first resource includes any one or more of the following cases:

a. Transmission of data in the fifth HARQ process succeeds, ends, or is completed, the first terminal device further receives the first resource scheduled by the network device, and the first resource is a retransmission resource allocated by the network device and the first resource is associated with the fifth HARQ process ID.

A HARQ process corresponding to the fifth HARQ process ID may be referred to as the fifth HARQ process.

Optionally, transmission of the data in the fifth HARQ process of the first terminal device succeeds, ends, or is completed, the first terminal device further receives the first resource scheduled by the network device, and the first resource is a retransmission resource allocated by the network device and the first resource is associated with the fifth HARQ process ID.

Optionally, that the first resource is a retransmission resource allocated by the network device and the first resource is associated with the fifth HARQ process ID may be understood as follows: The first resource is a retransmission resource allocated by the network device for the fifth HARQ process.

Optionally, the fifth HARQ process ID is a HARQ process ID determined by the first terminal device for the first resource according to a preset algorithm or a calculation manner indicated by the network device; or is a HARQ process ID that is associated with the first resource and that is indicated by the network device for the first terminal device.

For this possible case, the network device allocates a retransmission resource for the fifth HARQ process in the following possible cases. The following uses examples for description:

1. The first terminal device sends an ACK to the network device when the first terminal device successfully transmits the data in the fifth HARQ process, but the network device does not receive the ACK.

2. The first terminal device sends an ACK to the network device when the first terminal device successfully transmits the data in the fifth HARQ process, but the first terminal device does not successfully send the ACK because transmission in which the first terminal device sends the ACK to the network device conflicts with other transmission.

3. The first terminal device no longer transmits the data in the fifth HARQ process when the first terminal device ends or completes transmission in the fifth HARQ process (for example, a maximum quantity of transmission times or a maximum quantity of retransmission times is reached, or maximum transmission time is reached).

b. The HARQ buffer corresponding to the fifth HARQ process is empty.

The first resource is associated with the fifth HARQ process ID.

A HARQ process corresponding to the fifth HARQ process ID may be referred to as the fifth HARQ process.

Optionally, the HARQ buffer corresponding to the fifth HARQ process of the terminal device is empty.

Optionally, the HARQ buffer corresponding to the HARQ process associated with the first resource is empty.

Optionally, the HARQ buffer corresponding to the HARQ process corresponding to the fifth HARQ process ID associated with the first resource is empty.

Optionally, the fifth HARQ process ID is a HARQ process ID determined by the first terminal device for the first resource according to a preset algorithm or a calculation manner indicated by the network device; or is a HARQ process ID that is associated with the first resource and that is indicated by the network device for the first terminal device.

Optionally, the first resource is used for retransmission.

Optionally, the first resource may be a dynamic grant resource of the sidelink.

Optionally, the first terminal device receives the first resource on a PDCCH or DCI, the first resource is for a second RNTI (for example, an SL-RNTI or an SLCS-RNTI), and the HARQ buffer corresponding to the HARQ process associated with the first resource is empty. The network device scrambles the PDCCH or the DCI by using the second RNTI, to schedule a retransmission resource of a configured grant resource of the sidelink for the first terminal device.

Optionally, the second RNTI may be any one or several of an SLCS-RNTI, an SL-RNTI, an SL semi-persistent scheduling V-RNTI, or an SL semi-persistent scheduling V-RNTI.

c. No data is obtained in the fifth HARQ process.

The first resource is associated with the fifth HARQ process ID.

A HARQ process corresponding to the fifth HARQ process ID may be referred to as the fifth HARQ process.

Optionally, the HARQ buffer corresponding to the fifth HARQ process of the first terminal device is empty.

Optionally, the fifth HARQ process ID is a HARQ process ID determined by the first terminal device for the first resource according to a preset algorithm or a calculation manner indicated by the network device; or is a HARQ process ID that is associated with the first resource and that is indicated by the network device for the first terminal device.

Specifically, that no data is obtained in the fifth HARQ process may be understood as follows: When obtaining no to-be-transmitted data in the fifth HARQ process, the first terminal device does not perform transmission on the sidelink by using the first resource.

The data may be newly transmitted data or retransmitted data. In addition, the data may be understood as a MAC PDU or a TB.

Optionally, the first resource conflicts with a mode 2 resource of the sidelink, and no data is obtained in the HARQ process associated with the first resource. The conflict may be understood as preemption. The first resource conflicts with the mode 2 resource of the sidelink, and no data is obtained in the HARQ process corresponding to the fifth HARQ process ID associated with the first resource. It may be understood that, the first resource is preempted by the mode 2 resource of the sidelink, and no data is obtained in the HARQ process associated with the first resource.

Optionally, that a first terminal device generates first acknowledgement information when the first terminal device does not perform transmission on a sidelink by using a first resource includes:

the first terminal device generates the first acknowledgement information when the first terminal device does not perform transmission on the sidelink by using the first resource and a first preset condition is met, where the first preset condition includes any one or more of the following:

1. The first terminal device has a PUCCH resource, where the PUCCH resource is associated with the first resource.

Optionally, that the first terminal device has a PUCCH resource may be understood as follows: The first terminal device receives a PUCCH resource configured by the network device, or a PUCCH resource is configured for the first terminal device.

The first resource is a PSSCH resource. Each PSSCH resource corresponds to one PUCCH resource, or a plurality of PSSCH resources correspond to one PUCCH resource. The following describes the two cases:

a. Each PSSCH resource corresponds to one PUCCH resource, in other words, there is a one-to-one correspondence between a PSSCH resource and a PUCCH resource. That is, the network device configures one PUCCH resource for each PSSCH resource. If the first terminal device does not perform transmission on the sidelink by using the PSSCH resource, the first terminal device generates first acknowledgement information corresponding to the PSSCH resource or the PUCCH resource. Each PSSCH resource may be understood as each PSSCH resource for which a corresponding PUCCH resource is configured.

b. A plurality of PSSCH resources correspond to one PUCCH resource. That is, the network device configures a same PUCCH resource for a plurality of PSSCH resources. If the first terminal device does not perform transmission on the sidelink by using any one of the plurality of PSSCH resources, the first terminal device generates first acknowledgement information corresponding to the plurality of PSSCH resources and/or the PUCCH resource. The plurality of PSSCH resources may be understood as a plurality of PSSCH resources for which a corresponding PUCCH resource is configured.

2. The first resource is not preempted by a second resource, where the second resource is a resource scheduled by the network device for the first terminal device.

Optionally, the second resource includes any one or more of the following:

(1) a resource of the sidelink;
(2) a mode 1 resource of the sidelink;
(3) a configured grant resource of the sidelink;
(4) a type 1 configured grant resource of the sidelink;
(5) a type 2 configured grant resource of the sidelink;
(6) a dynamic grant resource of the sidelink;
(7) a configured grant resource set of the sidelink, where the configured grant resource set of the sidelink includes a configured grant resource corresponding to one or more configured grant resource indexes;
(8) a resource of an uplink;
(9) a configured grant resource of an uplink;
(10) a type 1 configured grant resource of an uplink;
(11) a type 2 configured grant resource of an uplink;
(12) a configured grant resource set of an uplink, where the configured grant resource set of the uplink includes a configured grant resource corresponding to one or more configured grant resource indexes;
(13) a dynamic grant resource of an uplink;
(14) a resource of a downlink;
(15) a semi-persistent allocation resource of a downlink;
(16) a dynamic allocation resource of a downlink; or
(17) a semi-persistent allocation resource set of a downlink, where the semi-persistent allocation resource set includes semi-persistent allocation resources corresponding to one or more semi-persistent allocation resource indexes.

That the first resource is not preempted by a second resource includes the following two possible cases:

a. The first resource does not overlap (overlap) the second resource in time domain.

Overlap herein may be partial overlap or complete overlap.

For example, if the first resource overlaps the second resource in time domain, the second resource is to override or preempt (overlap) the first resource, and the first terminal device is not to perform SL transmission on the first resource. Because both the first resource and the second resource are resources scheduled by the network device for the first terminal device, the network device can determine that the second resource of the first terminal device is to override or preempt (overlap) the first resource. In this case, the network device learns that the first terminal device is not to perform SL transmission on the first resource, and the first terminal device does not need to feed back a transmission status on the first resource to the network device. That is, when the first resource overlaps the second resource, the first terminal device does not need to feed back the transmission status on the first resource to the network device. On the contrary, when the first resource does not overlap the second resource in time domain, the network device does not know whether the first terminal device is to perform SL transmission on the first resource. In this case, the first terminal device needs to feed back a transmission status on the first resource to the network device.

Optionally, the first resource is a CG resource, and the second resource is a DG resource.

Optionally, the first terminal device receives, on a PDCCH, information for configuring the second resource, and DCI in the PDCCH is scrambled by using a radio network temporary identity (radio network temporary identity, RNTI, for example, any one or several of a C-RNTI, a CS-RNTI, an SPS C-RNTI, an SLCS-RNTI, an SL-RNTI, an SL semi-persistent scheduling V-RNTI, or an SL semi-persistent scheduling V-RNTI).

Optionally, if the first resource does not overlap the second resource in time domain, and the first terminal device does not perform transmission on the SL by using the first resource, the first terminal device generates the first acknowledgement information corresponding to the first resource.

b. A HARQ process ID associated with the first resource is different from a HARQ process ID associated with the second resource, or a HARQ process ID associated with the second resource is not a HARQ process ID associated with the first resource.

For example, if the first terminal device receives information for configuring the second resource, and the fifth HARQ process ID associated with the first resource is the same as a second HARQ process ID associated with the second resource, the first terminal device may consider that the second resource preempts the first resource. The first terminal device is not to perform SL transmission on the first resource. Because both the first resource and the second resource are resources scheduled by the network device for the first terminal device, the network device can determine that the second resource of the first terminal device is to override or preempt (overlap or override) the first resource. In this case, the network device learns that the first terminal device is not to perform SL transmission on the first resource, and the first terminal device does not need to feed back a transmission status on the first resource to the network device. That is, when the first resource and the second resource are associated with a same HARQ process ID, and the second resource preempts the first resource, the first terminal device does not need to feed back the transmission status on the first resource to the network device.

Optionally, the first resource is a CG resource, and the second resource is a DG resource.

Optionally, the first terminal device receives, on a PDCCH, information for configuring the second resource, and DCI in the PDCCH is scrambled by using a radio network temporary identity (radio network tempory identity, RNTI, for example, any one or several of a C-RNTI, a CS-RNTI, an SPS C-RNTI, an SLCS-RNTI, an SL-RNTI, an SL semi-persistent scheduling V-RNTI, or an SL semi-persistent scheduling V-RNTI).

Optionally, when the first terminal device receives the second resource, the first resource has not been used yet.

Optionally, when the first terminal device receives the second resource, the HARQ process associated with the first resource is still occupied.

Optionally, before the first terminal device receives the second resource, the first terminal device has obtained the first resource, and the first resource is associated with the fifth HARQ process ID.

Optionally, the first terminal device receives the second resource, and a HARQ process ID associated with the second resource is a HARQ process ID associated with the first resource. It may be understood that the first terminal device receives the second resource, and an identified HARQ process is configured for the first resource. Alternatively, it may be understood that the first resource is a previous sidelink grant/resource associated with a same HARQ process ID or the second HARQ process ID.

Optionally, the fifth HARQ process ID may be obtained in any one or several of the following manners:

(1) a HARQ process ID determined by the first terminal device for the first resource according to a preset algorithm or a calculation manner indicated by the network device;
(2) a HARQ process ID that is associated with the first resource and that is indicated by the network device for the first terminal device; or
(3) a HARQ process ID determined by the first terminal device for the first resource.

Optionally, the second HARQ process ID may be obtained in any one or several of the following manners:

(1) a HARQ process ID determined by the first terminal device for the second resource according to a preset algorithm or a calculation manner indicated by the network device;
(2) a HARQ process ID that is associated with the second resource and that is indicated by the network device for the first terminal device; or
(3) a HARQ process ID determined by the first terminal device for the second resource.

Optionally, on the contrary, when the first resource is not preempted by the second resource, the network device does not know whether the first terminal device is to perform SL transmission on the first resource. In this case, the first terminal device needs to feed back a transmission status on the first resource to the network device.

For example, if the first resource and the second resource are associated with different HARQ process IDs, or a HARQ process ID associated with the second resource is not a HARQ process ID associated with the first resource, and the first terminal device does not perform transmission on the SL by using the first resource and/or the first preset condition is met, the first terminal device generates the first acknowledgement information corresponding to the first resource.

3. The first PUCCH resource corresponding to the first resource is not used to feed back ninth acknowledgement information associated with any one or more of a ninth PUCCH resource, a third resource, the fifth HARQ process, and the fifth HARQ process ID to the network device.

Optionally, the ninth acknowledgement information may be a NACK.

A HARQ process ID associated with the third resource is the same as a HARQ process ID associated with the first resource.

The first resource is associated with the fifth HARQ process ID.

A HARQ process corresponding to the fifth HARQ process ID may be referred to as the fifth HARQ process.

The first resource is associated with the first PUCCH resource.

Optionally, the fifth HARQ process ID is a HARQ process ID determined by the first terminal device for the first resource according to a preset algorithm or a calculation manner indicated by the network device; or is a HARQ process ID that is associated with the first resource and that is indicated by the network device for the first terminal device.

The third resource is associated with the fifth HARQ process ID.

The third resource is associated with the ninth PUCCH resource.

Optionally, the first terminal device sends the ninth acknowledgement information to the network device when an eleventh preset condition is met; or when an eleventh preset condition is met, the first terminal device sends the ninth acknowledgement information to the network device by using the first PUCCH resource corresponding to the first resource.

Optionally, the fifth HARQ process ID is a HARQ process ID determined by the first terminal device for the third resource according to a preset algorithm or a calculation manner indicated by the network device; or is a HARQ process ID that is associated with the third resource and that is indicated by the network device for the first terminal device.

Optionally, the first terminal device sends the ninth acknowledgement information to the network device when an eleventh preset condition is met; or when an eleventh preset condition is met, the first terminal device sends the ninth acknowledgement information to the network device by using the first PUCCH resource corresponding to the first resource.

For this case, refer to related description of the following embodiment shown in FIG. 4. Fourth acknowledgement information in the embodiment shown in FIG. 4 may be replaced with the ninth acknowledgement information herein. A fourth preset condition in the embodiment shown in FIG. 4 may be replaced with the eleventh preset condition herein. A seventh HARQ process in the embodiment shown in FIG. 4 is replaced with the fifth HARQ process herein. A fifth sidelink grant in the embodiment shown in FIG. 4 is replaced with the first resource herein. A PUCCH resource corresponding to the fifth sidelink grant in the embodiment shown in FIG. 4 is replaced with the first PUCCH resource. A sixth sidelink grant in the embodiment shown in FIG. 4 is replaced with the third resource herein. The eleventh preset condition is similar to the fourth preset condition in the embodiment shown in FIG. 4. For details, refer to descriptions of the fourth preset condition in the embodiment shown in FIG. 4. Details are not described herein again. When the eleventh preset condition is met, the first terminal device feeds back a NACK associated with any one or more of the ninth PUCCH resource, the third resource, the fifth HARQ process, and the fifth HARQ process ID to the network device by using the PUCCH resource corresponding to the first resource.

The ninth acknowledgement information is used to indicate that the first terminal device fails to perform transmission on the sidelink, is used to indicate that the first terminal device fails to perform transmission on the third resource, is used to indicate that the first terminal device fails to perform transmission in the HARQ process corresponding to the fifth HARQ process ID, is used to request, from the network device, a resource used to retransmit data of the sidelink, is used to request, from the network device, a resource used to retransmit data that fails to be transmitted on the third resource, or is used to request, from the network device, a resource used to retransmit data that fails to be transmitted in the HARQ process corresponding to the fifth HARQ process ID.

Content related to the case in which the first terminal device feeds back the ninth acknowledgement information associated with any one or more of the ninth PUCCH resource, the third resource, the fifth HARQ process, and the fifth HARQ process ID to the network device by using the first PUCCH resource corresponding to the first resource is similar to that in the embodiment shown in FIG. 4. For details, refer to the content in the embodiment shown in FIG. 4. Details are not described herein again.

For example, when the first PUCCH resource corresponding to the first resource is used to feed back the ninth acknowledgement information associated with any one or more of the ninth PUCCH resource, the third resource, the fifth HARQ process, and the fifth HARQ process ID to the network device, the first terminal device does not need to generate the first acknowledgement information. On the contrary, when the first PUCCH resource corresponding to the first resource is not used to feed back the ninth acknowledgement information associated with any one or more of the ninth PUCCH resource, the third resource, the fifth HARQ process, and the fifth HARQ process ID to the network device, if the first terminal device does not perform transmission on the SL by using the first resource and/or the first preset condition is met, the first terminal device generates the first acknowledgement information corresponding to the first resource.

S202. The first terminal device sends the first acknowledgement information to the network device.

Optionally, the first terminal device sends the first acknowledgement information to the network device by using a PUCCH resource or a PUSCH resource.

Optionally, the first terminal device sends the first acknowledgement information to the network device by using the PUCCH resource (for example, the first PUCCH resource) corresponding to the first resource. The first PUCCH resource may be a PUCCH resource dedicated to transmitting the first acknowledgement message. Optionally, the network device may configure the first PUCCH resource for the terminal device while configuring the first resource for the terminal device.

Optionally, the first acknowledgement message is sent to the network device by using a first PUSCH resource. The terminal device may send the fifth HARQ process ID and the first acknowledgement message to the network device together.

Optionally, the network device may configure the first PUSCH resource for the terminal device while configuring the first resource for the terminal device. The first PUSCH resource may be a PUSCH resource dedicated to transmitting the first acknowledgement message.

For example, the first acknowledgement information may be periodically sent to the network device. For example, the terminal device periodically determines whether the terminal device uses the first resource; and if the terminal device does not use the first resource, the terminal device sends the first acknowledgement information to the network device. For example, the terminal device periodically determines whether the terminal device uses the first resource and whether the first preset condition is met; and if the terminal device does not use the first resource and the first preset condition is met, the terminal device sends the first acknowledgement information to the network device. Optionally, in this embodiment, before step 201, the method further includes step 201a.

In step 201a, the first terminal device obtains seventh instruction information.

Optionally, the first terminal device receives the seventh instruction information sent by the network device.

The seventh instruction information is used to instruct the first terminal device to generate or send the first acknowledgement information when the first terminal device does not perform transmission on the sidelink by using the first resource and/or the first preset condition is met.

Optionally, that the first terminal device generates first acknowledgement information may be understood as follows: The first terminal device generates first acknowledgement information corresponding to any one or more of the first resource, the fifth HARQ process, the fifth HARQ process ID, and the first PUCCH resource.

Optionally, that the first terminal device sends the first acknowledgement information to the network device may be understood as follows: The first terminal device sends the first acknowledgement information corresponding to any one or more of the first resource, the fifth HARQ process, the fifth HARQ process ID, and the first PUCCH resource to the network device.

The operation 201a is an optional operation, that is, a device manufacturer may store content of the seventh instruction information in the terminal device before delivery of the terminal device. Alternatively, content of the seventh instruction information may be specified in a protocol or a standard. In this way, the network device does not need to send the seventh instruction information to the terminal device.

Optionally, a type of the first resource may be understood as a type to which the first resource belongs.

Optionally, for an explanation of a configuration granularity of the type of the first resource, refer to an explanation of a configuration granularity of a type of a type 1 resource in the embodiment shown in FIG. 3. Details are not described herein again.

Optionally, the configuration granularity of the type of the first resource may be different from or the same as a configuration granularity of the seventh instruction information.

Optionally, for an explanation of the configuration granularity of the seventh instruction information, refer to an explanation of a configuration granularity of second instruction information in the embodiment shown in FIG. 3. Details are not described herein again. For a specific meaning different from a meaning of the second instruction information in the embodiment shown in FIG. 3, refer to a meaning of the seventh instruction information.

Optionally, in this embodiment, the first resource may be understood as an eleventh sidelink grant, the second resource may be understood as a twelfth sidelink grant, and the third resource may be understood as a nineteenth sidelink grant.

In this embodiment of this application, the first terminal device obtains the first resource; and the first terminal device generates the first acknowledgement information when the first terminal device does not perform transmission on the sidelink by using the first resource and/or the first preset condition is met, and sends the first acknowledgement information to the network device. When receiving the first acknowledgement information, the network device considers that the first terminal device successfully performs transmission on the sidelink by using the first resource, the first terminal device does not perform transmission on the first resource, the first terminal device does not request a retransmission resource from the network device, the first terminal device successfully performs sidelink transmission in the fifth HARQ process, or the first terminal device does not request a retransmission resource from the network device for any one or more of the first resource, the fifth HARQ process ID, and the fifth HARQ process. In this case, the network device does not allocate a retransmission resource to the first terminal device, avoiding a waste of resources.

FIG. 3 is a schematic diagram of another embodiment of a communication processing method according to an embodiment of this application. The method includes the following steps.

301. A first terminal device obtains second instruction information.

Optionally, the first terminal device receives the second instruction information sent by a network device.

The second instruction information is used to instruct to retransmit or newly transmit data on a sidelink by using a type 1 resource when a second preset condition is met. The type 1 resource includes a resource scheduled by the network device for the first terminal device and/or a resource selected, contended for, or sensed by the first terminal device (including a resource that is to be selected, contended for, or sensed by the first terminal device and/or a resource that has been selected, contended for, or sensed by the first terminal device).

Optionally, the retransmitting or newly transmitting data on a sidelink by using a type 1 resource when a second preset condition is met may be understood as retransmitting or newly transmitting data of a first HARQ process by using the type 1 resource when the second preset condition is met.

The second preset condition includes any one or several of the following:

1. The first terminal device does not obtain, within first preset duration, a resource used for retransmission.

Optionally, the first terminal device does not obtain, within the first preset duration, a resource used for retransmission of (the data of) the first HARQ process.

Optionally, the resource used for retransmission of (the data of) the first HARQ process may be understood as a resource or a retransmission resource associated with a first HARQ process ID.

A HARQ process corresponding to the first HARQ process ID may be referred to as the first HARQ process.

Optionally, the first terminal device does not obtain, within the first preset duration, a resource or a retransmission resource scheduled by the network device for the first HARQ process of the first terminal device.

Optionally, the first terminal device does not obtain, within the first preset duration, a resource or a retransmission resource that is for the first HARQ process and that is contended for, selected, or sensed by the first terminal device.

Optionally, the resource or the retransmission resource for the first HARQ process may be understood as a resource or a retransmission resource associated with the first HARQ process ID.

Optionally, the first HARQ process ID may be obtained in any one or several of the following manners:

(a) a HARQ process ID determined by the first terminal device for the resource or the retransmission resource according to a preset algorithm or a calculation manner indicated by the network device;
(b) a HARQ process ID that is associated with the resource or the retransmission resource and that is indicated by the network device for the first terminal device; or
(c) a HARQ process ID determined by the first terminal device for the resource or the retransmission resource.

In a possible implementation, if the first terminal device does not obtain, within the first preset duration started or restarted after a second condition is met, a resource or a retransmission resource used in the first HARQ process, the first terminal device may retransmit or newly transmit the data of the first HARQ process on the sidelink by using the type 1 resource. The second condition includes any one or several of the following:

(1) When the first terminal device sends second acknowledgement information to the network device, or after the first terminal device sends second acknowledgement information to the network device.

Optionally, "when the first terminal device sends second acknowledgement information to the network device" may be understood as a moment at which the first terminal device sends the second acknowledgement information to the network device.

Optionally, "after the first terminal device sends second acknowledgement information to the network device" may be understood as a moment after a moment at which the first terminal device sends the second acknowledgement information to the network device.

A second sidelink grant is associated with the first HARQ process ID, and a HARQ process corresponding to the first HARQ process ID may be referred to as the first HARQ process.

Optionally, the first HARQ process ID is a HARQ process ID determined by the first terminal device for the second sidelink grant according to a preset algorithm or a calculation manner indicated by the network device; or is a HARQ process ID that is associated with the second sidelink grant and that is indicated by the network device for the first terminal device.

(2) Before, during, or after a time domain position of a second PUCCH resource.

Optionally, a second sidelink grant is associated with the second PUCCH resource.

Optionally, the second PUCCH resource is associated with the first HARQ process and/or the first HARQ process ID.

Optionally, the first terminal device sends second acknowledgement information on the second PUCCH resource.

The second sidelink grant is associated with the first HARQ process ID, and a HARQ process corresponding to the first HARQ process ID may be referred to as the first HARQ process.

Optionally, the first HARQ process ID is a HARQ process ID determined by the first terminal device for the second sidelink grant according to a preset algorithm or a calculation manner indicated by the network device; or is a HARQ process ID that is associated with the second sidelink grant and that is indicated by the network device for the first terminal device.

(3) When the first terminal device sends data on a second sidelink grant or after the first terminal device sends data on a second sidelink grant, or when the first terminal device sends, on a second sidelink grant, the data corresponding to the first HARQ process or after the first terminal device sends, on a second sidelink grant, the data corresponding to the first HARQ process.

Optionally, "when the first terminal device sends data on a second sidelink grant" may be understood as a moment at which the first terminal device sends the data on the second sidelink grant.

Optionally, "after the first terminal device sends data on a second sidelink grant" may be understood as a moment after a moment at which the first terminal device sends the data on the second sidelink grant.

Optionally, "when the first terminal device sends, on a second sidelink grant, the data corresponding to the first HARQ process" may be understood as a moment at which the first terminal device sends, on the second sidelink grant, the data corresponding to the first HARQ process.

Optionally, "after the first terminal device sends, on a second sidelink grant, the data corresponding to the first HARQ process" may be understood as a moment after a moment at which the first terminal device sends, on the second sidelink grant, the data corresponding to the first HARQ process.

The second sidelink grant is associated with the first HARQ process ID, and a HARQ process corresponding to the first HARQ process ID may be referred to as the first HARQ process.

Optionally, the first HARQ process ID is a HARQ process ID determined by the first terminal device for the second sidelink grant according to a preset algorithm or a calculation manner indicated by the network device; or is a HARQ process ID that is associated with the second sidelink grant and that is indicated by the network device for the first terminal device.

(4) Before, during, or after a time domain position of a second sidelink grant resource.

The second sidelink grant is associated with the first HARQ process.

Optionally, the second sidelink grant corresponds to a second PUCCH resource, and the first terminal device sends second acknowledgement information to the network device by using the second PUCCH resource.

Optionally, the first terminal device sends data on the second sidelink grant, or the first terminal device sends, on the second sidelink grant, the data corresponding to the first HARQ process.

The second sidelink grant is associated with the first HARQ process ID, and a HARQ process corresponding to the first HARQ process ID may be referred to as the first HARQ process.

Optionally, the first HARQ process ID is a HARQ process ID determined by the first terminal device for the second sidelink grant according to a preset algorithm or a calculation manner indicated by the network device; or is a HARQ process ID that is associated with the second sidelink grant and that is indicated by the network device for the first terminal device.

(5) The first terminal device receives a NACK for (the data of) the first HARQ process.

Optionally, the first terminal device receives a NACK from (sent by) a second terminal device.

Optionally, the NACK from (sent by) the second terminal device may be understood as feedback of a receiving status of the second terminal device, feedback of a receiving failure of the second terminal device, feedback of a receiving status of the second terminal device for (the data of) the first HARQ process, or feedback of a receiving failure of the second terminal device for (the data of) the first HARQ process. There is no limitation that the NACK is necessarily sent by the second terminal device. Optionally, the first terminal device receives a NACK that is for the data of the first HARQ process and that is from (sent by) the second terminal device.

Optionally, the first terminal device receives, on a first physical sidelink feedback channel (physical sidelink feedback channel, PSFCH) resource, on a first PSFCH occasion (occasion), or within first PSFCH duration, the NACK that is for the data of the first HARQ process and that is from (sent by) the second terminal device.

Optionally, the first terminal device sends data to the second terminal device on a second sidelink grant, or the first terminal device sends the data corresponding to the first HARQ process to the second terminal device on a second sidelink grant.

The second sidelink grant is associated with the first HARQ process ID, and a HARQ process corresponding to the first HARQ process ID may be referred to as the first HARQ process.

The first PSFCH resource, the first PSFCH occasion (occasion), or the first PSFCH duration is associated with any one or more of the second sidelink grant, the first HARQ process ID, and the first HARQ process.

Optionally, the first HARQ process ID may be obtained in any one or several of the following manners:

(a) a HARQ process ID determined by the first terminal device for the second sidelink grant according to a preset algorithm or a calculation manner indicated by the network device;
(b) a HARQ process ID that is associated with the second sidelink grant and that is indicated by the network device for the first terminal device; or
(c) a HARQ process ID determined by the first terminal device for the second sidelink grant.

(6) The first terminal device does not receive feedback for the first HARQ process.

Optionally, the first terminal device does not receive feedback from (sent by) a second terminal device.

Optionally, the feedback from (sent by) the second terminal device may be understood as feedback of a receiving status of the second terminal device, or feedback of a receiving status of the second terminal device for (the data of) the first HARQ process. There is no limitation that the feedback is necessarily sent by the second terminal device.

Optionally, the first terminal device does not receive feedback that is for the data of the first HARQ process and that is from (sent by) the second terminal device.

Optionally, the first terminal device does not receive, on a first PSFCH resource, on a first PSFCH occasion (occasion), or within first PSFCH duration, the feedback from (sent by) the second terminal device.

Optionally, the first terminal device does not receive, on the first PSFCH resource, on the first PSFCH occasion (occasion), or within the first PSFCH duration, the feedback that is for the data of the first HARQ process and that is from (sent by) the second terminal device.

Optionally, the feedback may be an ACK or a NACK.

Optionally, the first terminal device sends data to the second terminal device on a second sidelink grant, or the first terminal device sends the data corresponding to the first HARQ process to the second terminal device on a second sidelink grant.

The second sidelink grant is associated with the first HARQ process ID, and a HARQ process corresponding to the first HARQ process ID may be referred to as the first HARQ process.

The second sidelink grant is associated with the first PSFCH resource, the first PSFCH occasion (occasion), or the first PSFCH duration.

The first PSFCH resource, the first PSFCH occasion (occasion), or the first PSFCH duration is associated with any one or more of the first HARQ process ID and the first HARQ process.

Optionally, the first HARQ process ID may be obtained in any one or several of the following manners:

(a) a HARQ process ID determined by the first terminal device for the second sidelink grant according to a preset algorithm or a calculation manner indicated by the network device;
(b) a HARQ process ID that is associated with the second sidelink grant and that is indicated by the network device for the first terminal device; or
(c) a HARQ process ID determined by the first terminal device for the second sidelink grant.

For example, in a scenario, when the first terminal device communicates with other terminal devices (in, for example, a unicast or groupcast manner), and HARQ feedback is performed in an ACK/a NACK manner, the first terminal device sends data to the second terminal device on the second sidelink grant, where the second sidelink grant is associated with the first HARQ process and/or the first HARQ process ID; and if the first terminal device does not receive feedback from the second terminal device, or if the first terminal device does not receive feedback, the first terminal device considers that the second terminal device fails to perform receiving.

(7) Before, during, or after a time domain position of a first PSFCH resource, a first PSFCH occasion (occasion), or first PSFCH duration.

The first PSFCH resource, the first PSFCH occasion (occasion), or the first PSFCH duration is associated with any one or more of a second sidelink grant, the first HARQ process ID, and the first HARQ process.

Optionally, the first terminal device sends data to a second terminal device on the second sidelink grant, or the first terminal device sends the data corresponding to the first HARQ process to a second terminal device on the second sidelink grant.

The second sidelink grant is associated with the first HARQ process ID, and a HARQ process corresponding to the first HARQ process ID may be referred to as the first HARQ process.

Optionally, the second terminal device sends feedback to the first terminal device on the first PSFCH resource, or the second terminal device sends feedback corresponding to the first HARQ process to the first terminal device on the first PSFCH resource.

Optionally, the first HARQ process ID may be obtained in any one or several of the following manners:

(a) a HARQ process ID determined by the first terminal device for the second sidelink grant according to a preset algorithm or a calculation manner indicated by the network device;
(b) a HARQ process ID that is associated with the second sidelink grant and that is indicated by the network device for the first terminal device; or
(c) a HARQ process ID determined by the first terminal device for the second sidelink grant.

Optionally, a length of the first preset duration may be preconfigured, may be configured by the network device for the first terminal device, or may be specified in a communication protocol. This is not specifically limited herein.

Time counting of the first preset duration is stopped and/or reset when any one or more of the following conditions are met:

(1) The first terminal device obtains a resource used for retransmission.

Optionally, the first terminal device obtains a resource used for retransmission of (the data of) the first HARQ process.

Optionally, the resource used for retransmission of (the data of) the first HARQ process may be understood as a resource or a retransmission resource associated with the first HARQ process ID.

A HARQ process corresponding to the first HARQ process ID may be referred to as the first HARQ process.

Optionally, the first terminal device obtains a resource or a retransmission resource scheduled by the network device for the first HARQ process of the first terminal device.

Optionally, the first terminal device obtains a resource or a retransmission resource that is for the first HARQ process and that is contended for, selected, or sensed by the first terminal device.

Optionally, the resource or the retransmission resource for the first HARQ process may be understood as a resource or a retransmission resource associated with the first HARQ process ID.

A HARQ process corresponding to the first HARQ process ID may be referred to as the first HARQ process.

(2) Transmission corresponding to the first preset duration succeeds or is completed, or transmission corresponding to the first HARQ process succeeds or is completed.

Optionally, that transmission corresponding to the first preset duration succeeds or is completed, or transmission corresponding to the first HARQ process succeeds or is completed includes any one or several of the following cases:

(2-1) The first terminal device does not receive a NACK for the sidelink data and/or a NACK for the first HARQ process.

Optionally, this case is applicable to a unicast scenario and a groupcast scenario.

Optionally, this case is applicable to a case in which HARQ feedback is performed in a NACK only manner.

For example, in a scenario, when the first terminal device communicates with other terminal devices (in, for example, a unicast or groupcast manner), and HARQ feedback is performed in a NACK only manner, the first terminal device sends data to the other terminal devices by using the first HARQ process; and if the first terminal device does not receive NACKs or the first terminal device does not receive NACKs on occasions on which the other terminal devices perform feedback, the first terminal device considers that all the other terminal devices correctly receive the data.

(2-2) The first terminal device receives an ACK for the sidelink data and/or an ACK for the first HARQ process.

Optionally, the first terminal device receives all expected ACKs for the sidelink data and/or the first HARQ process.

Optionally, this case is applicable to a unicast scenario and a groupcast scenario.

Optionally, this case is applicable to a case in which HARQ feedback is performed in an ACK/a NACK manner.

For example, in a scenario, the first terminal device sends data to another terminal device by using the first HARQ process; and if the first terminal device receives an ACK or the first terminal device receives an ACK from the another terminal device, the first terminal device considers that the another terminal device correctly receives the data.

(2-3) The first terminal device receives an ACK for the sidelink data and/or an ACK for the first HARQ process, and does not receive a NACK for the sidelink data.

Optionally, this case is applicable to a unicast scenario and a groupcast scenario.

Optionally, this case is applicable to a case in which HARQ feedback is performed in an ACK/a NACK manner.

For example, in a scenario, when the first terminal device communicates with other terminal devices in a groupcast manner, and HARQ feedback is performed in an ACK/a NACK manner, the first terminal device sends data to the other terminal devices by using the first HARQ process; and if the first terminal device receives only ACKs or the first terminal device receives only ACKs from the other terminal devices, the first terminal device considers that all the other terminal devices correctly receive the data.

(2-4) Transmission of the sidelink data and/or transmission in the first HARQ process reach/reaches a maximum quantity of transmission times or a maximum quantity of retransmission times.

(2-5) Transmission of the sidelink data and/or transmission in the first HARQ process reach/reaches maximum transmission time, and the maximum transmission time may be duration of a timer or a time counter.

(2-6) For the sidelink data and/or the first HARQ process, the first terminal device feeds back an ACK to the network device. The ACK is used to indicate, to the network device, that transmission on the sidelink succeeds.

(2-7) The first terminal device discards the data corresponding to the first HARQ process, flushes a HARQ buffer corresponding to the first HARQ process, or releases the first HARQ process.

(2-8) The first terminal device receives a new transmission resource scheduled by the network device, and a HARQ process ID associated with the resource is the same as the first HARQ process ID.

For the foregoing cases (2-1) to (2-8), content that needs to be described includes the following:

Optionally, the first terminal device sends the sidelink data to the second terminal device on the second sidelink grant, or the first terminal device sends the sidelink data corresponding to the first HARQ process to the second terminal device on the second sidelink grant.

Optionally, the sidelink data is associated with the first preset duration.

Optionally, the sidelink data is associated with the first HARQ process ID or the first HARQ process. A HARQ process corresponding to the first HARQ process ID may be referred to as the first HARQ process.

Optionally, the first HARQ process ID may be obtained in any one or several of the following manners:

(a) a HARQ process ID determined by the first terminal device for the second sidelink grant according to a preset algorithm or a calculation manner indicated by the network device;

(b) a HARQ process ID that is associated with the second sidelink grant and that is indicated by the network device for the first terminal device; or

(c) a HARQ process ID determined by the first terminal device for the second sidelink grant.

2. The first terminal device does not obtain, when a first timer expires, a resource used for retransmission.

Optionally, the first terminal device does not obtain, when the first timer expires, a resource used for retransmission of (the data of) the first HARQ process.

Optionally, the resource used for retransmission of (the data of) the first HARQ process may be understood as a resource or a retransmission resource associated with a first HARQ process ID.

A HARQ process corresponding to the first HARQ process ID may be referred to as the first HARQ process.

Optionally, the first terminal device does not obtain, when the first timer expires, a resource or a retransmission resource scheduled by the network device for the first HARQ process of the first terminal device.

Optionally, the first terminal device does not obtain, when the first timer expires, a resource or a retransmission resource that is for the first HARQ process and that is contended for, selected, or sensed by the first terminal device.

Optionally, the resource or the retransmission resource for the first HARQ process may be understood as a resource or a retransmission resource associated with the first HARQ process ID.

A HARQ process corresponding to the first HARQ process ID may be referred to as the first HARQ process.

Optionally, the first HARQ process ID may be obtained in any one or several of the following manners:

(1) a HARQ process ID determined by the first terminal device for the retransmission resource according to a preset algorithm or a calculation manner indicated by the network device;

(2) a HARQ process ID that is associated with the retransmission resource and that is indicated by the network device for the first terminal device; or

(3) a HARQ process ID determined by the first terminal device for the retransmission resource.

In a possible implementation, the first timer is started or restarted when a second condition is met; and if the first terminal device does not obtain, when the first timer expires, a resource used for retransmission, the first terminal device may retransmit the data by using the type 1 resource. For specific content of the second condition, refer to the foregoing description. Content related to a condition of stopping and/or resetting the first timer is the same as that related to the condition of stopping and/or resetting time counting of the first preset duration. Refer to the foregoing description. Details are not described herein again.

Optionally, duration of the first timer may be preconfigured, may be configured by the network device for the first terminal device, or may be specified in a communication protocol. This is not specifically limited herein.

3. Before, during, or after a time domain position of a resource associated with a first HARQ process ID, the first terminal device does not obtain a resource used for retransmission.

Optionally, before, on, or after one or N next resources associated with the first HARQ process ID, the first terminal device does not obtain a resource used for retransmission.

Optionally, before, on, or after the one or N next resources associated with the first HARQ process ID, the first terminal device does not obtain a resource used for retransmission of (the data of) the first HARQ process.

The resource associated with the first HARQ process ID may be understood as a resource associated with a same HARQ process ID as the first HARQ process, a resource associated with a same HARQ process ID as a second sidelink grant, or a resource associated with the first HARQ process ID.

Before this, the first terminal device performs transmission on the second sidelink grant. The second sidelink grant is associated with the first HARQ process ID, and a HARQ process corresponding to the first HARQ process ID may be referred to as the first HARQ process.

Optionally, the first terminal device fails to perform transmission on the second sidelink grant.

Before, on, or after one or N next resources associated with the same first HARQ process and/or the same first HARQ process ID, the first terminal device does not obtain a resource or a retransmission resource scheduled by the network device for the first HARQ process of the first terminal device.

Before, on, or after one or N next resources associated with the same first HARQ process and/or the same first HARQ process ID, the first terminal device does not obtain a resource or a retransmission resource that is for the first HARQ process and that is contended for, selected, or sensed by the first terminal device.

Optionally, the resource or the retransmission resource for the first HARQ process may be understood as a resource or a retransmission resource associated with the first HARQ process ID.

A HARQ process corresponding to the first HARQ process ID may be referred to as the first HARQ process.

Optionally, before, on, or after a first sidelink grant, the first terminal device does not obtain a resource used for retransmission. Before the first sidelink grant, the first terminal device sends data on the second sidelink grant. The second sidelink grant is associated with the first HARQ process or the first HARQ process ID, and the first sidelink grant is also associated with the first HARQ process ID. The first sidelink grant is the first or $N^{th}$ resource, associated with the first HARQ process or the first HARQ process ID, after the second sidelink grant.

Optionally, before, on, or after the first sidelink grant, the first terminal device does not obtain a resource or a retransmission resource scheduled by the network device for the first HARQ process of the first terminal device.

Optionally, before, on, or after the first sidelink grant, the first terminal device does not obtain a resource or a retransmission resource that is for the first HARQ process and that is contended for, selected, or sensed by the first terminal device.

Optionally, after the first terminal device sends data on the second sidelink grant, the first terminal device does not obtain a resource used for retransmission. The second sidelink grant is associated with the first HARQ process and/or the first HARQ process ID. Before, on, or after the first or the $N^{th}$ sidelink grant resource associated with the first HARQ process and/or the first HARQ process ID, the first terminal device does not obtain a resource used for retransmission.

Optionally, the first HARQ process ID associated with the first sidelink grant may be obtained in any one or several of the following manners:

(a) a HARQ process ID determined by the first terminal for the first sidelink grant according to a preset algorithm or a calculation manner indicated by the network device;
(b) a HARQ process ID that is associated with the first sidelink grant and that is indicated by the network device for the first terminal; or
(c) a HARQ process ID determined by the first terminal for the first sidelink grant.

Optionally, the first HARQ process ID associated with the second sidelink grant may be obtained in any one or several of the following manners:

(a) a HARQ process ID determined by the first terminal device for the second sidelink grant according to a preset algorithm or a calculation manner indicated by the network device;
(b) a HARQ process ID that is associated with the second sidelink grant and that is indicated by the network device for the first terminal device; or
(c) a HARQ process ID determined by the first terminal device for the second sidelink grant.

Optionally, N is greater than or equal to 1. A value of N may be configured by the network device for the first terminal device, may be preconfigured, or may be defined in a protocol. This is not limited herein.

4. For any one or more of the first HARQ process, a first HARQ process ID, a second sidelink grant, the data transmitted in the first HARQ process, and data transmitted on the second sidelink grant, a quantity of times the first terminal device sends a NACK to the network device does not reach a first preset threshold.

Optionally, the NACK may be a negative acknowledgement (NACK).

Optionally, the NACK may include second acknowledgement information, or may include a NACK sent before or after second acknowledgement information.

Optionally, the first preset threshold may be preconfigured, may be configured by the network device for the first terminal device, or may be specified in a communication protocol. This is not specifically limited herein.

5. For any one or more of the first HARQ process, a first HARQ process ID, a second sidelink grant, the data transmitted in the first HARQ process, and data transmitted on the second sidelink grant, a quantity of times the first terminal device sends a NACK to the network device reaches a first preset threshold.

Optionally, the NACK may be a negative acknowledgement (NACK).

Optionally, the NACK may include second acknowledgement information, or may include a NACK sent before or after second acknowledgement information.

Optionally, the first preset threshold may be preconfigured, may be configured by the network device for the first terminal device, or may be specified in a communication protocol. This is not specifically limited herein.

6. Transmission in the first HARQ process fails, or transmission on a second sidelink grant fails.

Optionally, the first terminal device fails to send data to a second terminal device in the first HARQ process, or the first terminal device fails to send data to a second terminal device on the second sidelink grant.

That transmission in the first HARQ process fails, or transmission on a second sidelink grant fails includes any one or several of the following:

(1) The first terminal device does not receive feedback for a receiving status of the data in the first HARQ process and/or feedback for a receiving status of data on the second sidelink grant.

Optionally, the first terminal device does not completely receive the feedback for the receiving status of the data in the first HARQ process and/or the feedback for the receiving status of the data on the second sidelink grant.

Optionally, the second sidelink grant is associated with a first HARQ process ID. A HARQ process corresponding to the first HARQ process ID may be referred to as the first HARQ process.

Optionally, this case is applicable to a unicast scenario and a groupcast scenario.

Optionally, this case is applicable to a case in which HARQ feedback is performed in an ACK/a NACK manner.

For example, in a scenario, the first terminal device sends data to another terminal device by using the first HARQ process; and if the first terminal device does not receive feedback or the first terminal device does not receive feedback from the another terminal device, the first terminal device considers that the another terminal device fails to receive the data.

(2) The first terminal device receives NACK information for the data in the first HARQ process and/or NACK information for data on the second sidelink grant.

Optionally, the second sidelink grant is associated with a first HARQ process ID. A HARQ process corresponding to the first HARQ process ID may be referred to as the first HARQ process.

The NACK information is used to indicate that the second terminal device does not successfully receive the data that is in the first HARQ process and that is sent by the first terminal device and/or the data that is on the second sidelink grant and that is sent by the first terminal device. Optionally, the NACK information may be a NACK.

Optionally, this case is applicable to a unicast scenario and a groupcast scenario.

Optionally, this case is applicable to a case in which HARQ feedback is performed in a NACK only manner and a case in which HARQ feedback is performed in an ACK/a NACK manner.

For example, in a scenario, the first terminal device sends data to another terminal device by using the first HARQ process; and if the first terminal device receives a NACK or the first terminal device receives a NACK from the another terminal device, the first terminal device considers that the another terminal device fails to receive the data.

(3) The first terminal device receives ACK information sent by a third terminal device and NACK information sent by a fourth terminal device.

The ACK information is used to indicate that the third terminal device successfully receives the data that is in the first HARQ process and that is sent by the first terminal device and/or the data that is on the second sidelink grant and that is sent by the first terminal device. Optionally, the ACK information may be an ACK.

The NACK information is used to indicate that the fourth terminal device does not successfully receive the data that is in the first HARQ process and that is sent by the first terminal device and/or the data that is on the second sidelink grant and that is sent by the first terminal device. Optionally, the NACK information may be a NACK.

Optionally, the second sidelink grant is associated with a first HARQ process ID. A HARQ process corresponding to the first HARQ process ID may be referred to as the first HARQ process.

For example, this possible implementation is applied to a scenario in which the first terminal device performs groupcast, and the third terminal device and the fourth terminal device are groupcast objects. In this case, not all the groupcast objects of the first terminal device can receive the data in the first HARQ process and/or the data on the second sidelink grant.

Optionally, this case is applicable to a groupcast scenario.

Optionally, this case is applicable to a case in which HARQ feedback is performed in a NACK only manner and a case in which HARQ feedback is performed in an ACK/a NACK manner.

For example, in a scenario, the first terminal device sends data to other terminal devices by using the first HARQ process; and if the first terminal device receives a NACK and an ACK or the first terminal device receives a NACK and an ACK from the other terminal devices, the first terminal device considers that the other terminal devices fail to receive the data.

(4) The first terminal device sends NACK information to the network device.

Optionally, the first terminal device sends NACK information for any one or more of the first HARQ process, a first HARQ process ID, and the second sidelink grant to the network device.

Optionally, the NACK information may be a NACK.

The NACK information is used to indicate that the first terminal device fails to perform transmission on the sidelink, is used to indicate that the first terminal device fails to perform transmission on the second sidelink grant, is used to indicate that the first terminal device fails to perform transmission in a HARQ process corresponding to the first HARQ process ID, is used to request, from the network device, a resource used to retransmit the data of the sidelink, is used to request, from the network device, a resource used to retransmit data that fails to be transmitted on the second sidelink grant, or is used to request, from the network device, a resource used to retransmit data that fails to be transmitted in a HARQ process corresponding to the first HARQ process ID.

Optionally, the second sidelink grant is associated with the first HARQ process ID. The HARQ process corresponding to the first HARQ process ID may be referred to as the first HARQ process.

The operation 301 is an optional operation, that is, a device manufacturer may store content of the second instruction information in the terminal device before delivery of the terminal device. Alternatively, content of the second instruction information may be specified in a protocol or a standard. In this way, the network device does not need to send the second instruction information to the terminal device.

The second sidelink grant includes any one or several of the following:

     a resource of the sidelink;
     a mode 1 resource of the sidelink;
     a mode 2 resource of the sidelink;

a configured grant resource of the sidelink;
a type 1 configured grant resource of the sidelink;
a type 2 configured grant resource of the sidelink;
a dynamic grant resource of the sidelink; or
a configured grant resource set of the sidelink, where the configured grant resource set includes a configured grant resource corresponding to one or more configured grant resource indexes.

A type of the type 1 resource includes any one or more of the following:

a resource of the sidelink;
a mode 1 resource of the sidelink;
a mode 2 resource of the sidelink;
a configured grant resource of the sidelink;
a type 1 configured grant resource of the sidelink;
a type 2 configured grant resource of the sidelink;
a dynamic grant resource of the sidelink; or
a configured grant resource set of the sidelink, where the configured grant resource set includes a configured grant resource corresponding to one or more configured grant resource indexes.

Optionally, the second acknowledgement information is used to indicate that the first terminal device fails to perform transmission on the sidelink, is used to indicate that the first terminal device fails to perform transmission on the second sidelink grant, is used to indicate that the first terminal device fails to perform transmission in the HARQ process corresponding to the first HARQ process ID, is used to request, from the network device, a resource used to retransmit the data of the sidelink, is used to request, from the network device, a resource used to retransmit the data that fails to be transmitted on the second sidelink grant, or is used to request, from the network device, a resource used to retransmit the data that fails to be transmitted in the HARQ process corresponding to the first HARQ process ID. The second sidelink grant is associated with the first HARQ process ID. The HARQ process corresponding to the first HARQ process ID may be referred to as the first HARQ process. Optionally, the second acknowledgement information may be a NACK.

Optionally, the type of the type 1 resource or the second instruction information may be configured by the network device for the first terminal device (by using, for example, RRC signaling, a SIB, MAC signaling, physical layer signaling, DCI, or a PDCCH), may be preconfigured, or may be defined in a protocol. The configuration may be performed for a configured grant resource index (for example, a CG index) resource of each sidelink (for example, configuration may be separately performed for a CG 1 and a CG 2), a configured grant resource (for example, a CG resource) of a sidelink, a type 1 configured grant resource (for example, a CG type 1 resource) of a sidelink, a type 2 configured grant resource (for example, a CG type 2 resource) of a sidelink, a configured grant resource set of each sidelink, a dynamic grant resource (for example, a DG 1) of each sidelink, a dynamic grant resource of a sidelink, a mode 1 resource of a sidelink, or a mode 2 resource of a sidelink; or may be performed for each UE, each HARQ process ID or HARQ process, each LCH, each LCG, each SLRB, each resource pool (resource pool), each cell, or each area.

Optionally, the type of the type 1 resource may be understood as a type to which the type 1 resource belongs.

Optionally, a configuration granularity of the type 1 resource may be different from or the same as a configuration granularity of the second instruction information.

The following describes the configuration granularity by using examples:

1. A resource type is used as a granularity.

Optionally, configuration may be performed for a configured grant resource index (for example, a CG index) resource of each sidelink (for example, configuration may be separately performed for a CG 1 and a CG 2), a configured grant resource (for example, a CG resource) of a sidelink, a type 1 configured grant resource (for example, a CG type 1 resource) of a sidelink, a type 2 configured grant resource (for example, a CG type 2 resource) of a sidelink, a configured grant resource set of each sidelink, a dynamic grant resource (for example, a DG 1) of each sidelink, a dynamic grant resource of a sidelink, a mode 1 resource of a sidelink, or a mode 2 resource of a sidelink.

For example, that configuration may be performed for a configured grant resource index (for example, a CG index) resource of each sidelink may be understood as follows: Configuration may be separately performed for each resource of a CG index type. Configuration is separately performed for a CG 1 and a CG 2, and the CG 1 and the CG 2 may have different configurations.

For example, the network device schedules a CG 1 resource for the first terminal device, and the network device provides, for the first terminal device, a configuration that the CG 1 resource belongs to the type 1 resource. The network device schedules a CG 2 resource for the first terminal device, and the network device does not provide, for the first terminal device, a configuration that the CG 2 resource belongs to the type 1 resource.

For example, the network device configures the second instruction information for the CG 1 resource of the first terminal device; and for transmission related to the CG 1 resource of the first terminal device, when the foregoing second preset condition is met, the first terminal device can perform retransmission or new transmission by using the type 1 resource. The network device does not configure the second instruction information for the CG 2 resource of the first terminal device; and for transmission related to the CG 2 resource of the first terminal device, when the foregoing second preset condition is met, the first terminal device cannot perform retransmission or new transmission by using the type 1 resource.

2. A terminal device is used as a granularity.

For example, that configuration is performed for each terminal device may be understood as follows: Configuration may be separately performed for each terminal device. Configuration is separately performed for UE 1 and UE 2, and the UE 1 and the UE 2 may have different configurations.

For example, the network device provides, for the first terminal device, a configuration that a resource of a sidelink of the first terminal device belongs to the type 1 resource. The network device does not provide, for the second terminal device, a configuration that a resource of a sidelink of the second terminal device belongs to the type 1 resource.

For example, the network device configures the second instruction information for the first terminal device. For transmission of the UE 1, when the foregoing second preset condition is met, the first terminal device can perform retransmission or new transmission by using the type 1 resource. The network device does not configure the second instruction information for the second terminal device. For transmission of the UE 2, when the foregoing second preset condition is met, the second terminal device cannot perform retransmission or new transmission by using the type 1 resource.

3. A logical channel or a logical channel group is used as a granularity.

For example, that configuration is performed for each logical channel may be understood as follows: Configuration may be separately performed for each logical channel. Configuration is separately performed for an LCH 1 and an LCH 2, and the LCH 1 and the LCH 2 may have different configurations.

For example, the network device provides, for the first terminal device, a configuration that a resource corresponding to the LCH 1 belongs to the type 1 resource. The network device does not provide, for the first terminal device, a configuration that a resource corresponding to the LCH 2 belongs to the type 1 resource.

For example, the network device configures the second instruction information for the LCH 1. For transmission related to the LCH 1, when the foregoing second preset condition is met, the first terminal device can perform retransmission or new transmission by using the type 1 resource. The network device does not configure the second instruction information for the LCH 2. For transmission related to the LCH 2, when the foregoing second preset condition is met, the first terminal device cannot perform retransmission or new transmission by using the type 1 resource.

For example, that configuration is performed for each logical channel group may be understood as follows: Configuration may be separately performed for each logical channel group. Configuration is separately performed for an LCG 1 and an LCG 2, and the LCG 1 and the LCG 2 may have different configurations.

For example, the network device provides, for the first terminal device, a configuration that a resource corresponding to the LCG 1 belongs to the type 1 resource. The network device does not provide, for the first terminal device, a configuration that a resource corresponding to the LCG 2 belongs to the type 1 resource.

For example, the network device configures the second instruction information for the LCG 1. For transmission related to the LCG 1, when the foregoing second preset condition is met, the first terminal device can perform retransmission or new transmission by using the type 1 resource. The network device does not configure the second instruction information for the LCG 2. For transmission related to the LCG 2, when the foregoing second preset condition is met, the first terminal device cannot perform retransmission or new transmission by using the type 1 resource.

4. A sidelink radio bearer SLRB is used as a granularity.

For example, that configuration is performed for each SLRB may be understood as follows: Configuration may be separately performed for each SLRB. Configuration is separately performed for an SLRB 1 and an SLRB 2, and the SLRB 1 and the SLRB 2 may have different configurations.

For example, the network device provides, for the first terminal device, a configuration that a resource corresponding to the SLRB 1 belongs to the type 1 resource. The network device does not provide a configuration that a resource corresponding to the SLRB 2 belongs to the type 1 resource.

For example, the network device configures the second instruction information for the SLRB 1. For transmission related to the SLRB 1, when the foregoing second preset condition is met, the first terminal device can perform retransmission or new transmission by using the type 1 resource. The network device does not configure the second instruction information for the SLRB 2. For transmission related to the SLRB 2, when the foregoing second preset condition is met, the first terminal device cannot perform retransmission or new transmission by using the type 1 resource.

5. A resource pool is used as a granularity.

For example, that configuration is performed for each resource pool may be understood as follows: Configuration may be separately performed for each resource pool. Configuration is separately performed for a resource pool 1 and a resource pool 2, and the resource pool 1 and the resource pool 2 may have different configurations.

For example, the network device provides a configuration that a resource corresponding to the resource pool 1 belongs to the type 1 resource. The network device does not provide a configuration that a resource corresponding to the resource pool 2 belongs to the type 1 resource.

For example, the network device configures the second instruction information for the resource pool 1. For transmission related to the resource pool 1, when the foregoing second preset condition is met, the first terminal device can perform retransmission or new transmission by using the type 1 resource. The network device does not configure the second instruction information for the resource pool 2. For transmission related to the resource pool 2, when the foregoing second preset condition is met, the first terminal device cannot perform retransmission or new transmission by using the type 1 resource.

6. A HARQ process and/or a HARQ process ID are/is used as a granularity.

For example, that configuration is performed for each HARQ process may be understood as follows: Configuration may be separately performed for each HARQ process. Configuration is separately performed for a HARQ process 1 and a HARQ process 2, and the HARQ process 1 and the HARQ process 2 may have different configurations.

For example, the network device provides, for the first terminal device, a configuration that a resource corresponding to the HARQ process 1 belongs to the type 1 resource. The network device does not provide, for the first terminal device, a configuration that a resource corresponding to the HARQ process 2 belongs to the type 1 resource.

For example, the network device configures the second instruction information for the HARQ process 1. For transmission related to the HARQ process 1, when the foregoing second preset condition is met, the first terminal device can perform retransmission or new transmission by using the type 1 resource. The network device does not configure the second instruction information for the HARQ process 2. For transmission related to the HARQ process 2, when the foregoing second preset condition is met, the first terminal device cannot perform retransmission or new transmission by using the type 1 resource.

For example, that configuration is performed for each HARQ process ID may be understood as follows: Configuration may be separately performed for each HARQ process ID. Configuration is separately performed for a HARQ process ID 1 and a HARQ process ID 2, and the HARQ process ID 1 and the HARQ process ID 2 may have different configurations.

For example, the network device provides, for the first terminal device, a configuration that a resource corresponding to the HARQ process ID 1 belongs to the type 1 resource. The network device does not provide, for the first terminal device, a configuration that a resource corresponding to the HARQ process ID 2 belongs to the type 1 resource.

For example, the network device configures the second instruction information for the HARQ process ID 1. For transmission related to the HARQ process ID 1, when the foregoing second preset condition is met, the first terminal device can perform retransmission or new transmission by using the type 1 resource. The network device does not configure the second instruction information for the HARQ process ID 2. For transmission related to the HARQ process ID 2, when the foregoing second preset condition is met, the first terminal device cannot perform retransmission or new transmission by using the type 1 resource.

7. A cell is used as a granularity.

For example, that configuration is performed for each cell may be understood as follows: Configuration may be separately performed for each cell. Configuration is separately performed for a cell 1 and a cell 2, and the cell 1 and the cell 2 may have different configurations. For example, the network device provides a configuration that a resource corresponding to the cell 1 belongs to the type 1 resource. The network device does not provide a configuration that a resource corresponding to the cell 2 belongs to the type 1 resource. For example, configuration is performed by using a SIB.

For example, the network device configures the second instruction information for the cell 1. For transmission related to the cell 1, when the foregoing second preset condition is met, the first terminal device can perform retransmission or new transmission by using the type 1 resource. The network device does not configure the second instruction information for the cell 2. For transmission related to the cell 2, when the foregoing second preset condition is met, the first terminal device cannot perform retransmission or new transmission by using the type 1 resource.

8. An area is used as a granularity.

For example, that configuration is performed for each area may be understood as follows: Configuration may be separately performed for each area. Configuration is separately performed for an area 1 and an area 2, and the area 1 and the area 2 may have different configurations. For example, the network device provides a configuration that a resource corresponding to the area 1 belongs to the type 1 resource. The network device does not provide a configuration that a resource corresponding to the area 2 belongs to the type 1 resource. For example, configuration is performed by using a SIB. For example, the area may include one or more cells. The area may be an area to which an area-specific SIB belongs.

For example, the network device configures the second instruction information for the area 1. For transmission related to the area 1, when the foregoing second preset condition is met, the first terminal device can perform retransmission or new transmission by using the type 1 resource. The network device does not configure the second instruction information for the area 2. For transmission related to the area 2, when the foregoing second preset condition is met, the first terminal device cannot perform retransmission or new transmission by using the type 1 resource. For example, configuration is performed by using a SIB. For example, the area may include one or more cells. The area may be an area to which an area-specific SIB belongs.

Different instruction information/resources may have a same configuration granularity or different configuration granularities. A configuration granularity of same instruction information/a same resource may be a combination of the configuration granularities in the foregoing (1) to (8), for example, may be a combination of the configuration granularities in (1) and (2).

In a possible implementation, the first terminal device receives indication information 1 sent by the network device, where the indication information 1 is used to indicate that the first terminal device can request, from the network device, a resource used for retransmission on the sidelink. For example, when the first terminal device fails to perform transmission on the second sidelink grant, the first terminal device may send a negative acknowledgement to the network device, to request, from the network device, a resource used for retransmission in the first HARQ process. When receiving the negative acknowledgement, the network device may schedule a dynamic grant resource of the sidelink for the first terminal device, to retransmit the data in the first HARQ process. The first terminal device receives indication information 2 sent by the network device, where the indication information 2 is used to indicate that the first terminal device can perform retransmission on the sidelink by using the type 1 resource. For example, when the first terminal device fails to perform transmission on the second sidelink grant, the first terminal device may retransmit the data in the first HARQ process by using the type 1 resource. The second sidelink grant is associated with the first HARQ process ID, and the HARQ process corresponding to the first HARQ process ID may be referred to as the first HARQ process.

Optionally, the indication information 1 may be configured by the network device for the first terminal device (by using, for example, RRC signaling, a SIB, MAC signaling, physical layer signaling, DCI, or a PDCCH), may be preconfigured, or may be defined in a protocol. For content related to a configuration granularity of the indication information 1, refer to the description of the configuration granularity of the second instruction information. Details are not described herein again. For a specific meaning different from a meaning of the second instruction information in the embodiment shown in FIG. 3, refer to a meaning of the indication information 1.

Optionally, the indication information 2 may be configured by the network device for the first terminal device (by using, for example, RRC signaling, a SIB, MAC signaling, physical layer signaling, DCI, or a PDCCH), may be preconfigured, or may be defined in a protocol. For content related to a configuration granularity of the indication information 2, refer to the description of the configuration granularity of the second instruction information. Details are not described herein again. For a specific meaning different from a meaning of the second instruction information in the embodiment shown in FIG. 3, refer to a meaning of the indication information 2.

Optionally, that the first terminal device receives the indication information 1 and the indication information 2 that are sent by the network device, or the first terminal device receives the indication information 1 and the indication information 2 may be understood as follows: The first terminal device receives the second instruction information sent by the network device. 302. When the second preset condition is met, the first terminal device retransmits or newly transmits the data of the first HARQ process by using the first sidelink grant.

Optionally, when the second preset condition is met, the first terminal device retransmits the data of the first HARQ process on the sidelink by using the first sidelink grant. The first sidelink grant belongs to the type 1 resource.

Optionally, when the second preset condition is met, the first terminal device newly transmits the data of the first HARQ process on the sidelink by using the first sidelink grant. It may be understood that the terminal device uses the data of the first HARQ process as newly transmitted data, and transmits the data on the first sidelink grant.

The first HARQ process is a HARQ process in which the first terminal device does not successfully transmit data.

Optionally, the type 1 resource includes the first sidelink grant.

Specifically, when the second preset condition is met, the first terminal device may select the first sidelink grant from the type 1 resource, and then retransmit the data of the first HARQ process on the sidelink by using the first sidelink grant.

Optionally, the first terminal device may consider any one or more of the following factors when selecting the first sidelink grant:

1. A size of the sidelink grant. For example, it is determined whether the first sidelink grant can accommodate the data of the first HARQ process; and if the first sidelink grant can accommodate the data of the first HARQ process, the first sidelink grant may be considered to be selected to retransmit the data in the first HARQ process. For another example, it is determined whether the size of the first sidelink grant is greater than and/or equal to a size of the second sidelink grant; and if the size of the first sidelink grant is greater than and/or equal to the size of the second sidelink grant, the first sidelink grant may be considered to be selected to retransmit the data in the first HARQ process.

2. Whether data is to be transmitted on the sidelink grant. For example, if no packaged to-be-transmitted data exists on the first sidelink grant, the first terminal device may consider the first sidelink grant to be selected to retransmit the data in the first HARQ process.

3. A priority of data to be transmitted on the first sidelink grant and a priority of the data in the first HARQ process. For example, a priority of data originally to be transmitted on the first sidelink grant and the priority of the data of the first HARQ process are determined; and if the transmission priority of the data of the first HARQ process is higher, the first terminal device may consider the first sidelink grant to be selected to retransmit the data of the first HARQ process.

Optionally, the priority includes quality of service (quality of service, QoS) information, a proSe per packet priority (proSe per packet priority, PPPP) value, a priority of a logical channel in a MAC PDU, a priority of a highest-priority logical channel in a MAC PDU, or the like. For example, comparison may be performed based on priorities of logical channels on which the two pieces of data are located, or comparison may be performed based on logical channel priorities of the two pieces of data. A higher priority of a logical channel may be understood as a higher priority of data.

4. A time interval between the first sidelink grant and the second sidelink grant.

For example, it is determined, based on the time interval between the first sidelink grant and the second sidelink grant, whether to retransmit the data of the first HARQ process by using the first sidelink grant; and when the time interval is less than a first threshold, the first terminal device may consider the first sidelink grant to be selected to retransmit the data of the first HARQ process.

The first threshold may be preconfigured; configured by the network device for the first terminal device; specified in a communication protocol; determined by the network device according to a specific rule, where the network device notifies the first terminal device of the first threshold; or defined for the first terminal device at delivery. This is not specifically limited in this application.

5. Before, during, or after a time domain position of the first sidelink grant.

For example, when a start time domain position of the first sidelink grant is before that of another grant, that is, transmission time of the first sidelink grant is earlier than that of the another sidelink grant, the first terminal device may consider the first sidelink grant to be selected to retransmit the data in the first HARQ process.

6. A HARQ process ID associated with the first sidelink grant.

For example, when the HARQ process ID associated with the first sidelink grant is the same as the first HARQ process ID, the first terminal device may consider the first sidelink grant to be selected to retransmit the data in the first HARQ process.

Optionally, the HARQ process ID associated with the first sidelink grant may be obtained in any one or several of the following manners:

(a) a HARQ process ID determined by the first terminal device for the first sidelink grant according to a preset algorithm or a calculation manner indicated by the network device;

(b) a HARQ process ID that is associated with the first sidelink grant and that is indicated by the network device for the first terminal device; or

(c) a HARQ process ID determined by the first terminal device for the first sidelink grant.

7. A resource type of a resource used to initially transmit the data in the first HARQ process.

Specifically, the first terminal device may preferentially select a resource of a same resource type as a resource used to initially transmit or previously transmit the data in the first HARQ process. For example, the first terminal device performs initial transmission on the second sidelink grant, the second sidelink grant is associated with the first HARQ process ID, and the second sidelink grant is a configured grant resource. When the second preset condition is met, the first terminal device may consider the configured grant resource to be selected to retransmit the data in the first HARQ process.

8. Based on a QoS requirement of the data of the first HARQ process.

For example, when the first sidelink grant can meet the QoS requirement of the data of the first HARQ process, the first terminal device may consider the first sidelink grant to be selected to retransmit the data in the first HARQ process.

It should be noted that, a plurality of the foregoing consideration factors may be comprehensively considered when the first sidelink grant is determined. For example, the first terminal device may use, as a resource used to retransmit the data of the first HARQ process, a first sidelink grant that has a shortest time interval with the second sidelink grant, on which no data is originally to be transmitted, and that can accommodate the data of the first HARQ process. For another example, the first terminal device may use, as a resource used to retransmit the data of the first HARQ process, a first sidelink grant that has a shortest time interval with the second sidelink grant, whose priority of data originally to be transmitted is lower than the priority of the data of the first HARQ process, and that can accommodate the data of the first HARQ process.

Optionally, it should be noted that, if to-be-transmitted data originally exists on the first sidelink grant, and retransmission of the data transmitted on the second sidelink grant preempts a resource of the data originally to be newly transmitted on the first sidelink grant, the first terminal device may request a retransmission resource for the data originally to be newly transmitted on the first sidelink grant, or may continue to use the newly transmitted data as to-be-transmitted newly transmitted data. In this case, when the first terminal device requests a resource from the network device, a reported buffer status report (buffer status report, BSR) includes a size of the to-be-transmitted newly transmitted data.

Optionally, to ensure that both a high-priority service and a low-priority service can be transmitted, for a CG resource or a CG resource set, a retransmission proportion threshold or time threshold of the CG resource or the CG resource set may be set. In a period of time, if the proportion threshold or the time threshold is exceeded, the CG resource or the CG resource set cannot be used for retransmission anymore, so that retransmission of a high-priority service does not always preempt new transmission of a low-priority service.

For example, the proportion threshold or the time threshold may be preconfigured; configured by the network device for the first terminal device; specified in a communication protocol; determined by the network device according to a specific rule, where the network device notifies the first terminal device of the proportion threshold or the time threshold; or defined for the first terminal device at delivery. This is not specifically limited in this application.

Optionally, in this embodiment, when the type 1 resource includes a plurality of resource types, the first terminal device may first select one resource type, and then select the first sidelink grant with reference to the foregoing consideration factors about selecting the sidelink grant. Any one or several of the following factors may be considered for specific resource type selection:

1. A priority of the mode 1 resource of the sidelink is higher than or lower than a priority of the mode 2 resource of the sidelink.

For example, when the type 1 resource includes the mode 1 resource of the sidelink and the mode 2 resource of the sidelink, the first terminal device may preferentially select the mode 1 resource of the sidelink, and then select the first sidelink grant from the mode 1 resource of the sidelink. The first sidelink grant may be selected with reference to the foregoing consideration factors about selecting the first sidelink grant.

2. A priority of the dynamic grant resource of the sidelink is higher than or lower than a priority of the configured grant resource of the sidelink.

For example, when the type 1 resource includes the dynamic grant resource of the sidelink and the configured grant resource of the sidelink, the first terminal device may preferentially select the dynamic grant resource of the sidelink, and then select the first sidelink grant from the dynamic grant resource of the sidelink. The first sidelink grant may be selected with reference to the foregoing consideration factors about selecting the first sidelink grant.

3. A priority of the type 1 configured grant resource of the sidelink is higher than or lower than a priority of the type 2 configured grant resource of the sidelink.

4. A resource type of the second sidelink grant.

For example, the second sidelink grant is a resource used to previously transmit the data of the first HARQ process, and when the first sidelink grant is selected, a resource of the same resource type as the second sidelink grant may be preferentially selected. For example, when the resource type of the second sidelink grant is a DG resource, if a currently optional resource includes a DG or mode 1 resource, the DG or mode 1 resource is preferably selected as a resource type of the first sidelink grant.

5. Based on the QoS requirement of the data of the first HARQ process.

For example, a selected resource type is determined based on the QoS requirement of the data of the first HARQ process.

For example, when the QoS requirement of the data of the first HARQ process is lower than or higher than the second threshold, any one or more of the mode 1 resource of the sidelink, the mode 2 resource of the sidelink, the dynamic grant resource of the sidelink, the configured grant resource of the sidelink, the type 1 configured grant resource of the sidelink, and the type 2 configured grant resource of the sidelink are selected to retransmit the data of the first HARQ process.

The second threshold may be preconfigured; configured by the network device for the first terminal device; specified in a communication protocol; determined by the network device according to a specific rule, where the network device notifies the first terminal device of the second threshold; or defined for the first terminal device at delivery. This is not specifically limited in this application.

Optionally, the first terminal device retransmits or newly transmits the data of the first HARQ process on the sidelink by using the first sidelink grant. A third HARQ process ID associated with the first sidelink grant may be the same as or different from the first HARQ process ID.

Optionally, the third HARQ process ID associated with the first sidelink grant may be obtained in any one or several of the following manners:

(a) a HARQ process ID determined by the first terminal device for the first sidelink grant according to a preset algorithm or a calculation manner indicated by the network device;

(b) a HARQ process ID that is associated with the first sidelink grant and that is indicated by the network device for the first terminal device; or

(c) a HARQ process ID determined by the first terminal device for the first sidelink grant.

Optionally, for an implementation in which the first terminal device retransmits the data of the first HARQ process by using the first sidelink grant, if the third HARQ process ID associated with the first sidelink grant is different from the first HARQ process ID, the method may further include the following operation: 303. The first terminal device sends the first HARQ process ID to the second terminal device.

If the first HARQ process ID is different from the third HARQ process ID, the first terminal device sends the first HARQ process ID to the second terminal device, to notify the second terminal device that data retransmitted by using the first sidelink grant is retransmitted data of the first HARQ process, so that the second terminal device can successfully receive the retransmitted data.

Optionally, the first terminal device sends the first HARQ process ID to the second terminal device by using sidelink control information (sidelink control information, SCI).

Optionally, an NDI corresponding to the first HARQ process may be carried in the SCI, to be sent to the second terminal device. The first HARQ process and/or the first HARQ process ID associated with the first sidelink grant may be understood as follows: SCI corresponding to the first sidelink grant carries the first HARQ process ID.

Optionally, for an implementation in which the first terminal device newly transmits the data of the first HARQ process by using the first sidelink grant, if the third HARQ process ID associated with the first sidelink grant is different from the first HARQ process ID, the method may further include the following operation: 304. The first terminal device releases a HARQ process identified by the first HARQ process ID or flushes a HARQ buffer corresponding to a HARQ process identified by the first HARQ process ID.

The operation 304 is performed, so that the HARQ process identified by the first HARQ process ID can be prevented from being always occupied.

If a new data indicator (new data indicator, NDI) corresponding to the first HARQ process and/or the first HARQ process ID is not toggled, it indicates retransmission.

If an NDI corresponding to the first HARQ process and/or the first HARQ process ID is toggled, it indicates new transmission.

Optionally, the first HARQ process may be associated with any one or several of the first HARQ process ID, a first source address, a first destination address, or a communication type.

It should be noted that the foregoing operation 301, operation 302, and step 304 may constitute an embodiment. The foregoing operations 301 to 303 may constitute an embodiment. The foregoing operations 301 to 304 may constitute an embodiment.

In this embodiment of this application, the first terminal device receives the second instruction information from the network device, where the second instruction information is used to instruct to retransmit or newly transmit the data of the sidelink by using the type 1 resource when the second preset condition is met, and the type 1 resource includes the resource scheduled by the network device for the first terminal device and/or the resource selected, contended for, or sensed by the first terminal device; and the first terminal device retransmits or newly transmits the data of the first HARQ process by using the first sidelink grant when the second preset condition is met, where the type 1 resource includes the first sidelink grant, and the second preset condition includes any one or several of the following: The first terminal device does not obtain, within the first preset duration, a resource used for retransmission in the first HARQ process; the first terminal device does not obtain, when the first timer expires, a resource used for retransmission in the first HARQ process; before, on, or after the resource associated with the first HARQ process ID of the first HARQ process, the first terminal device does not obtain a resource used for retransmission in the first HARQ process; for any one or more of the first HARQ process, the first HARQ process ID, the second sidelink grant, the data transmitted in the first HARQ process, and the data transmitted on the second sidelink grant, the quantity of times the first terminal device sends a NACK to the network device does not reach the first preset threshold; transmission in the first HARQ process fails; or transmission on the second sidelink grant fails. Therefore, the first terminal device retransmits or newly transmits the data of the first HARQ process.

FIG. 4 is a schematic diagram of another embodiment of a communication processing method according to an embodiment of this application. The method includes the following steps.

401. A first terminal device generates fourth acknowledgement information when a fourth preset condition is met.

The fourth acknowledgement information is used to indicate that the first terminal device fails to perform transmission on a sidelink, is used to indicate that the first terminal device fails to perform transmission on a sixth sidelink grant, is used to indicate that the first terminal device fails to perform transmission in a HARQ process corresponding to a seventh HARQ process ID, is used to request, from a network device, a resource used to retransmit data of a sidelink, is used to request, from a network device, a resource used to retransmit data that fails to be transmitted on a sixth sidelink grant, or is used to request, from a network device, a resource used to retransmit data that fails to be transmitted in a HARQ process corresponding to a seventh HARQ process ID.

The sixth sidelink grant is associated with the seventh HARQ process ID. The HARQ process corresponding to the seventh HARQ process ID may be referred to as a seventh HARQ process.

Optionally, the seventh HARQ process ID associated with the sixth sidelink grant may be obtained in any one or several of the following manners:

   (a) a HARQ process ID determined by the first terminal device for the sixth sidelink grant according to a preset algorithm or a calculation manner indicated by the network device;
   (b) a HARQ process ID that is associated with the sixth sidelink grant and that is indicated by the network device for the first terminal device; or
   (c) a HARQ process ID determined by the first terminal device for the sixth sidelink grant.

Optionally, the fourth acknowledgement information may be a NACK.

The fourth preset condition includes any one or several of the following:

1. The first terminal device does not obtain, within third preset duration, a resource used for retransmission.

Optionally, the first terminal device does not obtain, within the third preset duration, a resource used for retransmission of (data of) the seventh HARQ process.

Optionally, the first terminal device does not obtain, within the third preset duration, a resource or a retransmission resource scheduled by the network device for the seventh HARQ process of the first terminal device.

Optionally, the first terminal device does not obtain, within the third preset duration, a resource or a retransmission resource that is for the seventh HARQ process and that is contended for, selected, or sensed by the first terminal device.

Optionally, the resource or the retransmission resource for the seventh HARQ process may be understood as a resource or a retransmission resource associated with the seventh HARQ process ID. The process corresponding to the seventh HARQ process ID may be referred to as a seventh HARQ process.

Optionally, the seventh HARQ process ID associated with the resource or the retransmission resource may be obtained in any one or several of the following manners:

(a) a HARQ process ID determined by the first terminal device for the resource or the retransmission resource according to a preset algorithm or a calculation manner indicated by the network device;
(b) a HARQ process ID that is associated with the resource or the retransmission resource and that is indicated by the network device for the first terminal device; or
(c) a HARQ process ID determined by the first terminal device for the resource or the retransmission resource.

In a possible implementation, if the first terminal device does not obtain, with the third preset duration started or restarted after a fourth condition is met, a resource used for retransmission in the seventh HARQ process, the first terminal device may send the fourth acknowledgement information to the network device. The fourth condition includes any one or several of the following:

a. When the first terminal device sends fifth acknowledgement information to the network device, or after the first terminal device sends fifth acknowledgement information to the network device.

Optionally, "when the first terminal device sends fifth acknowledgement information to the network device" may be understood as a moment at which the first terminal device sends the fifth acknowledgement information to the network device.

Optionally, "after the first terminal device sends fifth acknowledgement information to the network device" may be understood as a moment after a moment at which the first terminal device sends the fifth acknowledgement information to the network device.

b. Before, during, or after a time domain position of a fourth PUCCH resource.

Optionally, the sixth sidelink grant is associated with the fourth PUCCH resource.

Optionally, the fourth PUCCH resource is associated with any one or several of the seventh HARQ process ID, the seventh HARQ process, a resource corresponding to the seventh HARQ process ID, or a resource corresponding to the seventh HARQ process.

Optionally, the first terminal device sends fifth acknowledgement information on the fourth PUCCH resource.

c. When the first terminal device sends data on the sixth sidelink grant or after the first terminal device sends data on the sixth sidelink grant, or when the first terminal device sends, on the sixth sidelink grant, the data corresponding to the seventh HARQ process or after the first terminal device sends, on the sixth sidelink grant, the data corresponding to the seventh HARQ process.

Optionally, "when the first terminal device sends data on the sixth sidelink grant" may be understood as a moment at which the first terminal device sends the data on the sixth sidelink grant.

Optionally, "after the first terminal device sends data on the sixth sidelink grant" may be understood as a moment after a moment at which the first terminal device sends the data on the sixth sidelink grant.

Optionally, "when the first terminal device sends, on the sixth sidelink grant, the data corresponding to the seventh HARQ process" may be understood as a moment at which the first terminal device sends, on the sixth sidelink grant, the data corresponding to the seventh HARQ process.

Optionally, "after the first terminal device sends, on the sixth sidelink grant, the data corresponding to the seventh HARQ process" may be understood as a moment after a moment at which the first terminal device sends, on the sixth sidelink grant, the data corresponding to the seventh HARQ process.

d. Before, during, or after a time domain position of the sixth sidelink grant, where the sixth sidelink grant is associated with the seventh HARQ process.

Optionally, the sixth sidelink grant corresponds to a fourth PUCCH resource, and the first terminal device sends fifth acknowledgement information to the network device by using the fourth PUCCH resource.

Optionally, the first terminal device sends data on the sixth sidelink grant, or the first terminal device sends, on the sixth sidelink grant, the data corresponding to the seventh HARQ process.

e. The first terminal device receives a NACK for (the data of) the seventh HARQ process.

Optionally, the first terminal device receives a NACK from (sent by) a second terminal device.

Optionally, the NACK from (sent by) the second terminal device may be understood as feedback of a receiving status of the second terminal device, feedback of a receiving failure of the second terminal device, feedback of a receiving status of the second terminal device for (the data of) the seventh HARQ process, or feedback of a receiving failure of the second terminal device for (the data of) the seventh HARQ process. There is no limitation that the NACK is necessarily sent by the second terminal device.

Optionally, the first terminal device receives a NACK that is for the data of the seventh HARQ process and that is from (sent by) the second terminal device.

Optionally, the first terminal device receives, on a third PSFCH resource, on a third PSFCH occasion (occasion), or within third PSFCH duration, the NACK that is for the data of the seventh HARQ process and that is from (sent by) the second terminal device.

Optionally, the first terminal device sends data to the second terminal device on the sixth sidelink grant, or the first terminal device sends the data corresponding to the seventh HARQ process to the second terminal device on the sixth sidelink grant.

The sixth sidelink grant is associated with the seventh HARQ process ID, and the HARQ process corresponding to the seventh HARQ process ID may be referred to as a seventh HARQ process.

The third PSFCH resource, the third PSFCH occasion (occasion), or the third PSFCH duration is associated with any one or more of the sixth sidelink grant, the seventh HARQ process ID, and the seventh HARQ process.

Optionally, the first terminal device receives the NACK for (the data of) the seventh HARQ process.

Optionally, the first terminal device receives a NACK that is for the data of the seventh HARQ process and that is from (sent by) the second terminal device.

Optionally, the first terminal device receives, on the third PSFCH resource, the NACK that is for the data of the seventh HARQ process and that is sent by the second terminal device.

Optionally, the first terminal device sends data to the second terminal device on the sixth sidelink grant, or the first terminal device sends the data corresponding to the seventh HARQ process to the second terminal device on the sixth sidelink grant.

f. The first terminal device does not receive feedback for the seventh HARQ process.

Optionally, the first terminal device does not completely receive the NACK for the seventh HARQ process.

Optionally, the first terminal device does not receive feedback from (sent by) a second terminal device.

Optionally, the first terminal device does not receive feedback for (the data of) the seventh HARQ process.

Optionally, the feedback from (sent by) the second terminal device may be understood as feedback of a receiving status of the second terminal device, or feedback of a receiving status of the second terminal device for (the data of) the seventh HARQ process. There is no limitation that the feedback is necessarily sent by the second terminal device.

Optionally, the first terminal device does not receive, on a third PSFCH resource, on a third PSFCH occasion (occasion), or within third PSFCH duration, the feedback from (sent by) the second terminal device.

Optionally, the first terminal device does not receive, on the third PSFCH resource, on the third PSFCH occasion (occasion), or within the third PSFCH duration, feedback that is for the data of the seventh HARQ process and that is from (sent by) the second terminal device.

Optionally, the feedback may be an ACK or a NACK.

Optionally, the first terminal device sends data to the second terminal device on the sixth sidelink grant, or the first terminal device sends the data corresponding to the seventh HARQ process to the second terminal device on the sixth sidelink grant.

The sixth sidelink grant is associated with the third PSFCH resource, the third PSFCH occasion (occasion), or the third PSFCH duration.

The third PSFCH resource, the third PSFCH occasion (occasion), or the third PSFCH duration is associated with the seventh HARQ process ID and/or the seventh HARQ process.

For example, in a scenario, when the first terminal device communicates with other terminal devices (in, for example, a unicast or groupcast manner), and HARQ feedback is performed in an ACK/a NACK manner, the first terminal device sends data to the second terminal device on the sixth sidelink grant, where the sixth sidelink grant is associated with the seventh HARQ process and/or the seventh HARQ process ID; and if the first terminal device does not receive, on the third PSFCH resource, feedback from the second terminal device or the first terminal device does not receive feedback, the first terminal device considers that the second terminal device fails to perform receiving, where the third PSFCH resource is associated with any one or more of the sixth sidelink grant, the seventh HARQ process ID, and the seventh HARQ process.

g. Before, during, or after a time domain position of a third PSFCH resource, a third PSFCH occasion (occasion), or third PSFCH duration.

The third PSFCH resource, the third PSFCH occasion (occasion), or the third PSFCH duration is associated with any one or more of the sixth sidelink grant, the seventh HARQ process ID, and the seventh HARQ process.

Optionally, the first terminal device sends data to the second terminal device on the sixth sidelink grant, or the first terminal device sends the data corresponding to the seventh HARQ process to the second terminal device on the sixth sidelink grant.

Optionally, the second terminal device sends feedback to the first terminal device on the third PSFCH resource, or the second terminal device sends feedback corresponding to the seventh HARQ process to the first terminal device on the third PSFCH resource.

A length of the third preset duration may be preconfigured, may be configured by the network device for the first terminal device, or may be specified in a communication protocol. This is not specifically limited herein.

Optionally, the fifth acknowledgement information is used to indicate that the first terminal device fails to perform transmission on the sidelink, is used to indicate that the first terminal device fails to perform transmission on the sixth sidelink grant, is used to indicate that the first terminal device fails to perform transmission in the HARQ process corresponding to the seventh HARQ process ID, is used to request, from the network device, a resource used to retransmit the data of the sidelink, is used to request, from the network device, a resource used to retransmit the data that fails to be transmitted on the sixth sidelink grant, or is used to request, from the network device, a resource used to retransmit the data that fails to be transmitted in the HARQ process corresponding to the seventh HARQ process ID. The sixth sidelink grant is associated with the seventh HARQ process ID. The HARQ process corresponding to the seventh HARQ process ID may be referred to as a seventh HARQ process. Optionally, the fifth acknowledgement information may be a NACK.

Time counting of the third preset duration is stopped and/or reset when any one or more of the following conditions are met:

(1) The first terminal device obtains a resource used for retransmission.

Optionally, the first terminal device obtains a resource used for retransmission of (the data of) the seventh HARQ process.

Optionally, the resource used for retransmission of (the data of) the seventh HARQ process may be understood as a resource or a retransmission resource associated with the seventh HARQ process ID.

The HARQ process corresponding to the seventh HARQ process ID may be referred to as a seventh HARQ process.

Optionally, the first terminal device obtains a resource or a retransmission resource scheduled by the network device for the seventh HARQ process of the first terminal device.

Optionally, the first terminal device obtains a resource or a retransmission resource that is for the seventh HARQ process and that is contended for, selected, or sensed by the first terminal device.

Optionally, the resource or the retransmission resource for the seventh HARQ process may be understood as a resource or a retransmission resource associated with the seventh HARQ process ID.

The HARQ process corresponding to the seventh HARQ process ID may be referred to as a seventh HARQ process.

(2) Transmission corresponding to the third preset duration succeeds or is completed, or transmission corresponding to the seventh HARQ process succeeds or is completed.

Optionally, that transmission corresponding to the third preset duration succeeds or is completed, or transmission corresponding to the seventh HARQ process succeeds or is completed includes any one or several of the following cases:

(2-1) The first terminal device does not receive a NACK for the sidelink data and/or a NACK for the seventh HARQ process.

Optionally, this case is applicable to a unicast scenario and a groupcast scenario.

Optionally, this case is applicable to a case in which HARQ feedback is performed in a NACK only manner.

For example, in a scenario, when the first terminal device communicates with other terminal devices (in, for example, a unicast or groupcast manner), and HARQ feedback is performed in a NACK only manner, the first terminal device sends data to the other terminal devices by using the seventh HARQ process; and if the first terminal device does not receive NACKs or the first terminal device does not receive NACKs on occasions on which the other terminal devices perform feedback, the first terminal device considers that all the other terminal devices correctly receive the data.

(2-2) The first terminal device receives an ACK for the sidelink data and/or an ACK for the seventh HARQ process.

Optionally, the first terminal device receives all expected ACKs for the sidelink data and/or the seventh HARQ process.

Optionally, this case is applicable to a unicast scenario and a groupcast scenario.

Optionally, this case is applicable to a case in which HARQ feedback is performed in an ACK/a NACK manner.

For example, in a scenario, the first terminal device sends data to another terminal device by using the seventh HARQ process; and if the first terminal device receives an ACK or the first terminal device receives an ACK from the another terminal device, the first terminal device considers that the another terminal device correctly receives the data.

(2-3) The first terminal device receives an ACK for the sidelink data and/or an ACK for the seventh HARQ process, and does not receive a NACK for the sidelink data.

Optionally, this case is applicable to a unicast scenario and a groupcast scenario.

Optionally, this case is applicable to a case in which HARQ feedback is performed in an ACK/a NACK manner.

For example, in a scenario, when the first terminal device communicates with other terminal devices in a groupcast manner, and HARQ feedback is performed in an ACK/a NACK manner, the first terminal device sends data to the other terminal devices by using the seventh HARQ process; and if the first terminal device receives only ACKs or the first terminal device receives only ACKs from the other terminal devices, the first terminal device considers that all the other terminal devices correctly receive the data.

(2-4) Transmission of the sidelink data and/or transmission in the seventh HARQ process reach/-reaches a maximum quantity of transmission times or a maximum quantity of retransmission times.

(2-5) Transmission of the sidelink data and/or transmission in the seventh HARQ process reach/-reaches maximum transmission time, and the maximum transmission time may be duration of a timer or a time counter.

(2-6) For the sidelink data and/or the seventh HARQ process, the first terminal device feeds back an ACK to the network device. The ACK is used to indicate, to the network device, that transmission on the sidelink succeeds.

(2-7) The first terminal device discards the data corresponding to the seventh HARQ process, flushes a HARQ buffer corresponding to the seventh HARQ process, or releases the seventh HARQ process.

(2-8) The first terminal device receives a new transmission resource scheduled by the network device, and a HARQ process ID associated with the resource is the same as the seventh HARQ process ID.

For the foregoing cases (2-1) to (2-8), content that needs to be described includes the following: Optionally, the first terminal device sends the sidelink data to the second terminal device on the sixth sidelink grant, or the first terminal device sends the sidelink data corresponding to the seventh HARQ process to the second terminal device on the sixth sidelink grant.

Optionally, the sidelink data is associated with the third preset duration.

Optionally, the sidelink data is associated with the seventh HARQ process ID or the seventh HARQ process. The HARQ process corresponding to the seventh HARQ process ID may be referred to as a seventh HARQ process.

2. The first terminal device does not obtain, when a third timer expires, a resource used for retransmission.

Optionally, the first terminal device does not obtain, when the third timer expires, a resource used for retransmission of (data of) the seventh HARQ process.

Optionally, the resource used for retransmission of (the data of) the seventh HARQ process may be understood as a resource or a retransmission resource associated with the seventh HARQ process ID.

Optionally, the first terminal device does not obtain, when the third timer expires, a resource or a retransmission resource scheduled by the network device for the seventh HARQ process of the first terminal device.

Optionally, the first terminal device does not obtain, when the third timer expires, a resource or a retransmission resource that is for the seventh HARQ process and that is contended for, selected, or sensed by the first terminal device.

Optionally, the resource or the retransmission resource for the seventh HARQ process may be understood as a resource or a retransmission resource associated with the seventh HARQ process ID.

Optionally, the seventh HARQ process ID may be obtained in any one or several of the following manners:

(1) a HARQ process ID determined by the first terminal device for the retransmission resource according to a preset algorithm or a calculation manner indicated by the network device;
(2) a HARQ process ID that is associated with the retransmission resource and that is indicated by the network device for the first terminal device; or
(3) a HARQ process ID determined by the first terminal device for the retransmission resource.

In a possible implementation, the third timer is started or restarted when a fourth condition is met; and when the first terminal device does not obtain, when the third timer expires, a resource used for retransmission, the first terminal device may send the fourth acknowledgement information to the network device. For a specific form of the fourth condition, refer to the foregoing description. Content related to a condition of stopping and/or resetting the third timer is the same as that related to the condition of stopping and/or resetting time counting of the third preset duration. Refer to the foregoing description. Details are not described herein again.

Optionally, duration of the third timer may be preconfigured, may be configured by the network device for the first terminal device, or may be specified in a communication protocol. This is not specifically limited in this application.

3. Before, during, or after a time domain position of a resource associated with the seventh HARQ process ID, the first terminal device does not obtain a resource used for retransmission.

Optionally, before, on, or after one or M next resources associated with the seventh HARQ process ID, the first terminal device does not obtain a resource used for retransmission.

Optionally, before, on, or after the one or M next resources associated with the seventh HARQ process ID, the first terminal device does not obtain a resource used for retransmission of (data of) the seventh HARQ process.

The resource associated with the seventh HARQ process ID may be understood as a resource associated with a same HARQ process ID as the seventh HARQ process, a resource associated with a same HARQ process ID as the sixth sidelink grant, or a resource associated with the seventh HARQ process ID.

Before this, the first terminal device performs transmission on the sixth sidelink grant. The sixth sidelink grant is associated with the seventh HARQ process ID, and the HARQ process corresponding to the seventh HARQ process ID may be referred to as a seventh HARQ process.

Optionally, the first terminal device fails to perform transmission on the sixth sidelink grant.

Before, on, or after one or M next resources associated with the same seventh HARQ process and/or the same seventh HARQ process ID, the first terminal device does not obtain a resource or a retransmission resource scheduled by the network device for the seventh HARQ process of the first terminal device.

Before, on, or after one or M next resources associated with the same seventh HARQ process and/or the same seventh HARQ process ID, the first terminal device does not obtain a resource or a retransmission resource that is for the seventh HARQ process and that is contended for, selected, or sensed by the first terminal device.

Optionally, the resource or the retransmission resource for the seventh HARQ process may be understood as a resource or a retransmission resource associated with the seventh HARQ process ID.

Optionally, before, on, or after a fifth sidelink grant, the first terminal device does not obtain a resource used for retransmission. The first terminal device sends the fourth acknowledgement information to the network device by using a PUCCH resource corresponding to the fifth sidelink grant. Before the fifth sidelink grant, the first terminal device sends data on the sixth sidelink grant. The sixth sidelink grant is associated with the seventh HARQ process and/or the seventh HARQ process ID, and the fifth sidelink grant is also associated with the seventh HARQ process ID. The fifth sidelink grant is the first or $M^{th}$ resource, associated with the seventh HARQ process and/or the seventh HARQ process ID, after the sixth sidelink grant.

Optionally, before, on, or after the fifth sidelink grant, the first terminal device does not obtain a resource or a retransmission resource scheduled by the network device for the seventh HARQ process of the first terminal device.

Optionally, before, on, or after the fifth sidelink grant, the first terminal device does not obtain a resource or a retransmission resource that is for the seventh HARQ process and that is contended for, selected, or sensed by the first terminal device.

Optionally, after the first terminal device sends data on the sixth sidelink grant, the first terminal device does not obtain a resource used for retransmission. The fifth sidelink grant is associated with the seventh HARQ process ID and/or the seventh HARQ process. Before, on, or after the first or the $M^{th}$ sidelink grant resource associated with the seventh HARQ process ID, the first terminal device does not obtain a resource used for retransmission.

Optionally, the seventh HARQ process ID associated with the fifth sidelink grant may be obtained in any one or several of the following manners:

　　(a) a HARQ process ID determined by the first terminal device for the fifth sidelink grant according to a preset algorithm or a calculation manner indicated by the network device;
　　(b) a HARQ process ID that is associated with the fifth sidelink grant and that is indicated by the network device for the first terminal device; or
　　(c) a HARQ process ID determined by the first terminal device for the fifth sidelink grant.

Optionally, M is greater than or equal to 1. A value of M may be configured by the network device for the first terminal device, may be preconfigured, or may be defined in a protocol. This is not limited herein.

4. For any one or more of the seventh HARQ process, the seventh HARQ process ID, the sixth sidelink grant, data transmitted in the seventh HARQ process, and the data transmitted on the sixth sidelink grant, a quantity of times the first terminal device sends a NACK to the network device does not reach a third preset threshold.

The sixth sidelink grant is associated with the seventh HARQ process and/or the seventh HARQ process ID, and the first terminal device fails to perform transmission on the sixth sidelink grant.

Optionally, the NACK may include the fourth acknowledgement information and/or fifth acknowledgement information, or may include a NACK sent before or after the fourth acknowledgement information.

Optionally, the third preset threshold may be preconfigured, may be configured by the network device for the first terminal device, or may be specified in a communication protocol. This is not specifically limited herein.

5. For any one or more of the seventh HARQ process, the seventh HARQ process ID, the sixth sidelink grant, data transmitted in the seventh HARQ process, and the data transmitted on the sixth sidelink grant, a quantity of times the first terminal device sends a NACK to the network device reaches a third preset threshold.

Optionally, the NACK may be a negative acknowledgement (NACK).

Optionally, the NACK may include the second acknowledgement information, or may include a NACK sent before or after the second acknowledgement information.

Optionally, the first preset threshold may be preconfigured, may be configured by the network device for the first terminal device, or may be specified in a communication protocol. This is not specifically limited herein.

6. Transmission in the seventh HARQ process fails, or transmission on the sixth sidelink grant fails.

Optionally, the first terminal device fails to send data to a second terminal device in the seventh HARQ process, or the first terminal device fails to send data to a second terminal device on the sixth sidelink grant.

That transmission in the seventh HARQ process fails, or transmission on the sixth sidelink grant fails includes any one or several of the following:

(1) The first terminal device does not receive feedback for a receiving status of data in the seventh HARQ process and/or feedback for a receiving status of the data on the sixth sidelink grant.

Optionally, the first terminal device does not completely receive the feedback for the receiving status of the data in the seventh HARQ process and/or the feedback for the receiving status of the data on the sixth sidelink grant.

Optionally, this case is applicable to a unicast scenario and a groupcast scenario.

Optionally, this case is applicable to a case in which HARQ feedback is performed in an ACK/a NACK manner.

For example, in a scenario, the first terminal device sends data to another terminal device by using the seventh HARQ process; and if the first terminal device does not receive feedback or the first terminal device does not receive feedback from the another terminal device, the first terminal device considers that the another terminal device fails to receive the data.

(2) The first terminal device receives a fifth NACK for data in the seventh HARQ process and/or a fifth NACK for the data on the sixth sidelink grant.

Optionally, the sixth sidelink grant is associated with the seventh HARQ process ID. The HARQ process corresponding to the seventh HARQ process ID may be referred to as a seventh HARQ process.

The fifth NACK is used to indicate that the second terminal device does not successfully receive the data that is in the seventh HARQ process and that is sent by the first terminal device and/or the data that is on the sixth sidelink grant and that is sent by the first terminal device. Optionally, the NACK information may be a NACK.

Optionally, this case is applicable to a unicast scenario and a groupcast scenario.

Optionally, this case is applicable to a case in which HARQ feedback is performed in a NACK only manner and a case in which HARQ feedback is performed in an ACK/a NACK manner.

For example, in a scenario, the first terminal device sends data to another terminal device by using the seventh HARQ process; and if the first terminal device receives a NACK or the first terminal device receives a NACK from the another terminal device, the first terminal device considers that the another terminal device fails to receive the data.

(3) The first terminal device receives a third ACK sent by a third terminal device and a sixth NACK sent by a fourth terminal device.

The third ACK is used to indicate that the third terminal device successfully receives the data that is in the seventh HARQ process and that is sent by the first terminal device and/or the data that is on the sixth sidelink grant and that is sent by the first terminal device. Optionally, the third ACK information may be an ACK.

The sixth NACK is used to indicate that the fourth terminal device does not successfully receive the data that is in the seventh HARQ process and that is sent by the first terminal device and/or the data that is on the sixth sidelink grant and that is sent by the first terminal device. Optionally, the sixth NACK may be a NACK.

Optionally, the sixth sidelink grant is associated with the seventh HARQ process ID. The HARQ process corresponding to the seventh HARQ process ID may be referred to as a seventh HARQ process.

For example, this possible implementation is applied to a scenario in which the first terminal device performs groupcast, and the third terminal device and the fourth terminal device are groupcast objects. In this case, not all the groupcast objects of the first terminal device can receive the data in the seventh HARQ process and/or the data on the sixth sidelink grant.

Optionally, this case is applicable to a case in which HARQ feedback is performed in a NACK only manner and a case in which HARQ feedback is performed in an ACK/a NACK manner.

For example, in a scenario, the first terminal device sends data to other terminal devices by using the seventh HARQ process; and if the first terminal device receives a NACK and an ACK or the first terminal device receives a NACK and an ACK from the other terminal devices, the first terminal device considers that the other terminal devices fail to receive the data.

(4) The first terminal device sends NACK information to the network device.

Optionally, the first terminal device sends NACK information for any one or more of the seventh HARQ process, the seventh HARQ process ID, and the sixth sidelink grant to the network device.

Optionally, the NACK information may be a NACK.

The NACK information is used to indicate that the first terminal device fails to perform transmission on the sidelink, is used to indicate that the first terminal device fails to perform transmission on the sixth sidelink grant, is used to indicate that the first terminal device fails to perform transmission in the HARQ process corresponding to the seventh HARQ process ID, is used to request, from the network device, a resource used to retransmit the data of the sidelink, is used to request, from the network device, a resource used to retransmit the data that fails to be transmitted on the sixth sidelink grant, or is used to request, from the network device, a resource used to retransmit the data that fails to be transmitted in the HARQ process corresponding to the seventh HARQ process ID.

Optionally, the sixth sidelink grant is associated with the seventh HARQ process ID. The HARQ process corresponding to the seventh HARQ process ID may be referred to as a seventh HARQ process.

402. The first terminal device sends the fourth acknowledgement information to the network device.

Optionally, when the fourth preset condition is met, the first terminal device sends the fourth acknowledgement information to the network device by using a PUCCH resource corresponding to a third resource.

Optionally, that the first terminal device sends the fourth acknowledgement information to the network device includes: The first terminal device sends the fourth acknowledgement information to the network device by using the PUCCH resource corresponding to the fifth sidelink grant, and/or the first terminal device sends the fourth acknowledgement information to the network device by using a PUSCH resource.

Optionally, a HARQ process ID (for example, a ninth HARQ process ID) associated with the fifth sidelink grant is the same as a HARQ process ID (for example, the seventh HARQ process ID) associated with the sixth sidelink grant.

Optionally, the fifth sidelink grant or the PUCCH resource corresponding to the fifth sidelink grant is after the sixth sidelink grant.

Optionally, the fifth sidelink grant or the PUCCH resource corresponding to the fifth sidelink grant is used in the third preset duration or after the third preset duration, or when the third timer expires or after the third timer expires.

Optionally, the fifth sidelink grant may be the first or P<sup>th</sup> sidelink grant that meets a tenth condition and that is used when the fourth preset condition is met or after the fourth preset condition is met. The tenth condition includes any one or several of the following:

(1) The HARQ process ID (for example, the ninth HARQ process ID) associated with the fifth sidelink grant is the same as the HARQ process ID (for example, the seventh HARQ process ID) associated with the sixth sidelink grant.

For example, the fifth sidelink grant may be the first or P<sup>th</sup> sidelink grant, associated with a HARQ process ID that is the same as the HARQ process ID associated with the sixth sidelink grant, used after the third preset duration or after the third timer expires.

Optionally, P may be preconfigured, may be configured by the network device for the first terminal device, or may be specified in a communication protocol. This is not specifically limited herein.

(2) The first terminal device has a PUCCH resource, where the PUCCH resource is associated with the fifth sidelink grant.

Optionally, the fifth sidelink grant has a corresponding PUCCH resource.

Optionally, that the fifth sidelink grant has a corresponding PUCCH resource may be understood as follows: The first terminal device receives a PUCCH resource configured by the network device, or a PUCCH resource is configured for the first terminal device. The PUCCH resource corresponds to the fifth sidelink grant.

For example, the fifth sidelink grant is a PSSCH resource. Each PSSCH resource corresponds to one PUCCH resource, or a plurality of PSSCH resources correspond to one PUCCH resource. The following describes the two cases:

a. Each PSSCH resource corresponds to one PUCCH resource, in other words, there is a one-to-one correspondence between a PSSCH resource and a PUCCH resource. That is, the network device configures one PUCCH resource for each PSSCH resource. If the fourth preset condition is met, the first terminal device may send a NACK to the network device on the PUCCH resource corresponding to the PSSCH resource. Each PSSCH resource may be understood as each PSSCH resource for which a corresponding PUCCH resource is configured.

b. A plurality of PSSCH resources correspond to one PUCCH resource. That is, the network device configures a same PUCCH resource for a plurality of PSSCH resources. If the fourth preset condition is met, and the plurality of PSSCH resources are associated with a same HARQ process ID, the first terminal device may send a NACK to the network device on the PUCCH resource corresponding to the plurality of PSSCH resources. The plurality of PSSCH resources may be understood as a plurality of PSSCH resources for which a corresponding PUCCH resource is configured.

Optionally, in this embodiment, the first terminal device may further consider another factor when selecting the fifth sidelink grant. For a specific consideration factor, refer to the foregoing related description of the factor considered when the first terminal device selects the first sidelink grant in step 302 in the embodiment shown in FIG. 3. Details are not described herein again.

Optionally, the ninth HARQ process ID is a HARQ process ID determined by the first terminal device for the fifth sidelink grant according to a preset algorithm or a calculation manner indicated by the network device; or is a HARQ process ID that is associated with the fifth sidelink grant and that is indicated by the network device for the first terminal device.

Optionally, a type of the fifth sidelink grant includes any one or several of the following:

a resource of the sidelink;
a mode 1 resource of the sidelink;
a configured grant resource of the sidelink;
a type 1 configured grant resource of the sidelink;
a type 2 configured grant resource of the sidelink;
a dynamic grant resource of the sidelink; or
a configured grant resource set of the sidelink, where the configured grant resource set includes a configured grant resource corresponding to one or more configured grant resource indexes.

Optionally, before step 401 in the embodiment shown in FIG. 4, the method further includes step 401a: The first terminal device obtains fourth instruction information.

Optionally, the first terminal device receives the fourth instruction information sent by the network device.

The fourth instruction information is used to instruct the first terminal device to generate or send the fourth acknowledgement information when the fourth preset condition is met.

Optionally, the fourth instruction information is further used to instruct the first terminal device to send the fourth acknowledgement information to the network device by using the PUCCH resource corresponding to the third resource.

The third resource includes a resource scheduled by the network device for the first terminal device, and a type of the third resource includes any one or several of the following:

a resource of the sidelink;
a configured grant resource of the sidelink;
a dynamic grant resource of the sidelink;
a mode 1 resource of the sidelink;
a configured grant resource set of the sidelink, where the configured grant resource set includes a configured grant resource corresponding to one or more configured grant resource indexes;
a type 1 configured grant resource of the sidelink; or
a type 2 configured grant resource of the sidelink.

Optionally, the type of the fifth sidelink grant may be understood as a type to which the fifth sidelink grant belongs.

Optionally, for an explanation of a configuration granularity of the type of the fifth sidelink grant, refer to the explanation of the configuration granularity of the type of the type 1 resource in the embodiment shown in FIG. 3.

Details are not described herein again.

Optionally, the type of the third resource may be understood as a type to which the third resource belongs.

Optionally, for an explanation of a configuration granularity of the type of the third resource, refer to the explanation of the configuration granularity of the type of the type 1 resource in the embodiment shown in FIG. 3. Details are not described herein again.

Optionally, for an explanation of a configuration granularity of the fourth instruction information, refer to the explanation of the configuration granularity of the second instruction information in the embodiment shown in FIG. 3. Details are not described herein again. For a specific meaning different from a meaning of the second instruction information in the embodiment shown in FIG. 3, refer to a meaning of the fourth instruction information.

Optionally, the configuration granularity of the third resource may be different from or the same as the configuration granularity of the fourth instruction information.

In addition, when the third resource includes a plurality of resource types, first, the first terminal device selects one resource type, and then selects the fifth sidelink grant with reference to the foregoing consideration factors about selecting the sidelink grant. For a specific factor considered when the first terminal device selects the corresponding resource type from the plurality of resource types, refer to the related description in step 302 in the embodiment shown in FIG. 3. Details are not described herein again.

In a possible implementation, after sending the fourth acknowledgement information to the network device, when the fourth preset condition is met again, the first terminal device may continue to send a NACK to the network device.

Optionally, for any one or more of the seventh HARQ process, the seventh HARQ process ID, the sixth sidelink grant, the data transmitted in the seventh HARQ process, and the data transmitted on the sixth sidelink grant, when a quantity of times the first terminal device sends a NACK to the network device reaches the third preset threshold, and the first terminal device does not obtain a resource used for retransmission in the seventh HARQ process; or when a quantity of times the first terminal device sends a NACK to the network device reaches the third preset threshold and the fourth preset condition is met, the method further includes any one or more of the following:

1. The first terminal device discards the data of the seventh HARQ process.
2. The first terminal device releases the seventh HARQ process.
3. The first terminal device flushes the HARQ buffer corresponding to the seventh HARQ process.
4. The first terminal device stops sending or no longer sends a NACK to the network device.
5. The first terminal device retransmits or newly transmits the data on the sidelink by using a type 1 resource. For specific content, refer to the content in the embodiment corresponding to FIG. 3. Details are not described herein again.

Optionally, that a quantity of times the first terminal device sends a NACK to the network device reaches the third preset threshold, and the first terminal device does not obtain a resource used for retransmission in the seventh HARQ process may be understood as follows: When a quantity of times the first terminal device sends a NACK to the network device reaches the third preset threshold and the fourth preset condition is met, the first terminal device does not obtain a resource used for retransmission in the seventh HARQ process.

The operation 401a is an optional operation, that is, a device manufacturer may store content of the fourth instruction information in the terminal device before delivery of the terminal device. Alternatively, content of the fourth instruction information may be specified in a protocol or a standard. In this way, the network device does not need to send the fourth instruction information to the terminal device.

Optionally, before the first terminal device sends the fourth acknowledgement information to the network device, the method further includes: The first terminal device sends the fifth acknowledgement information to the network device when an eighth preset condition is met.

The eighth preset condition includes any one or several of the following:

1. The first terminal device does not receive feedback for a receiving status of the data in the seventh HARQ process and/or feedback for a receiving status of the data on the sixth sidelink grant.

Optionally, the first terminal device does not completely receive the feedback for the receiving status of the data in the seventh HARQ process and/or the feedback for the receiving status of the data on the sixth sidelink grant.

Optionally, this case is applicable to a case in which HARQ feedback is performed in an ACK/a NACK manner.

For example, in a scenario, the first terminal device sends data to another terminal device by using the seventh HARQ process; and if the first terminal device does not receive feedback or the first terminal device does not receive feedback from the another terminal device, the first terminal device considers that the another terminal device fails to receive the data.

2. The first terminal device receives fifth NACK information for the data in the seventh HARQ process and/or fifth NACK information for the data on the sixth sidelink grant, where the fifth NACK is used to indicate that the second terminal device does not successfully receive the data that is in the seventh HARQ process and that is sent by the first terminal device and/or the data that is on the sixth sidelink grant and that is sent by the first terminal device. Optionally, the fifth NACK may be a NACK.

Optionally, the sixth sidelink grant is associated with the seventh HARQ process ID. The HARQ process corresponding to the seventh HARQ process ID may be referred to as a seventh HARQ process.

Optionally, this case is applicable to a unicast scenario and a groupcast scenario.

Optionally, this case is applicable to a case in which HARQ feedback is performed in a NACK only manner and a case in which HARQ feedback is performed in an ACK/a NACK manner.

For example, in a scenario, the first terminal device sends data to another terminal device by using the seventh HARQ process; and if the first terminal device receives a NACK or the first terminal device receives a NACK from the another terminal device, the first terminal device considers that the another terminal device fails to receive the data.

3. The first terminal device receives a third ACK sent by a third terminal device and a sixth NACK sent by a fourth terminal device.

The third ACK is used to indicate that the third terminal device successfully receives the data of the seventh HARQ process, the sixth NACK is used to indicate that the fourth terminal device does not successfully receive the data of the seventh HARQ process, and the second terminal device includes the third terminal device and the fourth terminal device. Optionally, the third ACK may be an ACK, and the sixth NACK may be a NACK.

For example, this possible implementation is applied to a scenario in which the first terminal device performs groupcast, and the third terminal device and the fourth terminal device are groupcast objects. In this case, not all the groupcast objects of the first terminal device can receive the data of the seventh HARQ process. Therefore, the first terminal device sends the fifth acknowledgement information to the network device, to obtain a retransmission resource allocated by the network device, to retransmit the data of the seventh HARQ process.

Optionally, this case is applicable to a groupcast scenario.

Optionally, this case is applicable to a case in which HARQ feedback is performed in a NACK only manner and a case in which HARQ feedback is performed in an ACK/a NACK manner.

For example, in a scenario, the first terminal device sends data to other terminal devices by using the seventh HARQ process; and if the first terminal device receives a NACK and an ACK or the first terminal device receives a NACK and an ACK from the other terminal devices, the first terminal device considers that the other terminal devices fail to receive the data.

4. Transmission of the sidelink data and/or transmission in the fourth HARQ process do/does not reach a maximum quantity of transmission times or a maximum quantity of retransmission times.

5. Transmission of the sidelink data and/or transmission in the fourth HARQ process do/does not reach maximum transmission time, and the maximum transmission time may be duration of a timer or a time counter.

Optionally, the first terminal device may send the fourth acknowledgement information to the network device for a plurality of times, that is, send a NACK to the network device for a plurality of times.

The operation 401 is an optional operation, that is, the fourth instruction information may be a NACK previously sent by the first terminal device or a NACK previously generated by the first terminal device. When the fourth preset condition is met, the first terminal device does not need to generate the fourth acknowledgement information.

In this embodiment of this application, the first terminal device generates the fourth acknowledgement information when the fourth preset condition is met; and then, the first terminal device sends the fourth acknowledgement information to the network device, where the fourth preset condition includes any one or several of the following: The first terminal device does not obtain, within the third preset duration, a resource used for retransmission in the seventh HARQ process; the first terminal device does not obtain, when the third timer expires, a resource used for retransmission in the seventh HARQ process; before, on, or after a resource associated with a same HARQ process ID as the seventh HARQ process, the first terminal device does not obtain a resource used for retransmission in the seventh HARQ process; for any one or more of the seventh HARQ process, the seventh HARQ process ID, the sixth sidelink grant, the data transmitted in the seventh HARQ process, and the data transmitted on the sixth sidelink grant, a quantity of times the first terminal device sends a negative acknowledgement to the network device does not reach the third preset threshold; transmission in the seventh HARQ process fails; or transmission on the sixth sidelink grant fails. In this way, an opportunity in which the first terminal device feeds back a transmission status of the sidelink to the network device (for example, feeds back a NACK to a base station) is added, so that the network device can allocate a retransmission resource for the seventh HARQ process based on the received fourth acknowledgement information, to implement retransmission of the data of the seventh HARQ process.

FIG. 5A is a schematic diagram of another embodiment of a communication processing method according to an embodiment of this application. The method includes the following step:

501. A first terminal device performs any one or several of the following when a fifth preset condition is met:

(1) discarding data corresponding to a tenth HARQ process;
(2) flushing a HARQ buffer corresponding to a tenth HARQ process;
(3) releasing a tenth HARQ process; or
(4) deleting a correspondence related to a tenth HARQ process.

The correspondence related to the tenth HARQ process may be a correspondence between an eighth sidelink grant and an ID 2 of the tenth HARQ process, a correspondence between an ID 1 of the tenth HARQ process and an ID 2 of the tenth HARQ process, or a correspondence between the eighth sidelink grant, an ID 1 of the tenth HARQ process, and an ID 2 of the tenth HARQ process.

Optionally, the ID 1 of the tenth HARQ process is a HARQ process ID determined by the first terminal device for the eighth sidelink grant according to a preset algorithm or a calculation manner indicated by a network device; or is a HARQ process ID that is associated with the eighth sidelink grant and that is indicated by a network device for the first terminal device.

Optionally, the ID 2 of the tenth HARQ process is a HARQ process ID determined by the first terminal device for the eighth sidelink grant.

Optionally, a tenth HARQ process ID may include the ID 1 of the tenth HARQ process and/or the ID 2 of the tenth HARQ process, the tenth HARQ process ID for short in the subsequent embodiment.

The eighth sidelink grant is associated with the tenth HARQ process ID. A HARQ process corresponding to the tenth HARQ process ID may be referred to as the tenth HARQ process.

(5) Deleting a correspondence related to first SCI.

The first SCI is associated with a tenth HARQ process.

The correspondence related to the first SCI may be any one or several of the following:

(1) A correspondence between the first SCI and a receiving HARQ process (for example, a receiving HARQ process ID).
(2) A correspondence between a sending HARQ process ID in the first SCI and a receiving HARQ process (for example, a receiving HARQ process ID).
(3) A correspondence between a sending HARQ process ID and a source ID in the first SCI and a receiving HARQ process (for example, a receiving HARQ process ID). The correspondence may be used to distinguish between HARQ process IDs used by different sending terminal devices.
(4) A correspondence between a sending HARQ process ID, a source ID, and a destination ID in the first SCI and a receiving HARQ process (for example, a receiving HARQ process ID). A sending terminal device may use different source IDs when communicating with different receiving terminal devices, performing communication by using different connections, or communicating with different groups. Likewise, a receiving terminal device may also use different destination IDs to communicate with different sending terminal devices, perform communication by using different connections, or communicate with different groups. In this case, the correspondence may accurately indicate a source terminal device and a destination terminal device.

(5) A correspondence between a communication type (cast-type), a HARQ process ID in the first SCI, a source ID in the first SCI, a destination ID in the first SCI, and a receiving HARQ process (for example, a receiving HARQ process ID). When a receiving terminal device separately performs communication with different sending terminal devices in a unicast or groupcast manner, a same destination ID may be used for unicast communication and groupcast communication. The correspondence may be further used to distinguish between communication types. The communication type includes any one or several of the following: unicast, groupcast, or broadcast.

Optionally, the tenth HARQ process is a HARQ process in which the first terminal device does not successfully transmit data.

Optionally, the first terminal device fails to perform transmission on the eighth sidelink grant, or the first terminal device fails to perform transmission in the HARQ process corresponding to the tenth HARQ process ID.

Optionally, the first terminal device sends data to a second terminal device on the eighth sidelink grant, or the first terminal device sends the data corresponding to the tenth HARQ process to a second terminal device on the eighth sidelink grant.

Optionally, the fifth preset condition includes any one or several of the following:
Preset condition 1. The first terminal device does not obtain, within fourth preset duration, a resource used for retransmission.

The resource used for retransmission may include a resource scheduled by the network device for the first terminal device and/or a resource contended for, selected, or sensed by the first terminal device.

Optionally, the first terminal device does not obtain, within the fourth preset duration, a resource used for retransmission of (the data of) the tenth HARQ process.

Optionally, the resource used for retransmission of (the data of) the tenth HARQ process may be understood as a resource or a retransmission resource associated with the tenth HARQ process ID.

Optionally, the first terminal device does not obtain, within the fourth preset duration, a resource or a retransmission resource scheduled by the network device for the tenth HARQ process of the first terminal device.

Optionally, the first terminal device does not obtain, within the fourth preset duration, a resource or a retransmission resource that is for the tenth HARQ process and that is contended for, selected, or sensed by the first terminal device.

Optionally, the resource or the retransmission resource for the tenth HARQ process may be understood as a resource or a retransmission resource associated with the tenth HARQ process ID.

Specifically, in this possible implementation, the first terminal device is used as a sending terminal device. If the first terminal device does not obtain, within the fourth preset duration started or restarted after a first condition is met, a resource or a retransmission resource used in the tenth HARQ process, the first terminal device may perform any one or several of the following:

(1) discarding the data corresponding to the tenth HARQ process;
(2) flushing the HARQ buffer corresponding to the tenth HARQ process;
(3) releasing the tenth HARQ process; or
(4) deleting the correspondence related to the tenth HARQ process.

The first condition includes any one or several of the following:

a. When the first terminal device sends seventh acknowledgement information to the network device, or after the first terminal device sends seventh acknowledgement information to the network device.

Optionally, "when the first terminal device sends seventh acknowledgement information to the network device" may be understood as a moment at which the first terminal device sends the seventh acknowledgement information to the network device.

Optionally, "after the first terminal device sends seventh acknowledgement information to the network device" may be understood as a moment after a moment at which the first terminal device sends the seventh acknowledgement information to the network device.

The seventh acknowledgement information is used to indicate that the first terminal device fails to perform transmission on a sidelink, is used to indicate that the first terminal device fails to perform transmission on the eighth sidelink grant, is used to indicate that the first terminal device fails to perform transmission in the HARQ process corresponding to the tenth HARQ process ID, is used to request, from the network device, a resource used to retransmit data of a sidelink, is used to request, from the network device, a resource used to retransmit data that fails to be transmitted on the eighth sidelink grant, or is used to request, from the network device, a resource used to retransmit data that fails to be transmitted in the HARQ process corresponding to the tenth HARQ process ID.

Optionally, the seventh acknowledgement information may be a NACK.

b. Before, during, or after a time domain position of a fifth PUCCH resource.

Optionally, any one or more of the eighth sidelink grant, the tenth HARQ process, and the tenth HARQ process ID are associated with the fifth PUCCH resource. That the tenth HARQ process and/or the tenth HARQ process ID are/is associated with the fifth PUCCH resource may be understood as follows: A PUSCH resource and/or a sidelink grant associated with the fifth PUCCH resource are/is associated with the tenth HARQ process and/or the tenth HARQ process ID.

Optionally, the first terminal device sends seventh acknowledgement information on the fifth PUCCH resource.

Optionally, the seventh acknowledgement information is used to indicate that the first terminal device fails to perform transmission on a sidelink, is used to indicate that the first terminal device fails to perform transmission on the eighth sidelink grant, is used to indicate that the first terminal device fails to perform transmission in the HARQ process corresponding to the tenth HARQ process ID, is used to request, from the network device, a resource used to retransmit data of a sidelink, is used to request, from the network device, a resource used to retransmit data that fails to be transmitted on the eighth sidelink grant, or is used to request, from the network device, a resource used to retransmit data that fails to be transmitted in the HARQ process corresponding to the tenth HARQ process ID.

Optionally, the seventh acknowledgement information may be a NACK.

c. When the first terminal device sends data on the eighth sidelink grant or after the first terminal device sends data on the eighth sidelink grant, or when the first terminal device sends, on the eighth sidelink grant, the data corresponding to the tenth HARQ process or after the first terminal device sends, on the eighth sidelink grant, the data corresponding to the tenth HARQ process.

Optionally, "when the first terminal device sends data on the eighth sidelink grant" may be understood as a moment at which the first terminal device sends the data on the eighth sidelink grant.

Optionally, "after the first terminal device sends data on the eighth sidelink grant" may be understood as a moment after a moment at which the first terminal device sends the data on the eighth sidelink grant.

Optionally, "when the first terminal device sends, on the eighth sidelink grant, the data corresponding to the tenth HARQ process" may be understood as a moment at which the first terminal device sends, on the eighth sidelink grant, the data corresponding to the tenth HARQ process.

Optionally, "after the first terminal device sends, on the eighth sidelink grant, the data corresponding to the tenth HARQ process" may be understood as a moment after a moment at which the first terminal device sends, on the eighth sidelink grant, the data corresponding to the tenth HARQ process.

d. Before, during, or after a time domain position of the eighth sidelink grant resource.

Optionally, the eighth sidelink grant corresponds to a fifth PUCCH resource, and the first terminal device sends seventh acknowledgement information to the network device by using the fifth PUCCH resource.

Optionally, the first terminal device sends data on the eighth sidelink grant, or the first terminal device sends, on the eighth sidelink grant, the data corresponding to the tenth HARQ process.

e. The first terminal device receives a NACK for the tenth HARQ process.

Optionally, the first terminal device receives a NACK from (sent by) the second terminal device.

Optionally, the NACK from (sent by) the second terminal device may be understood as feedback of a receiving status of the second terminal device, feedback of a receiving failure of the second terminal device, feedback of a receiving status of the second terminal device for (the data of) the tenth HARQ process, or feedback of a receiving failure of the second terminal device for (the data of) the tenth HARQ process. There is no limitation that the NACK is necessarily sent by the second terminal device.

Optionally, the first terminal device receives a NACK for (the data of) the tenth HARQ process.

Optionally, the first terminal device receives a NACK that is for the data of the tenth HARQ process and that is from (sent by) the second terminal device.

Optionally, the first terminal device receives, on a fourth PSFCH resource, on a fourth PSFCH occasion (occasion), or within fourth PSFCH duration, the NACK that is for the data of the tenth HARQ process and that is from (sent by) the second terminal device.

Optionally, the first terminal device sends data on the eighth sidelink grant, or the first terminal device sends, on the eighth sidelink grant, the data corresponding to the tenth HARQ process.

The fourth PSFCH resource, the fourth PSFCH occasion (occasion), or the fourth PSFCH duration is associated with any one or more of the eighth sidelink grant, the tenth HARQ process ID, and the tenth HARQ process.

f. The first terminal device does not receive feedback for the tenth HARQ process.

Optionally, the first terminal device does not completely receive the feedback for the tenth HARQ process.

Optionally, the first terminal device does not receive feedback from (sent by) the second terminal device.

Optionally, the feedback from (sent by) the second terminal device may be understood as feedback of a receiving status of the second terminal device, or feedback of a receiving status of the second terminal device for (the data of) the tenth HARQ process. There is no limitation that the feedback is necessarily sent by the second terminal device.

Optionally, the first terminal device does not receive feedback for (the data of) the tenth HARQ process.

Optionally, the first terminal device does not receive feedback that is for the data of the tenth HARQ process and that is from (sent by) the second terminal device.

Optionally, the first terminal device does not receive, on a fourth PSFCH resource, on a fourth PSFCH occasion (occasion), or within fourth PSFCH duration, the feedback from (sent by) the second terminal device.

Optionally, the first terminal device does not receive, on the fourth PSFCH resource, on the fourth PSFCH occasion (occasion), or within the fourth PSFCH duration, the feedback that is for the data of the tenth HARQ process and that is from (sent by) the second terminal device.

Optionally, the feedback may be an ACK or a NACK.

The eighth sidelink grant is associated with the fourth PSFCH resource.

The fourth PSFCH resource, the fourth PSFCH occasion (occasion), or the fourth PSFCH duration is associated with the tenth HARQ process ID and/or the tenth HARQ process.

For example, in a scenario, when the first terminal device communicates with other terminal devices (in, for example, a unicast or groupcast manner), and HARQ feedback is performed in an ACK/a NACK manner, the first terminal device sends data to the second terminal device on the eighth sidelink grant, where the eighth sidelink grant is associated with the tenth HARQ process and/or the tenth HARQ process ID; and if the first terminal device does not receive feedback, or if the first terminal device does not receive, on the fourth PSFCH resource, feedback from the second terminal device, the first terminal device considers that the second terminal device fails to perform receiving, where the fourth PSFCH resource is associated with any one or more of the eighth sidelink grant, the tenth HARQ process ID, and the tenth HARQ process.

g. Before, during, or after a time domain position of a fourth PSFCH resource, a fourth PSFCH occasion (occasion), or fourth PSFCH duration.

The fourth PSFCH resource, the fourth PSFCH occasion (occasion), or the fourth PSFCH duration is associated with any one or more of the eighth sidelink grant, the tenth HARQ process ID, and the tenth HARQ process.

Optionally, the first terminal device sends data on the eighth sidelink grant, or the first terminal device sends, on the eighth sidelink grant, the data corresponding to the tenth HARQ process.

Optionally, the second terminal device sends feedback to the first terminal device on the fourth PSFCH resource, or the second terminal device sends feedback corresponding to the tenth HARQ process to the first terminal device on the fourth PSFCH resource.

Optionally, a length of the fourth preset duration may be preconfigured, may be configured by the network device for the first terminal device, or may be specified in a communication protocol. This is not specifically limited herein.

Time counting of the fourth preset duration is stopped and/or reset when a thirteenth condition is met. The thirteenth condition includes any one or several of the following:

(1) The first terminal device obtains a resource used for retransmission.

Optionally, the first terminal device obtains a resource used for retransmission of (the data of) the tenth HARQ process.

Optionally, the resource used for retransmission of (the data of) the tenth HARQ process may be understood as a resource or a retransmission resource associated with the tenth HARQ process ID.

A HARQ process corresponding to the tenth HARQ process ID may be referred to as the tenth HARQ process.

The resource used for retransmission of (the data of) the tenth HARQ process may include a resource scheduled by the network device for the tenth HARQ process of the first terminal device and/or a resource that is for the tenth HARQ process and that is contended for, selected, or sensed by the first terminal device.

Optionally, the first terminal device obtains a resource or a retransmission resource scheduled by the network device for the tenth HARQ process of the first terminal device.

Optionally, the first terminal device obtains a resource or a retransmission resource that is for the tenth HARQ process and that is contended for, selected, or sensed by the first terminal device.

Optionally, the resource or the retransmission resource for the tenth HARQ process may be understood as a resource or a retransmission resource associated with the tenth HARQ process ID.

(2) Transmission corresponding to the fourth preset duration succeeds or is completed, or transmission corresponding to the tenth HARQ process succeeds or is completed.

Optionally, that transmission corresponding to the fourth preset duration succeeds or is completed, or transmission corresponding to the tenth HARQ process succeeds or is completed includes any one or several of the following cases:

(2-1) The first terminal device does not receive a NACK for the sidelink data and/or a NACK for the tenth HARQ process.

Optionally, this case is applicable to a unicast scenario and a groupcast scenario.

Optionally, this case is applicable to a case in which HARQ feedback is performed in a NACK only manner.

For example, in a scenario, when the first terminal device communicates with other terminal devices in a groupcast manner, and HARQ feedback is performed in a NACK only manner, the first terminal device sends data to the other terminal devices by using the tenth HARQ process; and if the first terminal device does not receive NACKs or the first terminal device does not receive NACKs on occasions on which the other terminal devices perform feedback, the first terminal device considers that all the other terminal devices correctly receive the data.

(2-2) The first terminal device receives an ACK for the sidelink data and/or an ACK for the tenth HARQ process.

Optionally, the first terminal device receives all expected ACKs for the sidelink data and/or the tenth HARQ process.

Optionally, this case is applicable to a unicast scenario and a groupcast scenario.

Optionally, this case is applicable to a case in which HARQ feedback is performed in an ACK/a NACK manner.

For example, in a scenario, the first terminal device sends data to another terminal device by using the tenth HARQ process; and if the first terminal device receives an ACK or the first terminal receives an ACK from the another terminal device, the first terminal device considers that the another terminal device correctly receives the data.

(2-3) The first terminal device receives an ACK for the sidelink data and/or an ACK for the tenth HARQ process, and does not receive a NACK for the sidelink data.

Optionally, this case is applicable to a unicast scenario and a groupcast scenario.

Optionally, this case is applicable to a case in which HARQ feedback is performed in an ACK/a NACK manner.

In a scenario, when the first terminal device communicates with other terminal devices in a groupcast manner, and HARQ feedback is performed in an ACK/a NACK manner, the first terminal device sends data to the other terminal devices by using the tenth HARQ process; and if the first terminal device receives only ACKs or the first terminal device receives only ACKs from the other terminal devices, the first terminal device considers that all the other terminal devices correctly receive the data.

(2-4) Transmission of the sidelink data and/or transmission in the tenth HARQ process reach/reaches a maximum quantity of transmission times or a maximum quantity of retransmission times.

(2-5) Transmission of the sidelink data and/or transmission in the tenth HARQ process reach/reaches maximum transmission time, and the maximum transmission time may be duration of a timer or a time counter.

(2-6) For the sidelink data and/or the tenth HARQ process, the first terminal device feeds back an ACK to the network device. The ACK is used to indicate, to the network device, that transmission on the sidelink succeeds.

(2-7) The first terminal device discards the data corresponding to the tenth HARQ process, flushes the HARQ buffer corresponding to the tenth HARQ process. or releases the tenth HARQ process.

(2-8) The first terminal device receives a new transmission resource scheduled by the network device, and a HARQ process ID associated with the resource is the same as the tenth HARQ process ID.

For the foregoing cases (2-1) to (2-8), content that needs to be described includes the following:

Optionally, the first terminal device sends the sidelink data to the second terminal device on the eighth sidelink grant, or the first terminal device sends the sidelink data corresponding to the tenth HARQ process to the second terminal device on the eighth sidelink grant.

Optionally, the sidelink data is associated with the fourth preset duration.

Optionally, the sidelink data is associated with the tenth HARQ process ID.

The following describes the length of the fourth preset duration, including any one or several of the following possibilities:

a. The fourth preset duration is first duration, and the first duration is duration in which the first terminal device waits for a resource that is used for retransmission and that is scheduled by the network device for the first terminal device.

Optionally, the first duration is duration in which the first terminal device waits for a resource that is used for retransmission and that is scheduled by the network device for the tenth HARQ process of the first terminal device.

Optionally, the first duration may be duration of an eighth timer and/or duration of a first time counter.

b. The fourth preset duration is second duration, where the second duration is duration in which the first terminal device waits for the first terminal device to determine a resource used for retransmission and/or the first terminal device to contend for, select, or perceive a resource used for retransmission.

Optionally, the second duration is duration in which the first terminal device waits for the first terminal device to determine a resource used for retransmission of (the data of) the tenth HARQ process and/or the first terminal device to contend for, select, or perceive a resource used for retransmission of (the data of) the tenth HARQ process.

Optionally, the second duration may be duration of a ninth timer and/or duration of a second time counter.

c. The fourth preset duration is the first duration plus the second duration.

Optionally, the fourth preset duration may be the duration of the eighth timer plus the duration of the ninth timer. It may be understood as follows: The eighth timer is started or restarted at start or restart time of the fourth preset duration; the ninth timer is started or restarted when the eighth timer expires; and when the foregoing condition of stopping and/or resetting the fourth preset duration is met, the eighth timer is stopped and/or reset (if the eighth timer is running), and the ninth timer is stopped (if the ninth timer is running). The following describes, with reference to FIG. 5B, starting or restarting the eighth timer when the first condition is met, and starting the ninth timer when the eighth timer expires.

Optionally, the fourth preset duration may be the duration of the first time counter plus the duration of the second time counter. It may be understood as follows: The first time counter is started or restarted at start or restart time of the fourth preset duration; the second time counter is started or restarted when the first time counter expires; and when the foregoing condition of stopping and/or resetting the fourth preset duration is met, time counting of the first time counter is stopped and/or reset (if the first time counter is running), and time counting of the second time counter is stopped (if the second time counter is running).

d. The fourth preset duration is third duration, and the third duration is duration in which the first terminal device waits for a resource used for retransmission. The resource used for retransmission may include a resource scheduled by the network device for the first terminal device and/or a resource contended for, selected, or sensed by the first terminal device.

Optionally, the third duration is duration in which the first terminal device waits for a resource used for retransmission of (the data of) the tenth HARQ process.

Optionally, the third duration may be duration of a tenth timer and/or duration of a third time counter.

Optionally, it may be understood as follows: The third time counter is started or restarted at start or restart time of the fourth preset duration; and the third time counter is stopped and/or reset when the foregoing condition of stopping and/or resetting the fourth preset duration is met.

Optionally, it may be understood as follows: The tenth timer is started or restarted at start or restart time of the fourth preset duration; and the tenth timer is stopped and/or reset when the foregoing condition of stopping and/or resetting the fourth preset duration is met.

e. The fourth preset duration is third duration, and the third duration is duration in which the first terminal device waits for a resource used for retransmission. The resource used for retransmission may include a resource scheduled by the network device for the first terminal device and/or a resource contended for, selected, or sensed by the first terminal device. Duration in which the first terminal device waits for a resource that is used for retransmission and that is scheduled by the network device for the first terminal device is first duration. Optionally, the third duration is duration in which the first terminal device waits for a resource used for retransmission of (the data of) the tenth HARQ process.

Optionally, the first duration is less than or equal to the third duration.

Optionally, the third duration may be duration of a tenth timer and/or duration of a third time counter.

Optionally, the first duration may be duration of an eighth timer and/or duration of a first time counter.

Optionally, it may be understood as follows: The third time counter and the first time counter are started or restarted at start or restart time of the fourth preset duration; during running of the first time counter, the first terminal device waits for a resource that is used for retransmission and that is scheduled by the network device for the first terminal device; when or after the first time counter expires, during running of the third time counter, the first terminal device determines a resource used for retransmission and/or the first terminal device contends for, selects, or perceives a resource used for retransmission; and the third time counter and/or the first time counter are/is stopped and/or reset when the foregoing condition of stopping and/or resetting the fourth preset duration is met.

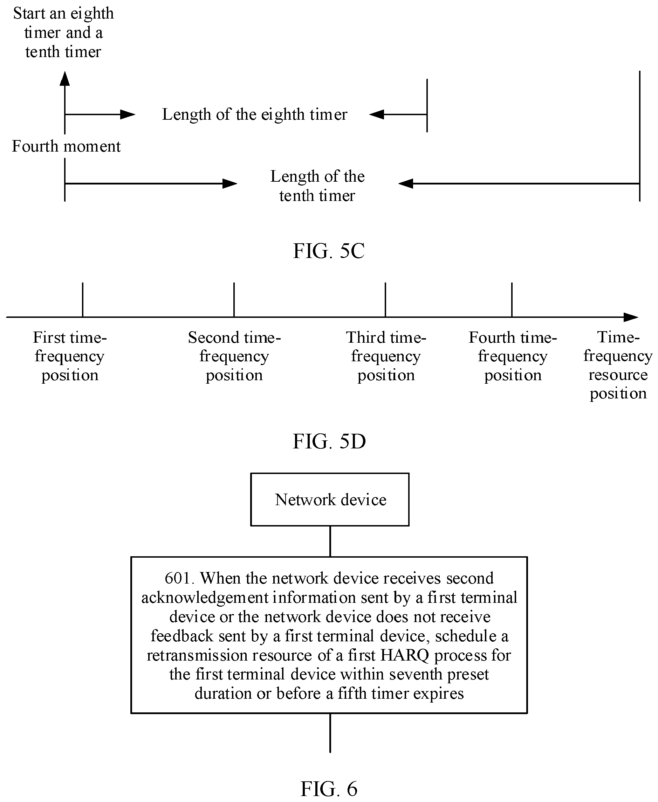

Optionally, it may be understood as follows: The tenth timer and the eighth timer are started or restarted at start or restart time of the fourth preset duration; during running of the eighth timer, the first terminal device waits for a resource that is used for retransmission and that is scheduled by the network device for the first terminal device; when or after the eighth timer expires, during running of the tenth timer, the first terminal device determines a resource used for retransmission and/or the first terminal device contends for, selects, or perceives a resource used for retransmission; and the tenth timer and/or the eighth timer are/is stopped and/or reset when the foregoing condition of stopping and/or resetting the fourth preset duration is met. Specifically, the following is described with reference to FIG. 5C: Both the eighth timer and the tenth timer are started or restarted when the first condition is met; during running of the eighth timer, the first terminal device waits for a resource that is used for retransmission and that is scheduled by the network device for the first terminal device; and when the eighth timer expires, during running of the tenth timer, the first terminal device determines a resource used for retransmission and/or the first terminal device contends for, selects, or perceives a resource used for retransmission, until the tenth timer expires.

Preset condition 2. The first terminal device does not obtain, when a thirteenth timer expires, a resource used for retransmission.

The resource used for retransmission may include a resource scheduled by the network device for the first terminal device and/or a resource contended for, selected, or sensed by the first terminal device.

Optionally, the first terminal device does not obtain, when the thirteenth timer expires, a resource used for retransmission of (the data of) the tenth HARQ process.

Optionally, the resource used for retransmission of (the data of) the tenth HARQ process may be understood as a resource or a retransmission resource associated with the tenth HARQ process ID.

Optionally, the first terminal device does not obtain, when the thirteenth timer expires, a resource or a retransmission resource scheduled by the network device for the tenth HARQ process of the first terminal device.

Optionally, the first terminal device does not obtain, when the thirteenth timer expires, a resource or a retransmission resource that is for the tenth HARQ process and that is contended for, selected, or sensed by the first terminal device.

Optionally, the resource or the retransmission resource for the tenth HARQ process may be understood as a resource or a retransmission resource associated with the tenth HARQ process ID.

Specifically, in this possible implementation, the first terminal device is used as a sending terminal device. The first terminal device starts or restarts the thirteenth timer when a first condition is met; and if the first terminal device does not obtain, when the thirteenth timer expires, a resource or a retransmission resource used in the tenth HARQ process, the first terminal device may perform any one or several of the following:

(1) discarding the data corresponding to the tenth HARQ process;
(2) flushing the HARQ buffer corresponding to the tenth HARQ process;
(3) releasing the tenth HARQ process; or
(4) deleting the correspondence related to the tenth HARQ process.

For specific content of the first condition, refer to the description of the first condition in the foregoing preset condition 1.

For a condition of stopping and/or resetting the thirteenth timer, refer to the condition of stopping and/or resetting time counting of the fourth preset duration in the foregoing preset condition 1. Details are not described herein again.

Optionally, a length of the thirteenth timer may be preconfigured, may be configured by the network device for the first terminal device, or may be specified in a communication protocol. This is not specifically limited herein.

Preset condition 3. A quantity of times the first terminal device sends seventh acknowledgement information or a NACK to the network device reaches a preset threshold.

Optionally, for any one or more of the tenth HARQ process, the tenth HARQ process ID, the eighth sidelink grant, the data transmitted in the tenth HARQ process, and data transmitted on the eighth sidelink grant, a quantity of times the first terminal device sends seventh acknowledgement information or a NACK to the network device reaches a fourth preset threshold.

Optionally, the fourth preset threshold may be preconfigured, may be configured by the network device for the first terminal device, or may be specified in a communication protocol. This is not specifically limited herein.

In this possible implementation, the first terminal device is used as a transmit end device, and the seventh acknowledgement information is used to indicate that the first terminal device fails to perform transmission on a sidelink, is used to indicate that the first terminal device fails to perform transmission on the eighth sidelink grant, is used to indicate that the first terminal device fails to perform transmission in the HARQ process corresponding to the tenth HARQ process ID, is used to request, from the network device, a resource used to retransmit data of a sidelink, is used to request, from the network device, a resource used to retransmit data that fails to be transmitted on the eighth sidelink grant, or is used to request, from the network device, a resource used to retransmit data that fails to be transmitted in the HARQ process corresponding to the tenth HARQ process ID.

Optionally, the seventh acknowledgement information may be a NACK.

Optionally, the NACK may include the seventh acknowledgement information, or may include a NACK sent before or after the seventh acknowledgement information.

Preset condition 4. A quantity of times the first terminal device receives a NACK reaches a fifth preset threshold.

Optionally, for any one or more of the tenth HARQ process, the tenth HARQ process ID, the eighth sidelink grant, the data transmitted in the tenth HARQ process, and data transmitted on the eighth sidelink grant, a quantity of times the first terminal device receives a NACK reaches the fifth preset threshold.

Optionally, for any one or more of the tenth HARQ process, the tenth HARQ process ID, the eighth sidelink grant, the data transmitted in the tenth HARQ process, and the data transmitted on the eighth sidelink grant, a quantity of times the first terminal device receives a NACK from (sent by) the second terminal device reaches the fifth preset threshold.

Optionally, the NACK from (sent by) the second terminal device may be understood as feedback of a receiving status of the second terminal device, feedback of a receiving failure of the second terminal device, feedback of a receiving status of the second terminal device for (the data of) the tenth HARQ process, or feedback of a receiving failure of the second terminal device for (the data of) the tenth HARQ process. There is no limitation that the NACK is necessarily sent by the second terminal device.

Optionally, the fifth preset threshold may be preconfigured, may be configured by the network device for the first terminal device, or may be specified in a communication protocol. This is not specifically limited herein.

In this possible implementation, the first terminal device is used as a sending terminal device, and the second terminal device is used as a receiving terminal device to receive first SCI and/or data corresponding to the first SCI that are/is sent by the first terminal device. The NACK is used to indicate that the second terminal device fails to receive data transmitted on a sidelink, is used to indicate that the second terminal device fails to receive the data transmitted on the eighth sidelink grant, is used to indicate that the second terminal device fails to receive data transmitted in the HARQ process corresponding to the tenth HARQ process ID, or is used to indicate that the second terminal device fails to receive the data corresponding to the first SCI.

When same data is transmitted for a plurality of times, SCI is transmitted for a plurality of times, and content in the SCI transmitted for the plurality of times may not be completely the same. For example, during initial transmission and retransmission, NDI indicators in the SCI may be different. Herein, SCI transmitted for a plurality of times for same data and/or a same HARQ process may be referred to as first SCI, and there is no limitation that content in the SCI transmitted for the plurality of times for the same data and/or the same HARQ process needs to be completely the same.

Preset condition 5. Before, on, or after a resource associated with the tenth HARQ process ID, the first terminal device does not obtain a resource used for retransmission.

Optionally, before, on, or after the resource associated with the tenth HARQ process ID, the first terminal device does not obtain a resource used for retransmission of (the data of) the tenth HARQ process.

Optionally, before, on, or after one or Q next resources associated with the tenth HARQ ID, the first terminal device does not obtain a resource used for retransmission.

Optionally, before, on, or after the one or Q next resources associated with the tenth HARQ process ID, the first terminal device does not obtain a resource used for retransmission of (the data of) the tenth HARQ process.

The resource associated with the tenth HARQ process ID may be understood as a resource associated with a same HARQ process ID as the tenth HARQ process, a resource associated with a same HARQ process ID as the eighth sidelink grant, or a resource associated with the tenth HARQ process ID.

Before this, the first terminal device performs transmission on the eighth sidelink grant.

Optionally, the first terminal device fails to perform transmission on the eighth sidelink grant.

Before, on, or after one or Q next resources associated with the same tenth HARQ process and/or the same tenth HARQ process ID, the first terminal device does not obtain a resource or a retransmission resource scheduled by the network device for the tenth HARQ process of the first terminal device.

Before, on, or after one or Q next resources associated with the same tenth HARQ process and/or the same tenth HARQ process ID, the first terminal device does not obtain a resource or a retransmission resource that is for the tenth HARQ process and that is contended for, selected, or sensed by the first terminal device.

Optionally, the resource or the retransmission resource for the tenth HARQ process may be understood as a resource or a retransmission resource associated with the tenth HARQ process ID.

Optionally, before, on, or after a ninth sidelink grant, the first terminal device does not obtain a resource used for retransmission. Before the ninth sidelink grant, the first terminal device sends data on the eighth sidelink grant, and the ninth sidelink grant is also associated with the tenth HARQ process ID. The ninth sidelink grant is the first or $Q^{th}$ resource, associated with the tenth HARQ process and/or the tenth HARQ process ID, after the eighth sidelink grant.

Optionally, before, on, or after the ninth sidelink grant, the first terminal device does not obtain a resource or a retransmission resource scheduled by the network device for the tenth HARQ process of the first terminal device.

Optionally, before, on, or after the ninth sidelink grant, the first terminal device does not obtain a resource or a retransmission resource that is for the tenth HARQ process and that is contended for, selected, or sensed by the first terminal device.

Optionally, after the first terminal device sends data on the eighth sidelink grant, the first terminal device does not obtain a resource used for retransmission. The eighth sidelink grant is associated with the tenth HARQ process ID. Before, on, or after the first or the $Q^{th}$ sidelink grant resource associated with the tenth HARQ process ID, the first terminal device does not obtain a resource used for retransmission.

Optionally, the tenth HARQ process ID associated with the ninth sidelink grant may be obtained in any one or several of the following manners:

(a) a HARQ process ID determined by the first terminal for the ninth sidelink grant according to a preset algorithm or a calculation manner indicated by the network device;

(b) a HARQ process ID that is associated with the ninth sidelink grant and that is indicated by the network device for the first terminal; or

(c) a HARQ process ID determined by the first terminal device for the ninth sidelink grant.

Optionally, Q is greater than or equal to 1. A value of Q may be configured by the network device for the first terminal device, may be preconfigured, or may be defined in a protocol. This is not limited herein.

Preset condition 6. The first terminal device does not receive, for L times, first SCI corresponding to the tenth HARQ process.

Optionally, the first terminal device does not receive, for L times, first SCI that corresponds to the tenth HARQ process and that is sent by the second terminal device.

In this possible implementation, the first terminal device is used as a receiving terminal device to receive first SCI and/or data corresponding to the first SCI that are/is sent by the second terminal device.

Optionally, the first terminal device does not receive, for L consecutive times, first SCI that corresponds to the tenth HARQ process and that is sent by the first terminal device.

Optionally, that the first SCI corresponding to the tenth HARQ process is not received may be understood as follows: The first SCI corresponding to the tenth HARQ process is not received at a determined or specified resource position (for example, the position may include resource time domain and/or frequency domain information). For example, as shown in FIG. 5D, a time-frequency position at which the second terminal device sends first SCI is determined. Herein, for example, the second terminal device sends first SCI at a first time-frequency position, a second time-frequency position, a third time-frequency position, and a fourth time-frequency position. The first terminal device receives, at these time-frequency positions, the first SCI and/or data corresponding to the first SCI that are/is sent by the second terminal device. If L is 3, it indicates that the first terminal device does not receive, at any one of the first time-frequency position, the second time-frequency position, and the third time-frequency position, first SCI and/or data corresponding to the first SCI that are/is sent by the second terminal device.

Optionally, that the first SCI that corresponds to the tenth HARQ process and that is sent by the first terminal device is not received may be understood as follows: The first SCI that corresponds to the tenth HARQ process and that is sent by the first terminal device is not received at a determined or specified resource position (for example, the position may include resource time domain and/or frequency domain information).

When same data is transmitted for a plurality of times, SCI is transmitted for a plurality of times, and content in the SCI transmitted for the plurality of times may not be completely the same. For example, during initial transmission and retransmission, NDI indicators in the SCI may be different. Herein, SCI transmitted for a plurality of times for same data and/or a same HARQ process may be referred to as first SCI, and there is no limitation that content in the SCI transmitted for the plurality of times for the same data and/or the same HARQ process needs to be completely the same.

Optionally, the first terminal device determines that the second terminal device may send first SCI on a fourth resource (for example, the resource may include resource time domain and/or frequency domain information). If the first terminal device does not receive first SCI on the fourth resource, the first terminal device does not receive first SCI on L fourth resources, or the first terminal device does not receive first SCI on L consecutive fourth resources, the first terminal device may consider that the second terminal device no longer sends first SCI and/or data corresponding to the first SCI, or the first terminal device may consider that transmission in the tenth HARQ process corresponding to the first SCI ends, and therefore the first terminal device can perform any one or several of the following:

(1) discarding the data corresponding to the tenth HARQ process;
(2) flushing the HARQ buffer corresponding to the tenth HARQ process;
(3) releasing the tenth HARQ process; or
(4) deleting the correspondence related to the first SCI.

L is greater than or equal to 1. A value of L may be configured by the network device for the first terminal device, may be preconfigured, or may be defined in a protocol. This is not limited herein.

Optionally, the fourth resource may be understood as a determined or specified resource position (for example, the position may include resource time domain and/or frequency domain information).

Optionally, the first terminal device may determine, based on any one or several of the following information, that the second terminal device may send first SCI on the fourth resource (for example, the resource may include the resource time domain and/or frequency domain information). The first terminal device may receive the first SCI at a time domain position of the fourth resource.

(1) First SCI received by the first terminal device. For example, the first terminal device has received the first SCI for three times, and the first SCI is periodic in time domain in the three times.
(2) A resource type corresponding to data corresponding to first SCI received by the first terminal device. For example, the first terminal device receives the first SCI, and data corresponding to the first SCI is sent on a configured grant resource of a sidelink.
(3) Information about resource reservation indicated in SCI received by the first terminal device. For example, the first terminal device receives the first SCI, data corresponding to the first SCI is sent on a mode 2 resource of a sidelink, and the first SCI indicates a quantity of reserved resources of the second terminal device and/or a quantity of remaining reserved resources of the second terminal device.

(4) Information about a maximum quantity of transmission times and/or a maximum quantity of retransmission times that are/is indicated in SCI received by the first terminal device.

Optionally, in this possible implementation, the first terminal device may determine, in any one or several of the following application scenarios, that the second terminal device may send first SCI on the fourth resource (for example, the resource may include the resource time domain and/or frequency domain information).

(1) The first terminal device receives first SCI, where data corresponding to the first SCI is sent on a configured grant resource (that may be referred to as the eighth sidelink grant) of a sidelink. The first terminal device determines that the second terminal device is to continue to transmit, on a following configured grant resource of a sidelink, the data corresponding to the first SCI. For example, the first terminal device determines that the second terminal device is to continue to transmit, on a configured grant resource that is of a sidelink and that is associated with a same HARQ process ID as the eighth sidelink grant, the data corresponding to the first SCI, or the first terminal device determines that the second terminal device is to continue to transmit, on the first or T$^{th}$ configured grant resource that is of the sidelink and that is after the eighth sidelink grant, the data corresponding to the first SCI. The first terminal device may determine that the second terminal device may send the first SCI on the fourth resource (for example, the resource may include the resource time domain and/or frequency domain information). The first terminal device may receive the first SCI at a position of the fourth resource. That is, the first terminal device may determine a position (for example, a time domain and/or frequency domain resource position) at which the second terminal device may send the first SCI.

Optionally, the configured grant resources of the sidelinks may be understood as configured grant resources of a same sidelink or different sidelinks.

Optionally, the second terminal device receives configuration information that is of the configured grant resource of the sidelink and that is sent by the first terminal device.

(2) The first terminal device periodically receives first SCI on a PSCCH resource, or the first terminal device periodically receives, on a PSSCH resource, data corresponding to first SCI.

For example, if the first terminal device periodically receives the first SCI on the PSCCH resource, or the first terminal device periodically receives, on the PSSCH resource, the data corresponding to the first SCI, the first terminal device may determine that the second terminal device may periodically send the first SCI and/or the data corresponding to the first SCI. The first terminal device may determine that the second terminal device may send the first SCI on the fourth resource (for example, the resource may include the resource time domain and/or frequency domain information). The first terminal device may receive the first SCI at a position of the fourth resource. That is, the first terminal device may determine a position (for example, a time domain and/or frequency domain resource position) at which the second terminal device may send the first SCI.

The position (for example, the time domain and/or frequency domain resource position) at which the second terminal device may send the first SCI and that is determined by the first terminal device may be periodic, or may not be periodic in time domain. This is not limited herein.

Preset condition 7. The first terminal device does not receive, within fifth preset duration, first SCI sent by the second terminal device or data that corresponds to first SCI and that is sent by the second terminal device.

When same data is transmitted for a plurality of times, SCI is transmitted for a plurality of times, and content in the SCI transmitted for the plurality of times may not be completely the same. For example, during initial transmission and retransmission, NDI indicators in the SCI may be different. Herein, SCI transmitted for a plurality of times for same data and/or a same HARQ process may be referred to as first SCI, and there is no limitation that content in the SCI transmitted for the plurality of times for the same data and/or the same HARQ process needs to be completely the same.

In this possible implementation, the first terminal device is used as a receiving terminal device to receive first SCI and/or data corresponding to the first SCI that are/is sent by the second terminal device.

The first SCI or the data corresponding to the first SCI is associated with the tenth HARQ process.

Optionally, the first SCI may include any one or more of a HARQ process ID, an NDI, a redundancy version (redundancy version, RV), a source ID (for example, a layer-1 source ID (Layer-1 source ID)), a destination ID (for example, a layer-1 destination ID (Layer-1 destination ID)), a communication type (for example, a cast type) indicator, and a resource configuration mode indicator (for example, a mode indicator). Any one or more pieces of content carried in the first SCI are associated with the tenth HARQ process. For example, a HARQ process is identified by using a HARQ process ID, a source ID, a destination ID, and a communication type indicator.

For example, the source ID may be used to identify a sending terminal device of unicast, groupcast, or broadcast communication. The destination ID may be used to identify a receiving terminal device of unicast, groupcast, or broadcast communication.

For example, the source ID and the destination ID may be used to identify unicast communication (in this case, the source ID may be an ID of a sending terminal device, and the destination ID may be an ID of a receiving terminal device) or groupcast communication (in this case, the source ID may be an ID of a sending terminal device, the destination ID may be a group ID, and receiving terminal devices are all terminal devices in a group).

For example, a destination ID may be used to identify broadcast communication. In this case, the destination ID may be a broadcast service identifier. In this case, receiving terminal devices are all terminal devices that receive broadcast service data.

For example, the communication type indicator is used to indicate a type of communication, for example, unicast, groupcast, or broadcast.

For example, the resource configuration mode indicator is used to indicate a configuration mode of a resource used for communication, for example, a mode (for example, a mode 1 or a mode 3) in which the network device schedules an SL transmission resource, or a mode (for example, a mode 2 or a mode 4) in which a sending terminal device determines an SL transmission resource.

Specifically, if the first terminal device does not receive, within the fifth preset duration started or restarted after a ninth condition is met, the first SCI sent by the second terminal device or the data that corresponds to the first SCI and that is sent by the second terminal device, the first terminal device may perform any one or several of the following:

(1) discarding the data corresponding to the tenth HARQ process;
(2) flushing the HARQ buffer corresponding to the tenth HARQ process;
(3) releasing the tenth HARQ process; or
(4) deleting the correspondence related to the first SCI.

The ninth condition includes any one or several of the following:

(1) The first terminal device receives the first SCI.
(2) The first terminal device receives the data corresponding to the first SCI.

In addition, time counting of the fifth preset duration is stopped and/or reset when a twelfth condition is met. The twelfth condition includes any one or several of the following:

a. The first terminal device successfully receives or successfully decodes the data corresponding to the first SCI.
b. The first terminal device sends an ACK (for example, acknowledgementacknowledge character, ACK) to the second terminal device. The ACK is used to indicate, to the second terminal device, that the first terminal device successfully receives the data.
c. A quantity of times the first terminal device receives the first SCI sent by the second terminal device or the data that corresponds to the first SCI and that is sent by the second terminal device reaches a maximum quantity of times, a maximum quantity of transmission times, or a maximum quantity of receiving times.
d. Duration in which the first terminal device receives the first SCI or the data corresponding to the first SCI is greater than or equal to sixth preset duration. It may be understood that the duration in which the first terminal device receives the first SCI or the data corresponding to the first SCI reaches maximum time, maximum receiving time, or maximum transmission time. The sixth preset duration may be duration of a time counter or a timer. The sixth duration may be configured by the network device for the first terminal device, may be preconfigured, or may be defined in a protocol. This is not limited herein.
e. The first terminal device receives the first SCI or the data corresponding to the first SCI, where the first SCI includes an indication of the last time of transmission.

Preset condition 8. The first terminal device does not obtain, when a fourth timer expires, first SCI sent by the second terminal device or data that corresponds to first SCI and that is sent by the second terminal device.

When same data is transmitted for a plurality of times, SCI is transmitted for a plurality of times, and content in the SCI transmitted for the plurality of times may not be completely the same. For example, during initial transmission and retransmission, NDI indicators in the SCI may be different. Herein, SCI transmitted for a plurality of times for same data and/or a same HARQ process may be referred to as first SCI, and there is no limitation that content in the SCI transmitted for the plurality of times for the same data and/or the same HARQ process needs to be completely the same.

In this possible implementation, the first terminal device is used as a receive end device, to receive first SCI and/or data corresponding to the first SCI that are/is sent by the second terminal device.

Specifically, the fourth timer is started or restarted when a ninth condition is met; and if the first terminal device does not receive, when the fourth timer expires, the first SCI sent by the second terminal device or the data that corresponds to the first SCI and that is sent by the second terminal device, the first terminal device may perform any one or several of the following:

(1) discarding the data corresponding to the tenth HARQ process;
(2) flushing the HARQ buffer corresponding to the tenth HARQ process;

(3) releasing the tenth HARQ process; or

(4) deleting the correspondence related to the first SCI.

Optionally, the fourth timer is stopped and/or reset when a third condition is met. For the twelfth condition, refer to the description in the foregoing preset condition 7. For the ninth condition, refer to the foregoing description of the ninth condition.

Preset condition 9. A quantity of times the first terminal device sends a NACK to the second terminal device reaches a sixth preset threshold.

Optionally, for any one or more of the tenth HARQ process, the first SCI, the tenth HARQ process ID, the eighth sidelink grant, the data transmitted in the tenth HARQ process, and data transmitted on the eighth sidelink grant, a quantity of times the first terminal device sends a NACK to the second terminal device reaches the sixth preset threshold.

Optionally, the sixth preset threshold may be preconfigured, may be configured by the network device for the first terminal device, or may be specified in a communication protocol. This is not specifically limited herein.

In this possible implementation, the first terminal device is used as a receiving terminal device to receive first SCI and/or data corresponding to the first SCI that are/is sent by the second terminal device.

In this possible implementation, the first terminal device is used as a receiving terminal device, and the NACK is used to indicate that the first terminal device fails to receive data transmitted on a sidelink, is used to indicate that the first terminal device fails to receive the data transmitted on the eighth sidelink grant, is used to indicate that the first terminal device fails to receive data transmitted in the HARQ process corresponding to the tenth HARQ process ID, or is used to indicate that the first terminal device fails to receive the data corresponding to the first SCI.

When same data is transmitted for a plurality of times, SCI is transmitted for a plurality of times, and content in the SCI transmitted for the plurality of times may not be completely the same. For example, during initial transmission and retransmission, NDI indicators in the SCI may be different. Herein, SCI transmitted for a plurality of times for same data and/or a same HARQ process may be referred to as first SCI, and there is no limitation that content in the SCI transmitted for the plurality of times for the same data and/or the same HARQ process needs to be completely the same.

It should be noted that, in the foregoing preset conditions 6 to 9, the first terminal device is used as a receiving terminal device, and the second terminal device is used as a sending terminal device. In the preset condition 6 to the preset condition 9, an eleventh timer may be configured in the second terminal device, and the second terminal device sends, before the eleventh timer expires, the first SCI or the data corresponding to the first SCI to the first terminal device; or twelfth preset duration may be configured in the second terminal device, and the second terminal device sends, within the twelfth preset duration, the first SCI or the data corresponding to the first SCI to the first terminal device.

A condition of starting or restarting the eleventh timer and/or the twelfth preset duration includes: The second terminal device sends the first SCI or sends the data corresponding to the first SCI.

Optionally, that the second terminal device sends the first SCI may be understood as a moment at which the second terminal device sends the first SCI.

Optionally, that the second terminal device sends the data corresponding to the first SCI may be understood as a moment at which the second terminal device sends the data corresponding to the first SCI.

Optionally, the eleventh timer and/or the twelfth preset duration are/is stopped and/or reset when an eleventh condition is met. The eleventh condition includes any one or several of the following:

(1) Data transmission associated with the tenth HARQ process is completed or ends. For example, in a scenario, when no HARQ feedback is performed, a quantity of times the second terminal device sends data to another terminal device by using the tenth HARQ process reaches a quantity of blind retransmission or repetition times.

(2) The second terminal device does not receive feedback for the tenth HARQ process.

Optionally, this case is applicable to a unicast scenario and a groupcast scenario.

Optionally, this case is applicable to a case in which HARQ feedback is performed in a NACK only manner.

For example, in a scenario, when the second terminal device communicates with other terminal devices in a groupcast manner, and HARQ feedback is performed in a NACK only manner, the second terminal device sends data to the other terminal devices by using the tenth HARQ process; and if the second terminal device does not receive NACKs or the second terminal device does not receive feedback information on occasions on which the other terminal devices perform feedback, the second terminal device considers that all the other terminal devices correctly receive the data.

(3) The second terminal device receives an ACK for the tenth HARQ process.

Optionally, this case is applicable to a unicast scenario and a groupcast scenario.

Optionally, this case is applicable to a case in which HARQ feedback is performed in an ACK and/or a NACK manner.

For example, in a scenario, the second terminal device sends data to another terminal device by using the tenth HARQ process; and if the second terminal device receives an ACK or the second terminal device receives an ACK from the another terminal device, the second terminal device considers that the another terminal device correctly receives the data.

Optionally, that the second terminal device receives an ACK for the tenth HARQ process may be understood as follows: The second terminal device receives only the ACK for the tenth HARQ process. For example, when the second terminal device communicates with other terminal devices in a groupcast manner, and HARQ feedback is performed in an ACK/a NACK manner, the second terminal device sends data to the other terminal devices by using the tenth HARQ process; and if the second terminal device receives only ACKs or the second terminal device receives only ACKs from the other terminal devices, the second terminal device considers that all the other terminal devices correctly receive the data.

(4) The second terminal device feeds back an ACK for the tenth HARQ process to the network device. For example, in a scenario, the second terminal device sends data to another terminal device by using the tenth HARQ process; and after determining that the data corresponding to the tenth HARQ process is successfully transmitted (for example, receiving an ACK, receiving no NACK, receiving an ACK from the another terminal device, or receiving no NACK from the another terminal device for the tenth HARQ process or the data transmitted in the tenth HARQ process), the second terminal device feeds back an ACK to the network device.

(5) Data transmission associated with the tenth HARQ process reaches maximum transmission time. For example, duration in which the second terminal device sends the first SCI or the data corresponding to the first SCI to the first terminal device is greater than or equal to tenth preset duration.

(6) Data transmission associated with the tenth HARQ process reaches a maximum quantity of transmission times and/or a maximum quantity of retransmission times. For example, a quantity of times the second terminal device sends the first SCI or the data corresponding to the first SCI to the first terminal device reaches the maximum quantity of transmission times.

(7) The second terminal device releases the tenth HARQ process.

(8) The second terminal device flushes the HARQ buffer corresponding to the HARQ process.

(9) The second terminal device deletes the correspondence related to the tenth HARQ process.

The first SCI or the data corresponding to the first SCI is associated with the tenth HARQ process.

In addition, duration of the eleventh timer or the twelfth preset duration may be W times duration of the fourth timer or the fifth preset duration, to avoid the following case: The second terminal device (a transmit end device) sends first SCI, but the first terminal device (a receive end device) does not receive the first SCI due to a channel condition, and therefore the first terminal device performs any one or several of the following:

    (1) discarding the data corresponding to the tenth HARQ process;
    (2) flushing the HARQ buffer corresponding to the tenth HARQ process;
    (3) releasing the tenth HARQ process; or
    (4) deleting the correspondence related to the first SCI.

Optionally, W may be preconfigured, may be configured by the network device for the second terminal device, or may be specified in a communication protocol. This is not specifically limited herein.

In a possible implementation, before step 1001, this embodiment further includes step 1002. In step 1002, the first terminal device receives sixth instruction information sent by the network device.

The sixth instruction information is used to instruct the first terminal device to perform any one or several of the following when the fifth preset condition is met:

    (1) discarding the data corresponding to the tenth HARQ process;
    (2) flushing the HARQ buffer corresponding to the tenth HARQ process;
    (3) releasing the tenth HARQ process;
    (4) deleting the correspondence related to the tenth HARQ process; or
    (5) deleting the correspondence related to the first SCI.

It should be noted that as described above, the sixth instruction information is used to instruct the first terminal device to discard the data corresponding to the tenth HARQ process, flush the HARQ buffer corresponding to the tenth HARQ process, release the tenth HARQ process, delete the correspondence related to the tenth HARQ process, or delete the correspondence related to the first SCI. In actual application, the instruction may be configured by the network device for the first terminal device, or may be specified in a communication protocol. This is not specifically limited in this application.

Optionally, for an explanation of a configuration granularity of the sixth instruction information, refer to the explanation of the configuration granularity of the second instruction information in the embodiment shown in FIG. 3. Details are not described herein again. For a specific meaning different from a meaning of the second instruction information in the embodiment shown in FIG. 3, refer to a meaning of the sixth instruction information.

In this embodiment of this application, the first terminal device performs any one or several of the following when the fifth preset condition is met: (1) discarding the data corresponding to the tenth HARQ process; (2) flushing the HARQ buffer corresponding to the tenth HARQ process; (3) releasing the tenth HARQ process;

(4) deleting the correspondence related to the tenth HARQ process; or (5) deleting the correspondence related to the first SCI, to prevent the tenth HARQ process from being meaninglessly occupied, thereby improving a data transmission capability of the first terminal device.

An embodiment of this application provides a communication processing method. FIG. 6 is a schematic diagram of a communication processing method according to an embodiment of this application. The method includes the following step:

601. When a network device receives second acknowledgement information sent by a first terminal device or a network device does not receive feedback sent by a first terminal device, the network device schedules a retransmission resource of a first HARQ process for the first terminal device within seventh preset duration or before a fifth timer expires.

Optionally, for the first HARQ process of the first terminal device, when the network device receives the second acknowledgement information sent by the first terminal device or the network device does not receive the feedback sent by the first terminal device, the network device schedules a retransmission resource of the first HARQ process for the first terminal device within the seventh preset duration or before the fifth timer expires.

In a possible implementation, the network device schedules a retransmission resource of the first HARQ process for the first terminal device within the seventh preset duration started or restarted after a sixth condition is met. The sixth condition includes any one or several of the following:

> (1) The network device receives the second acknowledgement information sent by the first terminal device.

Optionally, that the network device receives the second acknowledgement information sent by the first terminal device may be understood as a moment at which the network device receives the second acknowledgement information sent by the first terminal device.

Optionally, the second acknowledgement information is used to indicate that the first terminal device fails to perform transmission on a sidelink, is used to indicate that the first terminal device fails to perform transmission on a second sidelink grant, is used to indicate that the first terminal device fails to perform transmission in a HARQ process corresponding to a first HARQ process ID, is used to request, from the network device, a resource used to retransmit data of a sidelink, is used to request, from the network device, a resource used to retransmit data that fails to be transmitted on a second sidelink grant, or is used to request, from the network device, a resource used to retransmit data that fails to be transmitted in a HARQ process corresponding to a first HARQ process ID. The second sidelink grant is associated with the first HARQ process ID. The HARQ process corresponding to the first HARQ process ID may be referred to as the first HARQ process.

Optionally, the second acknowledgement information may be a NACK.

Optionally, the first HARQ process ID is a HARQ process ID determined by the first terminal device for the second sidelink grant according to a preset algorithm or a calculation manner indicated by the network device; or is a HARQ process ID that is associated with the second sidelink grant and that is indicated by the network device for the first terminal device.

(2) Before, during, or after a time domain position of a second PUCCH resource.

Optionally, for a specific explanation, refer to the content related to the second condition in step 301. Details are not described herein again.

(3) Before, during, or after a time domain position of a second sidelink grant, where the second sidelink grant is associated with the first HARQ process.

Optionally, for a specific explanation, refer to the content related to the second condition in step 301. Details are not described herein again.

(4) The network device does not receive acknowledgement information sent by the first terminal device.

Optionally, the network device does not receive, on a second PUCCH resource, the acknowledgement information sent by the first terminal device.

Optionally, the network device does not receive, on the second PUCCH resource, acknowledgement information that is for data of the first HARQ process and/or a second sidelink grant and that is sent by the first terminal device.

Optionally, the acknowledgement information may be an ACK or a NACK.

Optionally, the first terminal device sends data to a second terminal device on the second sidelink grant, or the first terminal device sends the data corresponding to the first HARQ process to a second terminal device on the second sidelink grant.

The second sidelink grant is associated with a first HARQ process ID, and a HARQ process corresponding to the first HARQ process ID may be referred to as the first HARQ process.

The second sidelink grant is associated with the second PUCCH resource.

The second PUCCH resource is associated with the first HARQ process ID and/or the first HARQ process.

For example, in a scenario, the network device configures the second sidelink grant for the first terminal device, and configures the second PUCCH resource corresponding to the second sidelink grant, where the second sidelink grant is associated with the first HARQ process ID. If the network device does not receive, on the second PUCCH resource, feedback from the first terminal device, the network device considers that the first terminal device fails to perform transmission on the second sidelink grant and/or fails to perform transmission in the first HARQ process, where the second PUCCH resource is associated with any one or more of the second sidelink grant, the first HARQ process ID, and the first HARQ process.

(5) Before, during, or after a time domain position of a first PSFCH resource, a first PSFCH occasion (occasion), or first PSFCH duration.

The first PSFCH resource, the first PSFCH occasion (occasion), or the first PSFCH duration is associated with any one or more of a second sidelink grant, a first HARQ process ID, and the first HARQ process.

For example, in a scenario, the network device configures the second sidelink grant for the first terminal device, and configures the second PUCCH resource and the first PSFCH resource that correspond to the second sidelink grant.

Optionally, the first terminal device sends data to a second terminal device on the second sidelink grant, or the first terminal device sends data corresponding to the first HARQ process to a second terminal device on the second sidelink grant.

The second sidelink grant is associated with the first HARQ process ID, and a HARQ process corresponding to the first HARQ process ID may be referred to as the first HARQ process.

Optionally, the second terminal device sends feedback to the first terminal device on the first PSFCH resource, or the second terminal device sends feedback corresponding to the first HARQ process to the first terminal device on the first PSFCH resource.

Optionally, the sixth condition may be the same as or different from the second condition.

Optionally, a length of the seventh preset duration may be preconfigured, may be configured by the network device for the first terminal device, or may be specified in a communication protocol. This is not specifically limited herein.

Optionally, the length of the seventh preset duration may be the same as or different from the length of the first preset duration.

Time counting of the seventh preset duration is stopped and/or reset when any one or more of the following conditions are met:

(1) The network device schedules, for the first terminal device, a resource used for retransmission.

Optionally, the network device schedules, for the first terminal device, a resource used for retransmission of (the data of) the first HARQ process.

Optionally, the resource used for retransmission of (the data of) the first HARQ process may be understood as a resource or a retransmission resource associated with the first HARQ process ID.

The HARQ process corresponding to the first HARQ process ID may be referred to as the first HARQ process.

(2) Transmission corresponding to the seventh preset duration succeeds or is completed, or transmission corresponding to the first HARQ process succeeds or is completed.

Optionally, that transmission corresponding to the seventh preset duration succeeds or is completed, or transmission corresponding to the first HARQ process succeeds or is completed includes any one or several of the following cases:

(2-1) The network device does not receive acknowledgement information (for example, a NACK) for the second sidelink grant and/or acknowledgement information (for example, a NACK) for the first HARQ process.

Optionally, the network device does not receive, on the second PUCCH resource, a NACK for the second sidelink grant and/or a NACK for the first HARQ process.

The second PUCCH resource is associated with the second sidelink grant and/or the first HARQ process.

For example, in a scenario, the network device configures the second sidelink grant for the first terminal device to retransmit the data in the first HARQ process, and configures the second PUCCH resource corresponding to the second sidelink grant; and the first terminal device does not give feedback to the network device when the first terminal device successfully performs transmission on the second sidelink grant, or the first terminal device feeds back a NACK to the network device when the first terminal device fails to perform transmission on the second sidelink grant.

Optionally, the second sidelink grant is associated with the first HARQ process ID. The HARQ process corresponding to the first HARQ process ID may be referred to as the first HARQ process.

Optionally, the second sidelink grant corresponds to the seventh preset duration.

Optionally, the first HARQ process corresponds to the seventh preset duration.

(2-2) The network device receives an ACK (for example, acknowledgementacknowledge character, ACK) for the second sidelink grant and/or an ACK (for example, acknowledgementacknowledge character, ACK) for the first HARQ process, where the ACK is used to indicate, to the network device, that transmission on the sidelink succeeds.

(2-3) Transmission corresponding to the seventh preset duration reaches maximum transmission time, and the maximum transmission time may be duration of a timer or a time counter.

(2-4) The network device schedules, for the first terminal device, a resource for new transmission, and a HARQ process ID associated with the resource is the same as the first HARQ process ID.

The HARQ process corresponding to the first HARQ process ID may be referred to as the first HARQ process.

Optionally, the first HARQ process ID associated with the new transmission resource may be obtained in any one or several of the following manners:

(a) a first HARQ process ID determined by the first terminal for the new transmission resource according to a preset algorithm or a calculation manner indicated by the network device;

(b) a first HARQ process ID that is associated with the new transmission resource and that is indicated by the network device for the first terminal; or

(c) a first HARQ process ID determined by the first terminal device for the new transmission resource.

In another possible implementation, the network device starts or restarts the fifth timer when a sixth condition is met; and the network device schedules, for the first terminal device before the fifth timer expires, a resource used for retransmission in the first HARQ process. For the sixth condition, refer to the foregoing description. Details are not described herein again. Content related to a condition of stopping and/or resetting the fifth timer is the same as that related to the condition of stopping and/or resetting time counting of the seventh preset duration. Refer to the foregoing description. Details are not described herein again.

Duration of the fifth timer may be preconfigured, configured by the network device, or specified in a communication protocol. This is not specifically limited in this application.

Optionally, the length of the fifth timer may be the same as or different from the length of the first timer.

In this possible implementation, a time counter or a timer is configured on a network device side. The network device stats time counting or timing when receiving the second acknowledgement information. The network device schedules, for the first terminal device within the seventh preset duration or before the fifth timer expires, a resource used for retransmission of (the data of) the first HARQ process. If the seventh preset duration is exceeded or the fifth timer expires, the network device no longer schedules, for the first terminal device, a resource used for retransmission of (the data of) the first HARQ process, to avoid the following case: After the seventh preset duration is exceeded or the fifth timer expires, the network device schedules, for the first terminal device, a resource used for retransmission of (the data of) the first HARQ process, but in this case, the first terminal device has determined to retransmit the data of the first HARQ process by using a first sidelink grant, thereby avoiding a waste of resources.

It should be noted that in the embodiment shown in FIG. 6, only a scenario of new transmission or retransmission of the data of the first HARQ process in the embodiment shown in FIG. 3 is used as an example to describe a technical solution, on the network device side, provided in this embodiment of this application. Optionally, the embodiment shown in FIG. 6 is also applicable to technical solutions, on the network device side, in the application scenario shown in FIG. 4 and the application scenario shown in FIG. 5A. In addition, for the application scenario shown in FIG. 4, the first HARQ process in the embodiment shown in FIG. 6 should be replaced with the seventh HARQ process. For the application scenario shown in FIG. 5A, the first HARQ process in the embodiment shown in FIG. 6 should be replaced with the tenth HARQ process. Optionally, the embodiment may also be used as a separate embodiment without being combined with the foregoing embodiment.

Currently, a network device may allocate a radio network temporary identity (Radio Network Temporary Identity, RNTI) to a terminal device, and the network device may scramble a PDCCH or DCI by using the RNTI, to schedule a resource or a retransmission resource for the terminal device, or activate, deactivate, reactivate, release, or reconfigure a resource.

For example, on a Uu interface, the network device allocates a cell-radio network temporary identity (Cell-Radio Network Temporary Identity, C-RNTI) to the terminal device. The C-RNTI is a unique identity of the terminal device in a cell, and may be used for RRC connection and scheduling. The network device may scramble a PDCCH or DCI by using the C-RNTI, to schedule a resource or a dynamic resource for the terminal device.

For example, on a Uu interface, the network device allocates a cell-radio network temporary identity (Cell-Radio Network Temporary Identity, C-RNTI) to the terminal device. For the terminal device, the C-RNTI is unique in a cell, and may be used for RRC connection and scheduling. The network device may scramble a PDCCH or DCI by using the C-RNTI, to schedule a resource, a retransmission resource, or a dynamic resource for the terminal device. That is, the terminal device may monitor, in a search space (for example, a specific search space or a common search space), the PDCCH or the DCI scrambled by using the C-RNTI, to obtain a resource scheduled by the network device for the terminal device. The resource is a dedicated resource of the terminal device, and the terminal device does not share the resource with another terminal device.

For example, on a Uu interface, the network device allocates a configured scheduling-radio network temporary identity (Configured Scheduling-Radio Network Temporary Identity, CS-RNTI) to the terminal device. For the terminal device, the CS-RNTI is unique in a cell, and may be used for semi-persistent scheduling of a downlink and configured grant scheduling of an uplink. The network device may scramble a PDCCH or DCI by using the CS-RNTI, to schedule a resource, a retransmission resource, or a dynamic resource for the terminal device, where the resource may be used for retransmission, or activate, deactivate, release, or reconfigure a resource (for example, a configured grant resource or a semi-persistent allocation resource) for the terminal device. That is, the terminal device may monitor, in a search space (for example, a specific search space or a common search space), the PDCCH or the DCI scrambled by using the CS-RNTI, to obtain a resource scheduled by the network device for the terminal device. The resource is a dedicated resource of the terminal device, and the terminal device does not share the resource with another terminal device.

Currently, on an SL, similar to the Uu interface, the network device allocates a unique RNTI (for example, an RNTI used for a configured grant resource of the sidelink, for example, an SLCS-RNTI; an RNTI used for a dynamic grant resource of the sidelink, for example, an SL-RNTI; an RNTI for NR-scheduled LTE SL SPS resource in a cross-RAT scheduling scenario, for example, an SL semi-persistent scheduling V-RNTI; or an RNTI used for a configured grant resource of the sidelink, for example, an SL semi-persistent scheduling V-RNTI) in a cell to the terminal device. The RNTI is used to schedule a resource, a retransmission resource, or a dynamic resource, or is used to activate, deactivate, reactivate, release, or reconfigure a resource. That is, any resource scheduled for the terminal device or any resource activated, deactivated, reactivated, released, or reconfigured by the network device by using a PDCCH or DCI scrambled by using the RNTI is a dedicated resource of the terminal device, and the terminal device does not share the resource with another terminal device. When the terminal device does not use the resource, another terminal device cannot use the resource, causing a waste of resources and affecting resource utilization.

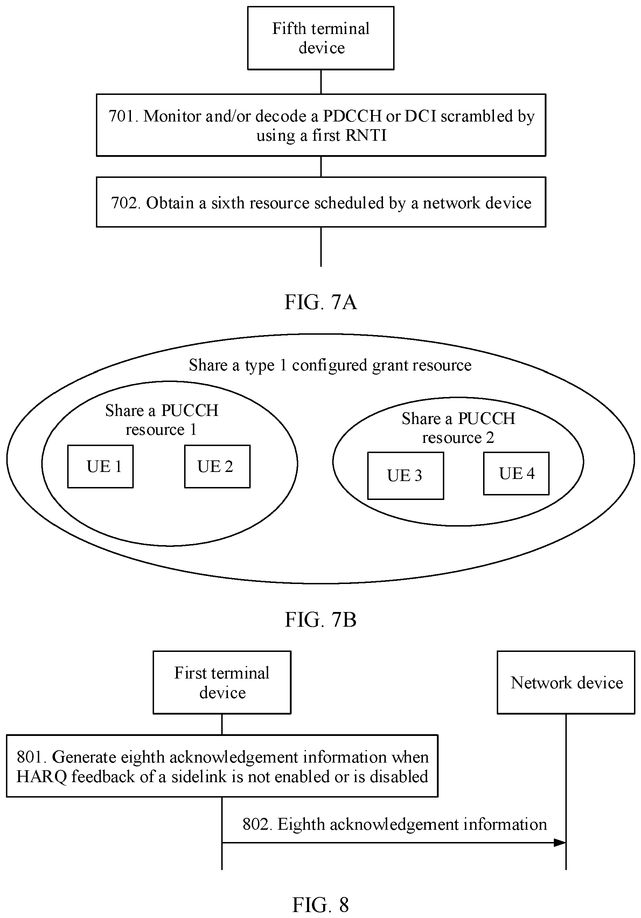

In view of this, an embodiment of this application provides a communication processing method. The following describes the communication processing method with reference to FIG. 7A. FIG. 7A is a schematic diagram of another embodiment of a communication processing method according to an embodiment of this application. The method includes the following steps.

701. A fifth terminal device monitors and/or decodes a PDCCH or DCI scrambled by using a first RNTI.

Optionally, the PDCCH or the DCI scrambled by using the first RNTI may be a PDCCH or DCI with CRC scrambled by using the first RNTI (for example, a PDCCH with scrambled by the first RNTI).

Optionally, the DCI may be understood as a DCI format.

Optionally, the fifth terminal device receives first information from a network device, a higher layer, or an upper layer, where the first information is used to instruct and/or configure the fifth terminal device to monitor and/or decode the PDCCH or the DCI scrambled by using the first RNTI.

Optionally, that the fifth terminal device receives first information from a network device, a higher layer, or an upper layer may be understood as follows: The network device, the higher layer, or the upper layer configures the fifth terminal device to monitor and/or decode the PDCCH or the DCI scrambled by using the first RNTI.

Optionally, the higher layer or the upper layer may be understood as a higher layer or an upper layer of the fifth terminal device, for example, an RRC layer, a MAC layer, a PDCP layer, an RLC layer, or an SDAP layer of the fifth terminal device.

Optionally, the first information may be configured by the network device for the first terminal device (by using, for example, RRC signaling, a SIB, MAC signaling, physical layer signaling, DCI, or a PDCCH) or configured by the higher layer or the upper layer for the fifth terminal device, may be preconfigured, or may be defined in a protocol. The configuration may be performed for a configured grant resource index (for example, a CG index) resource of each sidelink (for example, configuration may be separately performed for a CG 1 and a CG 2), a configured grant resource (for example, a CG resource) of a sidelink, a type 1 configured grant resource (for example, a CG type 1 resource) of a sidelink, a type 2 configured grant resource (for example, a CG type 2 resource) of a sidelink, a configured grant resource set of each sidelink, a dynamic grant resource (for example, a DG 1) of each sidelink, a dynamic grant resource of a sidelink, a mode 1 resource of a sidelink, or a mode 2 resource of a sidelink; a configured grant resource index (for example, a CG index) resource of each uplink (for example, configuration may be separately performed for a CG 1 and a CG 2), a configured grant resource (for example, a CG resource) of an uplink, a type 1 configured grant resource (for example, a CG type 1 resource) of an uplink, a type 2 configured grant resource (for example, a CG type 2 resource) of an uplink, a configured grant resource set of each uplink, a dynamic grant resource (for example, a DG 1) of each uplink, a dynamic grant resource of an uplink, or a resource of an uplink; or a semi-persistent allocation resource index (for example, an SPS index) resource of each downlink (for example, configuration may be separately performed for SPS 1 and SPS 2), a semi-persistent allocation resource (for example, an SPS resource) of a downlink, a semi-persistent allocation resource set of each downlink, a dynamic allocation resource (for example, a DG 1) of each downlink, a dynamic allocation resource of a downlink, or a resource of a downlink; or may be performed for each UE, each HARQ process ID or HARQ process, each LCH, each LCG, each SLRB, each resource pool (resource pool), each cell, or each area.

Optionally, for an explanation of a configuration granularity of the first information, refer to the explanation of the configuration granularity of the second instruction information in the embodiment shown in FIG. 3. Details are not described herein again. For a specific meaning different from a meaning of the second instruction information in the embodiment shown in FIG. 3, refer to a meaning of the first information.

Optionally, the fifth terminal device monitors and/or decodes the PDCCH or the DCI scrambled by using the first RNTI, to obtain a sixth resource scheduled by the network device for the fifth terminal device.

Optionally, scheduled may be understood as any one or several of activated, deactivated, reactivated, released, and reconfigured.

Optionally, the network device schedules the sixth resource for the fifth terminal device by using the PDCCH or the DCI scrambled by the first RNTI.

Optionally, the network device schedules, activates, deactivates, reactivates, releases, or reconfigures the sixth resource for the fifth terminal device by using the PDCCH or the DCI scrambled by the first RNTI.

Optionally, the sixth resource may be a resource used for new transmission, or may be a resource used for retransmission. The sixth resource may not be a dedicated resource of the fifth terminal device, and the fifth terminal device and another terminal device may share the sixth resource. For example, the network device schedules the sixth resource for both the fifth terminal device and a sixth terminal device by using the PDCCH or the DCI scrambled by the first RNTI, and the sixth resource may be shared between the fifth terminal device and the sixth terminal device.

The sixth resource may include any one or several of the following resources:

(1) a resource of a sidelink;
(2) a mode 1 resource of a sidelink;
(3) a configured grant resource of a sidelink;
(4) a type 2 configured grant resource of a sidelink;
(5) a dynamic grant resource of a sidelink;
(6) a resource of an uplink;
(7) a configured grant resource of an uplink;
(8) a type 2 configured grant resource of an uplink;
(9) a dynamic grant resource of an uplink;
(10) a resource of a downlink;
(11) a semi-persistent allocation resource of a downlink; or
(12) a dynamic allocation resource of a downlink.

For example, the sixth resource may be a resource used for retransmission (for example, any one or more of a dynamic grant resource of a sidelink, a dynamic grant resource of an uplink, or a dynamic allocation resource of a downlink), and may be used for retransmission of data that fails to be transmitted on a seventh resource. The seventh resource may include any one or several of the following resources:

(1) a resource of a sidelink;
(2) a mode 1 resource of a sidelink;
(3) a configured grant resource of a sidelink;
(4) a type 1 configured grant resource of a sidelink;
(5) a type 2 configured grant resource of a sidelink;
(6) a dynamic grant resource of a sidelink;
(7) a resource of an uplink;
(8) a configured grant resource of an uplink;
(9) a type 1 configured grant resource of an uplink;
(10) a type 2 configured grant resource of an uplink;
(11) a dynamic grant resource of an uplink;
(12) a resource of a downlink;
(13) a semi-persistent allocation resource of a downlink; or

(14) a dynamic allocation resource of a downlink.

The first RNTI is used to schedule a resource, or is used by the network device to schedule a resource for the fifth terminal device. The first RNTI may not be a unique identifier of the fifth terminal device. Another terminal device may also use the RNTI. The network device may also schedule a resource for another terminal device by using the first RNTI. For example, the network device schedules a resource for the fifth terminal device and the sixth terminal device by using the first RNTI.

Optionally, different terminals may use the same first RNTI to obtain the sixth resource or obtain a sixth resource shared by a plurality of terminal devices. Therefore, the first RNTI is referred to as a group RNTI, and the sixth resource is referred to as a shared resource in a group. The group may be understood as including terminal devices that use and/or obtain the same first RNTI, or including terminal devices that obtain the sixth resource by using the same first RNTI.

Optionally, the fifth terminal device monitors and/or decodes, in a first search space, the PDCCH or the DCI scrambled by using the first RNTI.

The first search space includes any one or several of the following:

(1) Common search space (for example, common search space): There may be one or more common search spaces or one or more types of common search spaces. In the common search space, the fifth terminal device may monitor and/or decode a PDCCH or DCI scrambled by using an RNTI (for example, an SI-RNTI, a P-RNTI, an RA-RNTI, or a TC-RNTI) used for system information. paging, random access, or the like, or may monitor and/or decode a PDCCH or DCI scrambled by using a unique identifier (for example, an RNTI used to schedule a dedicated resource of the terminal device, for example, a C-RNTI, a CS-RNTI, an SPS C-RNTI, an SLCS-RNTI, an SL-RNTI, an SL semi-persistent scheduling V-RNTI, or an SL semi-persistent scheduling V-RNTI) of the fifth terminal device.
(2) Specific search space (for example, UE-specific search space): There may be one or more specific search spaces or one or more types of specific search spaces. In the specific search space, the fifth terminal device may monitor and/or decode a PDCCH or DCI scrambled by using a unique identifier (for example, an RNTI used to schedule a dedicated resource of the terminal device, for example, a C-RNTI, a CS-RNTI, an SPS C-RNTI, an SLCS-RNTI, an SL-RNTI, an SL semi-persistent scheduling V-RNTI, or an SL semi-persistent scheduling V-RNTI) of the fifth terminal device.
(3) Group search space (for example, group-specific search space): There may be one or more group search spaces or one or more types of group search spaces.

Optionally, the fifth terminal device determines the first search space (for example, a start position of the first search space) based on an RNTI used for scheduling or used to schedule a resource (for example, an uplink resource, a downlink resource, or a sidelink resource) or an RNTI used for random access. For example, the fifth terminal device determines the first search space (for example, the start position of the first search space) based on any one or several of the following content:

(1) the first RNTI;
(2) a C-RNTI;
(3) a TC-RNTI;
(4) a CS-RNTI;
(5) an SPS C-RNTI;
(6) an SLCS-RNTI;
(7) an SL-RNTI;
(8) an SL semi-persistent scheduling V-RNTI; or
(9) an SL semi-persistent scheduling V-RNTI.

For example, when the first search space is the group search space, the fifth terminal device determines the first search space based on the first RNTI, and the fifth terminal device may monitor and/or decode, in the first search space, the PDCCH or the DCI scrambled by using the first RNTI. In addition, for the sixth terminal device, the sixth terminal device also determines the same first search space as the fifth terminal device based on the same first RNTI. In this case, the sixth terminal device may also monitor and/or decode, in the first search space, the PDCCH or the DCI scrambled by using the first RNTI. For the scenario, it may be considered that terminal devices included in a group (for example, terminal devices that use and/or obtain the same first RNTI) can monitor and/or decode, in the group search space, the PDCCH or the DCI scrambled by using the first RNTI.

Optionally, the first RNTI may be preconfigured, may be configured by the network device for the first terminal device, may be specified in a communication protocol, or may be generated according to a specific rule. This is not specifically limited herein.

Optionally, the first RNTI may be implicitly configured, or may be directly configured. For example, the fifth terminal device (directly) receives the first RNTI sent by the network device; or the fifth terminal device receives other information sent by the network device, and the fifth terminal device determines the first RNTI based on the other information.

Optionally, the fifth terminal device determines the first RNTI based on the RNTI used for scheduling or used to schedule a resource (for example, an uplink resource, a downlink resource, or a sidelink resource) or the RNTI used for random access. For example, the fifth terminal device may determine the first RNTI based on any one or several of the following content:

(1) the C-RNTI;
(2) the TC-RNTI;
(3) the CS-RNTI;
(4) the SPS C-RNTI;
(5) the SLCS-RNTI;
(6) the SL-RNTI;
(7) the SL semi-persistent scheduling V-RNTI; or
(8) a PUCCH resource. For example, the fifth terminal device receives a tenth resource scheduled by the network device, the fifth terminal device obtains a tenth PUCCH resource corresponding to the tenth resource, and the fifth terminal device determines the first RNTI based on the tenth PUCCH resource or a time domain interval between the tenth resource and the tenth PUCCH resource.

For example, the first terminal device determines the first RNTI based on first X bits of the C-RNTI.
For example, the first terminal device determines the first RNTI based on first Y bits of the CS-RNTI.
Optionally, before step 701, this embodiment further includes step 701a.
In step 701a, the fifth terminal device receives the first RNTI sent by the network device.
Optionally, if the network device configures the first RNTI for the fifth terminal device, the fifth terminal device receives the first RNTI sent by the network device. If the network device may also configure the same first RNTI as the fifth terminal device for another terminal device (for example, the sixth terminal device), the sixth terminal device receives the first RNTI sent by the network device.
Optionally, the first RNTI is an RNTI of a group granularity, the first RNTI corresponds to one group, and the group may include a plurality of terminal devices. The fifth terminal device and the sixth terminal device belong to the group corresponding to the first RNTI, that is, the fifth terminal device and the sixth terminal device share the first RNTI.
Optionally, the fifth terminal device may determine a PUCCH resource based on the first RNTI. For example, the fifth terminal device obtains a tenth resource, the fifth terminal device obtains a PUCCH resource associated with the tenth resource, and the fifth terminal device obtains a first RNTI 1; and the fifth terminal device determines, based on the first RNTI 1, a PUCCH resource 1 associated with any one or more of the first RNTI 1, the fifth terminal device, a group in which the first RNTI 1 is located, and a group in which the fifth terminal device is located, where the PUCCH resource 1 is used by the fifth terminal device to feed back a transmission or receiving status on the tenth resource to the network device. In addition, the sixth terminal device obtains the tenth resource, the sixth terminal device obtains the PUCCH resource associated with the tenth resource, and the sixth terminal device obtains a first RNTI 2; and the sixth terminal device determines, based on the first RNTI 2, a PUCCH resource 2 associated with any one or more of the first RNTI 2, the sixth terminal device, a group in which the first RNTI 2 is located, and a group in which the sixth terminal device is located, where the PUCCH resource 2 is used by the sixth terminal device to feed back a transmission or receiving status on the tenth resource to the network device. The fifth terminal device and the sixth terminal device share the tenth resource. For example, the tenth resource is a type 1 configured grant resource of a sidelink, or a type 1 configured grant resource of an uplink, or may be another resource.

Optionally, one terminal device may obtain one or more first RNTIs.

Optionally, the first RNTI may be configured by the network device for the fifth terminal device (by using, for example, RRC signaling, a SIB, MAC signaling, physical layer signaling, DCI, or a PDCCH), may be preconfigured, or may be defined in a protocol. The configuration may be performed for a configured grant resource index (for example, a CG index) resource of each sidelink (for example, configuration may be separately performed for a CG 1 and a CG 2), a configured grant resource (for example, a CG resource) of a sidelink, a type 1 configured grant resource (for example, a CG type 1 resource) of a sidelink, a type 2 configured grant resource (for example, a CG type 2 resource) of a sidelink, a configured grant resource set of each sidelink, a dynamic grant resource (for example, a DG 1) of each sidelink, a dynamic grant resource of a sidelink, a mode 1 resource of a sidelink, or a mode 2 resource of a sidelink; a configured grant resource index (for example, a CG index) resource of each uplink (for example, configuration may be separately performed for a CG 1 and a CG 2), a configured grant resource (for example, a CG resource) of an uplink, a type 1 configured grant resource (for example, a CG type 1 resource) of an uplink, a type 2 configured grant resource (for example, a CG type 2 resource) of an uplink, a configured grant resource set of each uplink, a dynamic grant resource (for example, a DG 1) of each uplink, a dynamic grant resource of an uplink, or a resource of an uplink; or a semi-persistent allocation resource index (for example, an SPS index) resource of each downlink (for example, configuration may be separately performed for SPS 1 and SPS 2), a semi-persistent allocation resource (for example, an SPS resource) of a downlink, a semi-persistent allocation resource set of each downlink, a dynamic allocation resource (for example, a DG 1) of each downlink, a dynamic allocation resource of a downlink, or a resource of a downlink; or may be performed for each UE, each HARQ process ID or HARQ process, each LCH, each LCG, each SLRB, each resource pool (resource pool), each cell, or each area.

Optionally, for an explanation of a configuration granularity of the first RNTI, refer to the explanation of the configuration granularity of the second instruction information in the embodiment shown in FIG. 3. Details are not described herein again.

Optionally, the configuration granularity of the first RNTI may be different from or the same as the configuration granularity of the first information.

Optionally, in this embodiment, the network device determines that the fifth terminal device and the sixth terminal device share the first RNTI. Before step 701, this embodiment further includes:

In step 701b, the network device obtains first position information of the fifth terminal device and second position information of the sixth terminal device. For example, the network device receives the first position information sent by the fifth terminal device, where the first position information is used to indicate information such as a position, a height, an altitude, a direction, a speed, and a track of the fifth terminal device. The network device receives the second position information sent by the sixth terminal device, where the second position information is used to indicate information such as a position, a height, an altitude, a direction, a speed, and a track of the sixth terminal device.

In step 701c, the network device determines, based on the first position information and the second position information, that the fifth terminal device and the sixth terminal device share the first RNTI, that is, the fifth terminal device and the sixth terminal device belong to terminal devices in a group corresponding to the first RNTI.

Optionally, the fifth terminal device reports the first position information to the network device.

Optionally, the sixth terminal device reports the second position information to the network device.

Optionally, before the network device determines that the fifth terminal device and the sixth terminal device share the first RNTI, the fifth terminal device reports the first position information to the network device.

Optionally, before the network device determines that the fifth terminal device and the sixth terminal device share the first RNTI, the sixth terminal device reports the second position information to the network device.

For example, specifically, when the network device determines that a distance between the fifth terminal device and the sixth terminal device is relatively long (for example, when the distance is greater than a seventh preset threshold), the network device may use the fifth terminal device and the sixth terminal device as terminal devices in a same group. When the fifth terminal device and the sixth terminal device separately perform communication by using a same resource scheduled by the network device, no transmission failure is caused due to mutual interference between the fifth terminal device and the sixth terminal device. In this way, a same resource can be simultaneously used by different terminal devices, thereby improving resource utilization. For example, the network device allocates a same CG resource to UE 1, UE 2, and UE 3. Because a distance between the three UEs is relatively long, the UE 1, the UE 2, and the UE 3 do not interfere with each other when using the same CG resource.

702. The fifth terminal device obtains the sixth resource scheduled by the network device.

Optionally, the sixth resource is scheduled by the network device for the fifth terminal device by scrambling the PDCCH or the DCI by using the first RNTI.

Optionally, the sixth resource is associated with the PDCCH or the DCI scrambled by using the first RNTI.

Optionally, the fifth terminal device obtains a sixth PUCCH resource corresponding to the sixth resource. For example, the fifth terminal device receives the sixth PUCCH resource sent by the network device, where the sixth PUCCH resource is used by the fifth terminal device to feed back a data transmission status on the sixth resource to the network device. The sixth terminal device obtains the sixth PUCCH resource corresponding to the sixth resource. For example, the sixth terminal device receives the sixth PUCCH resource sent by the network device, where the sixth PUCCH resource is used by the sixth terminal device to feed back a data transmission or receiving status on the sixth resource to the network device. The fifth terminal device and the sixth terminal device share the sixth PUCCH resource.

For example, the network device allocates a same DG resource to UE 1 and UE 2, and the network device allocates a PUCCH resource corresponding to the DG resource, that is, the UE 1 and the UE 2 share the PUCCH resource corresponding to the DG resource. Subsequently, the UE 1 and the UE 2 may feed back data transmission statuses on the DG resource to the network device by using the PUCCH resource corresponding to the DG resource.

In a possible implementation, when the fifth terminal device fails to perform transmission on the sixth resource and feeds back an NCK to the network device by using the sixth PUCCH resource, and the sixth terminal device successfully performs transmission on the sixth resource and feeds back an ACK to the network device by using the sixth PUCCH resource, a network device side receives the NACK on the sixth PUCCH resource, and therefore the network device schedules, again by using the first RNTI, a retransmission resource for terminal devices that share the first RNTI. In this case, the fifth terminal device may transmit data by using the retransmission resource; and the sixth terminal device may ignore the retransmission resource, and/or the sixth terminal device feeds back an ACK to the network device on a PUCCH resource corresponding to the retransmission resource. Similar to the foregoing embodiments, the sixth resource may be explained by corresponding to a HARQ process.

Optionally, the first RNTI is associated with the sixth PUCCH resource.

The first RNTI may be or may not be configured together with the sixth PUCCH resource, or may be separately configured.

In a possible implementation, when the sixth resource is a resource used for retransmission, before step 702, the network device performs the following steps:

In step 702a, the network device receives ninth negative acknowledgement information sent by the fifth terminal device.

Optionally, the network device receives the ninth negative acknowledgement information sent by the fifth terminal device by using a seventh PUCCH resource.

The ninth negative acknowledgement information is used to indicate that the fifth terminal device fails to perform transmission on a sidelink, is used to indicate that the fifth terminal device fails to perform transmission on an eighteenth sidelink grant, is used to indicate that the fifth terminal device fails to perform transmission in a HARQ process corresponding to an eleventh HARQ process ID, is used to request, from the network device, resource used to retransmit data of a sidelink, is used to request, from the network device, a resource used to retransmit data that fails to be transmitted on an eighteenth sidelink grant, or is used to request, from the network device, a resource used to retransmit data that fails to be transmitted in an eleventh HARQ process. The ninth negative acknowledgement information may be a negative acknowledgement (for example, negative acknowledgement, NACK).

The eighteenth sidelink grant is associated with the eleventh HARQ process ID.

The HARQ process corresponding to the eleventh HARQ process ID may be referred to as the eleventh HARQ process.

The eighteenth sidelink grant is associated with the seventh PUCCH resource.

Optionally, the eleventh HARQ process ID is a HARQ process ID determined by the first terminal device for the eighteenth sidelink grant according to a preset algorithm or a calculation manner indicated by the network device; or is a HARQ process ID that is associated with the eighteenth sidelink grant and that is indicated by the network device for the first terminal device.

Optionally, the first RNTI is associated with the seventh PUCCH resource.

In step 702b, the network device determines that the seventh PUCCH resource is associated with the first RNTI.

In step 702c, the network device schedules, by using the first RNTI, the sixth resource for any one or more of the fifth terminal device, the terminal devices corresponding to the first RNTI, and the terminal devices in the group corresponding to the first RNTI.

Specifically, if the network device receives a NACK on the seventh PUCCH resource, and the network device may determine, by using information about the seventh PUCCH resource, that the seventh PUCCH resource is associated with the first RNTI, the network device may determine that a terminal device that needs a retransmission resource exists in the terminal devices that share the first RNTI. In this case, for the terminal devices corresponding to the first RNTI and/or the terminal devices in the group corresponding to the first RNTI, the network device schedules, by using the first RNTI, a resource used for retransmission. In this way, one or more terminal devices that share the first RNTI can obtain the resource used for retransmission.

Optionally, the sixth resource may be understood as a resource used for retransmission, a resource used to retransmit the data in the eleventh HARQ process, or a resource used to retransmit the data on the eighteenth sidelink grant. The sixth resource may also be understood as a resource or a retransmission resource associated with the eleventh HARQ process ID or the eleventh HARQ process.

For example, the network device allocates a same type 1 configured grant resource to a plurality of UEs (for example, the plurality of UEs include UE 1, UE 2, and UE 3) in an RRC manner, and the network device may further configure first RNTIs and/or PUCCH resources corresponding to the type 1 configured grant resource (for example, the eighteenth sidelink grant) for all or some of the plurality of UEs. The PUCCH resource is used to feed back a transmission status on the type 1 configured grant resource to the network device, but first RNTIs and/or PUCCH resources allocated by the network device to all the terminal devices may not be completely the same. For example, the network device allocates an RNTI 1 and/or a PUCCH resource 1 to the UE 1 and the UE 2, and the network device allocates an RNTI 2 and/or a PUCCH resource 2 to the UE 2. When the UE 1 fails to perform sidelink transmission on the type 1 configured grant resource, the UE 1 feeds back a NACK to the network device by using the PUCCH resource 1 corresponding to the UE 1. The network device receives the NACK on the PUCCH resource 1. The network device determines that any one or more of terminal devices corresponding to the PUCCH resource 1, terminal devices in a group corresponding to the PUCCH resource 1, terminal devices corresponding to the RNTI 1, and terminal devices in a group corresponding to the RNTI 1 fail to perform transmission on the type 1 configured grant resource. For any one or more of the terminal devices corresponding to the PUCCH resource 1, the terminal devices in the group corresponding to the PUCCH resource 1, the terminal devices corresponding to the RNTI 1, and the terminal devices in the group corresponding to the RNTI 1, the network device schedules, by using the RNTI 1, a resource used for retransmission. In this way, one or more terminal devices (the UE 1 and the UE 2) that share the RNTI 1 can obtain the resource used for retransmission.

The eighteenth sidelink grant is associated with the eleventh HARQ process ID.

The HARQ process corresponding to the eleventh HARQ process ID may be referred to as the eleventh HARQ process.

Optionally, the eighteenth sidelink grant is associated with the PUCCH resource 1.

Optionally, the RNTI 1 is associated with the PUCCH resource 1.

Optionally, the eighteenth sidelink grant is associated with the PUCCH resource 2.

Optionally, the RNTI 2 is associated with the PUCCH resource 2.

Optionally, the eleventh HARQ process ID is a HARQ process ID determined by the first terminal device for the eighteenth sidelink grant according to a preset algorithm or a calculation manner indicated by the network device; or is a HARQ process ID that is associated with the eighteenth sidelink grant and that is indicated by the network device for the first terminal device.

Optionally, the resource used for retransmission may be understood as a resource used to retransmit the data in the eleventh HARQ process, or a resource used to retransmit the data on the eighteenth sidelink grant. The resource used for retransmission may also be understood as a resource or a retransmission resource associated with the eleventh HARQ process ID or the eleventh HARQ process.

For example, for a type 1 configured grant resource, N UEs share the type 1 configured grant resource, and the N UEs may belong to different groups. For example, there are S groups in total, S is greater than or equal to 1, each group includes $N_i$ UEs, and $N_i$ is greater than or equal to 1. UEs in each group share a same PUCCH resource, and a quantity of UEs in each group is $N_i$. Therefore, $\sum_{i=1}^{i=S} N_i = N$. For example, as shown in FIG. 7B, N is 4, S is 2, UE 1 and UE 2 belong to a group, and UE 3 and UE 4 belong to another group. The UE 1 to the UE 4 share a type 1 configured grant resource, the group in which UE 1 and UE 2 are located shares a PUCCH resource 1, and the group in which the UE 3 and the UE 4 are located shares a PUCCH resource 2. Optionally, any one or more of N, S, and $N_i$ may be configured by the network device.

Optionally, the content in this embodiment is applicable to any one or several of a terminal device in a connected state, a terminal device in an inactive state, or a terminal device in an idle state.

Optionally, the first RNTI may be used for scheduling or used to schedule a resource for any one or several of a terminal device in a connected state, a terminal device in an inactive state, or a terminal device in an idle state.

It should be noted that in this embodiment, the first terminal device is used as an example to describe a specific implementation process of the first terminal device. In actual application, each part or all of the content in this embodiment may be performed by any one or several of the RRC layer, the MAC layer, the PDCP layer, the RLC layer, the SDAP layer, a PHY layer, a MAC entity, a HARQ entity, or a HARQ process of the first terminal device. This is not specifically limited in this application.

In this embodiment of this application, the fifth terminal device monitors and/or decodes the PDCCH or the DCI scrambled by using the first RNTI; and then, the fifth terminal device obtains the sixth resource scheduled by the network device. The first RNTI is an RNTI shared by the fifth terminal device and the sixth terminal device. In the technical solution of this embodiment, the fifth terminal device and the sixth terminal device may share the sixth resource scheduled by the network device by using the first RNTI, thereby improving resource utilization. In addition, the fifth terminal device and the sixth terminal device may share the sixth PUCCH resource corresponding to the sixth resource, and feed back the transmission statuses on the sixth PUCCH resource, thereby further improving PUCCH resource utilization.

Currently, a network device may configure a transmit end terminal device to enable or disable HARQ feedback of a sidelink, or preconfigure a transmit end terminal device to enable or disable HARQ feedback of a sidelink. A configuration granularity is an SLRB level. The network device schedules a mode 1 resource of the sidelink for the terminal device, and the network device may also configure, for the terminal device, a PUCCH resource corresponding to the scheduled mode 1 resource of the sidelink. The PUCCH resource is used by the terminal device to feed back a transmission status of the terminal device on the mode 1 resource of the sidelink to the network device. For example, when the terminal device fails to perform transmission on the SL, the sending terminal reports a NACK to the network device on the PUCCH resource. The NACK is used to notify the network device that the terminal device fails to perform transmission on the SL, and may be used to request a retransmission resource from the network device.

When the network device and the terminal device have inconsistent understandings of an enabling status of the HARQ feedback of the sidelink, for example, when the network device considers that the HARQ feedback of the sidelink is enabled, the terminal device considers that the HARQ feedback of the sidelink is disabled, a transmit end terminal device does not receive SL HARQ feedback from a receive end terminal device. However, the network device may expect the sending terminal to feed back a transmission status on an SL to the network device. If the network device does not receive feedback, the two cases in the foregoing problem analysis may occur. For the first case, the network device may schedule a retransmission resource for the terminal device, causing a waste of resources.

FIG. 8 is a schematic diagram of an embodiment of a communication processing method according to an embodiment of this application. The method includes the following steps.

801. A first terminal device generates eighth acknowledgement information when HARQ feedback of a sidelink is not enabled or is disabled (disable).

Optionally, that HARQ feedback of a sidelink is not enabled or is disabled may be understood as: For any one or more of an eighth resource, a twelfth HARQ process, a twelfth HARQ process ID, an eighth PUCCH resource, and a first SLRB, the HARQ feedback of the sidelink is not enabled or is disabled; or for any one or more of an eighth resource, a twelfth HARQ process, a twelfth HARQ process ID, an eighth PUCCH resource, and a first SLRB, HARQ feedback of a sidelink on the first terminal device is not enabled or is disabled.

Optionally, for any one or more of the eighth resource, the twelfth HARQ process, the twelfth HARQ process ID, the eighth PUCCH resource, and the first SLRB, the HARQ feedback of the sidelink is not enabled or is disabled. In this case, the first terminal device generates the eighth acknowledgement information.

Optionally, that HARQ feedback of a sidelink is not enabled or is disabled may be understood as: The first terminal device does not enable or disables the HARQ feedback of the sidelink; or the first terminal device receives second information sent by a network device, a second terminal device, or another terminal device. The second information is used to indicate that the first terminal device enables the HARQ feedback of the sidelink, or that the first terminal device does not enable or disables the HARQ feedback of the sidelink. Herein, it may be understood that the second information is used to indicate that the first terminal device does not enable or disables the HARQ feedback of the sidelink.

Optionally, that the first terminal device does not enable or disables the HARQ feedback of the sidelink may be understood as: The first terminal device determines that the HARQ feedback of the sidelink is not enabled or disabled. The first terminal device may determine, based on any one or more of channel quality, a channel condition, a measurement result, and a CBR, that the HARQ feedback of the sidelink is not enabled or is disabled.

Optionally, that the first terminal device does not enable or disables the HARQ feedback of the sidelink may alternatively be understood as: The first terminal device receives second information sent by a network device, a second terminal device, or another terminal device. The second information is used to indicate that the first terminal device enables the HARQ feedback of the sidelink, or the first terminal device does not enable or disables the HARQ feedback of the sidelink. Herein, it may be understood that the second information is used to indicate that the first terminal device enables the HARQ feedback of the sidelink, and then the first terminal device determines that the HARQ feedback of the sidelink is not enabled or is disabled. The first terminal device may determine, based on any one or more of channel quality, a channel condition, a measurement result, and a CBR, that the HARQ feedback of the sidelink is not enabled or is disabled.

The first terminal device sends data to the second terminal device, and the second terminal device receives the data sent by the first terminal device.

Optionally, that the HARQ feedback of the sidelink is not enabled or is disabled for any one or more of an eighth resource, a twelfth HARQ process, a twelfth HARQ process ID, an eighth PUCCH resource, and a first SLRB may be understood as any one or several of the following:

(1) For any one or more of the eighth resource, the twelfth HARQ process, the twelfth HARQ process ID, and the eighth PUCCH resource, the first terminal device does not enable or disables the HARQ feedback of the sidelink.

(2) The first terminal device receives second information sent by a network device, a second terminal device, or another terminal device, where the second information is used to indicate that, for any one or more of the eighth resource, the twelfth HARQ process, the twelfth HARQ process ID, the eighth PUCCH resource, and the first SLRB, the first terminal device does not enable or disables the HARQ feedback of the sidelink.

Optionally, when the first terminal device does not enable or disables the HARQ feedback of the sidelink, the first terminal device generates the eighth acknowledgement information.

Optionally, for any one or more of the eighth resource, the twelfth HARQ process, the twelfth HARQ process ID, the eighth PUCCH resource, and a first SLRB, the first terminal device does not enable or disables the HARQ feedback of the sidelink. In this case, the first terminal device generates the eighth acknowledgement information corresponding to any one or more of the eighth resource, the twelfth HARQ process, the twelfth HARQ process ID, and the eighth PUCCH resource.

The eighth resource is associated with the twelfth HARQ process ID.

A HARQ process corresponding to the twelfth HARQ process ID may be referred to as the twelfth HARQ process.

The eighth resource is associated with the eighth PUCCH resource.

The first SLRB is associated with any one or more of the eighth resource, the twelfth HARQ process, the twelfth HARQ process ID, and the eighth PUCCH resource.

Optionally, the twelfth HARQ process ID is a HARQ process ID determined by the first terminal device for the eighth resource according to a preset algorithm or a calculation manner indicated by a network device; or is a HARQ process ID that is associated with the eighth resource and that is indicated by a network device for the first terminal device.

Optionally, the eighth acknowledgement information may be an ACK.

The eighth resource is a resource scheduled by the network device for the first terminal device.

Optionally, the eighth resource includes any one or more of the following:

(1) a resource of the sidelink;
(2) a mode 1 resource of the sidelink;
(3) a configured grant resource of the sidelink;
(4) a type 1 configured grant resource of the sidelink;
(5) a type 2 configured grant resource of the sidelink;
(6) a dynamic grant resource of the sidelink; or
(7) a configured grant resource set of the sidelink, where the configured grant resource set includes a configured grant resource corresponding to one or more configured grant resource indexes.

Specifically, if the first terminal device performs transmission on the sidelink by using the eighth resource, and the HARQ feedback of the sidelink is not enabled or is disabled, the first terminal device generates the eighth acknowledgement information, or the first terminal device generates the eighth acknowledgement information corresponding to the eighth resource.

For example, if the eighth acknowledgement information corresponding to the eighth resource is an ACK corresponding to the eighth resource, when receiving the ACK, the network device considers that the first terminal device successfully performs transmission on the sidelink by using the eighth resource, the first terminal device does not perform transmission on the eighth resource, the first terminal device does not request a retransmission resource from the network device, the first terminal device successfully performs transmission on the sidelink in the twelfth HARQ process, or the first terminal device does not request a retransmission resource from the network device for any one or more of the eighth resource, the twelfth HARQ process ID, and the twelfth HARQ process. In this case, a retransmission resource is not allocated to the first terminal device. Optionally, that the first terminal device does not request a retransmission resource from the network device may be understood as follows: For the eighth resource, the first terminal device does not request the retransmission resource from the network device.

Optionally, that a first terminal device generates eighth acknowledgement information when HARQ feedback of a sidelink is not enabled or is disabled includes: When the HARQ feedback of the sidelink is not enabled or is disabled, and a tenth preset condition is met, the first terminal device generates the eighth acknowledgement information. The tenth preset condition includes any one or more of the following:

1. The first terminal device obtains an eighth resource.

2. The first terminal device performs transmission on the sidelink by using an eighth resource, or the first terminal device performs transmission on the sidelink on an eighth resource.

3. The first terminal device has an eighth PUCCH resource, where the eighth PUCCH resource is associated with an eighth resource.

Optionally, that the first terminal device has an eighth PUCCH resource may be understood as follows: The first terminal device receives the eighth PUCCH resource configured by a network device, or the eighth PUCCH resource is configured for the first terminal device.

Optionally, that the first terminal device has an eighth PUCCH resource, where the eighth PUCCH resource is associated with an eighth resource, may be understood as that the first terminal device has the eighth PUCCH resource associated with the eighth resource.

Optionally, that the first terminal device has the eighth PUCCH resource associated with the eighth resource may be understood as follows: The network device expects to receive a transmission status that is on the eighth resource and that is fed back by the first terminal device.

Optionally, the first terminal device has the eighth PUCCH resource associated with the eighth resource, but the HARQ feedback of the sidelink is not enabled or is disabled (disable). This may be understood as that the network device and the first terminal device have inconsistent understandings of an enabled state or a disabled state of the HARQ feedback of the sidelink (that is, the HARQ feedback of the sidelink is enabled, or the HARQ feedback of the sidelink is not enabled or is disabled (disable)). For example, the first terminal device has the eighth PUCCH resource associated with an eighth resource, but the HARQ feedback of the sidelink is not enabled or is disabled (disable). This may be understood as follows: The network device considers that the HARQ feedback of the sidelink is enabled, but the first terminal device considers that the HARQ feedback of the sidelink is not enabled or is disabled (disable).

The eighth resource is a PSSCH resource. Each PSSCH resource corresponds to one PUCCH resource, or a plurality of PSSCH resources correspond to one PUCCH resource. The following describes the two cases:

a. Each PSSCH resource corresponds to one PUCCH resource. In other words, there is a one-to-one correspondence between the PSSCH resources and the PUCCH resources. That is, the network device configures one PUCCH resource for each PSSCH resource. If the first terminal device does not perform transmission on the sidelink by using the PSSCH resource, the first terminal device generates the eighth acknowledgement information corresponding to the PSSCH resources or the PUCCH resources. Each PSSCH resource may be understood as each PSSCH resource for which a corresponding PUCCH resource is configured.

b. A plurality of PSSCH resources correspond to one PUCCH resource. In other words, the network device configures the same PUCCH resource for the plurality of PSSCH resources. If the first terminal device does not perform transmission on the sidelink by using the plurality of PSSCH resources, the first terminal device generates the eighth acknowledgement information corresponding to the plurality of PSSCH resources and/or the PUCCH resource. The plurality of PSSCH resources may be understood as a plurality of PSSCH resources for which the corresponding PUCCH resource is configured.

4. An eighth resource is not preempted by a ninth resource, where the ninth resource is a resource scheduled by a network device for the first terminal device. Optionally, the ninth resource includes any one or more of the following:

(1) a resource of the sidelink;
(2) a mode 1 resource of the sidelink;
(3) a configured grant resource of the sidelink;
(4) a type 1 configured grant resource of the sidelink;
(5) a type 2 configured grant resource of the sidelink;
(6) a dynamic grant resource of the sidelink;
(7) a configured grant resource set of the sidelink, where the configured grant resource set of the sidelink includes a configured grant resource corresponding to one or more configured grant resource indexes;
(8) a resource of an uplink;
(9) a configured grant resource of an uplink;
(10) a type 1 configured grant resource of an uplink;
(11) a type 2 configured grant resource of an uplink;
(12) a configured grant resource set of an uplink, where the configured grant resource set of the uplink includes a configured grant resource corresponding to one or more configured grant resource indexes;
(13) a dynamic grant resource of an uplink;
(14) a resource of a downlink;
(15) a semi-persistent allocation resource of a downlink;
(16) a dynamic allocation resource of a downlink; or
(17) a semi-persistent allocation resource set of a downlink, where the semi-persistent allocation resource set includes a semi-persistent allocation resource corresponding to one or more semi-persistent allocation resource indexes.

That an eighth resource is not preempted by a ninth resource includes the following two possible cases:

a. The eighth resource does not overlap (overlap) the ninth resource in time domain.

Overlap herein may be partial overlap or complete overlap.

For example, if the eighth resource overlaps the ninth resource in time domain, the ninth resource is to override or preempt (overlap) the eighth resource, and the first terminal device is not to perform SL transmission on the eighth resource. Because both the eighth resource and the ninth resource are resources scheduled by the network device for the first terminal device, the network device can determine that the ninth resource of the first terminal device is to override or preempt the eighth resource. In this case, the network device learns that the first terminal device is not to perform SL transmission on the eighth resource, and the first terminal device does not need to feed back a transmission status on the eighth resource to the network device. That is, when the eighth resource overlaps the ninth resource, the first terminal device does not need to feed back the transmission status on the eighth resource to the network device. On the contrary, when the eighth resource does not overlap the ninth resource in time domain, the network device does not learn whether the first terminal device is to perform SL transmission on the eighth resource. In this case, the first terminal device needs to feed back a transmission status on the eighth resource to the network device.

Optionally, the eighth resource is a CG resource, and the ninth resource is a DG resource.

Optionally, the first terminal device receives, on a PDCCH, information for configuring the ninth resource, and DCI in the PDCCH is scrambled by using a radio network temporary identity (radio network tempory identity, RNTI, for example, any one or several of a C-RNTI, a CS-RNTI, an SPS C-RNTI, an SLCS-RNTI, an SL-RNTI, an SL semi-persistent scheduling V-RNTI, or an SL semi-persistent scheduling V-RNTI).

Optionally, if the eighth resource does not overlap the ninth resource in time domain, and the HARQ feedback of the sidelink is not enabled or is disabled (disable), the first terminal device generates the eighth acknowledgement information corresponding to the eighth resource.

b. A HARQ process ID associated with the eighth resource is different from a HARQ process ID associated with the ninth resource, or a HARQ process ID associated with the ninth resource is not a HARQ process ID associated with the eighth resource.

For example, if the first terminal device receives information for configuring the ninth resource, and a twelfth HARQ process ID associated with the eighth resource is the same as a thirteenth HARQ process ID associated with the ninth resource, it may be considered that the ninth resource preempts the eighth resource. The first terminal device is not to perform SL transmission on the eighth resource. Because both the eighth resource and the ninth resource are resources scheduled by the network device for the first terminal device, the network device can determine that the ninth resource of the first terminal device is to override or preempt (overlap) the eighth resource. In this case, the network device learns that the first terminal device is not to perform SL transmission on the eighth resource, and the first terminal device does not need to feed back a transmission status on the eighth resource to the network device. That is, when the eighth resource and the ninth resource are associated with a same HARQ process ID, and the ninth resource preempts the eighth resource, the first terminal device does not need to feed back the transmission status on the eighth resource to the network device.

Optionally, the eighth resource is a CG resource, and the ninth resource is a DG resource.

Optionally, the first terminal device receives, on a PDCCH, information for configuring the ninth resource, and DCI in the PDCCH is scrambled by using a radio network temporary identity (radio network tempory identity, RNTI, for example, any one or several of a C-RNTI, a CS-RNTI, an SPS C-RNTI, an SLCS-RNTI, an SL-RNTI, an SL semi-persistent scheduling V-RNTI, or an SL semi-persistent scheduling V-RNTI).

Optionally, when the first terminal device receives the ninth resource, the eighth resource has not been used yet.

Optionally, when the first terminal device receives the ninth resource, a HARQ process associated with the eighth resource is still occupied.

Optionally, before the first terminal device receives the ninth resource, the first terminal device has obtained the eighth resource, and the eighth resource is associated with a twelfth HARQ process ID.

Optionally, the first terminal device receives the ninth resource, and the HARQ process ID associated with the ninth resource is a HARQ process ID associated with the eighth resource. It may be understood that the first terminal device receives the ninth resource, and an identified HARQ process is configured for the eighth resource. Alternatively, it may be understood that the eighth resource is a previous sidelink grant/resource associated with a same HARQ process ID, a twelfth HARQ process ID, or a thirteenth HARQ process ID.

Optionally, on the contrary, when the eighth resource is not preempted by the ninth resource, the network device does not learn whether the first terminal device is to perform SL transmission on the eighth resource. In this case, the first terminal device needs to feed back a transmission status on the eighth resource to the network device.

For example, if the eighth resource and the ninth resource are associated with different HARQ process IDs, or the HARQ process ID associated with the ninth resource is not a HARQ process ID associated with the eighth resource; and a HARQ feedback of the sidelink is not enabled or is disabled (disable), the first terminal device generates the eighth acknowledgement information corresponding to the eighth resource.

For example, the first terminal device obtains the eighth resource, and the first terminal device obtains a PUCCH resource corresponding to the eighth resource. For transmission on the eighth resource, the HARQ feedback of the sidelink is not enabled or is disabled (that is, the first terminal device performs sidelink transmission on the eighth resource, and the first terminal device does not expect feedback from a receive end terminal device, or the first terminal device does not obtain feedback from a receive end terminal device). In this case, the first terminal device generates the eighth acknowledgement information corresponding to the eighth resource.

802. The first terminal device sends the eighth acknowledgement information to the network device.

Optionally, the first terminal device sends the eighth acknowledgement information to the network device by using a PUCCH resource or a PUSCH resource.

Optionally, the first terminal device sends the eighth acknowledgement information to the network device by using a PUCCH resource (for example, an eighth PUCCH resource) corresponding to the eighth resource.

Optionally, before step 801, the method further includes: The first terminal device receives eighth instruction information sent by the network device.

The eighth instruction information is used to instruct the first terminal device to generate the eighth acknowledgement information when the HARQ feedback of the sidelink is not enabled or is disabled (disable) and/or when a tenth preset condition is met; or instruct the first terminal device to send the eighth acknowledgement information to the network device when the HARQ feedback of the sidelink is not enabled or is disabled (disable), and/or when a tenth preset condition is met.

Optionally, that the first terminal device generates the eighth acknowledgement information may be understood as follows: The first terminal device generates the eighth acknowledgement information corresponding to any one or more of an eighth resource, a twelfth HARQ process, a twelfth HARQ process ID, an eighth PUCCH resource, and a first SLRB.

Optionally, that the first terminal device sends the eighth acknowledgement information to the network device may be understood as follows: The first terminal device sends, to the network device, the eighth acknowledgement information corresponding to any one or more of an eighth resource, a twelfth HARQ process, a twelfth HARQ process ID, an eighth PUCCH resource, and a first SLRB.

Optionally, in this embodiment, the eighth resource may be understood as a sixteenth sidelink grant, and the ninth resource may be understood as a seventeenth sidelink grant. Optionally, for a configuration granularity of the eighth instruction information, refer to the configuration granularity of the second instruction information in the embodiment shown in FIG. 3. For a specific meaning different from a meaning of the second instruction information in the embodiment shown in FIG. 3, refer to a meaning of the eighth instruction information.

In this embodiment of this application, when the HARQ feedback of the sidelink is not enabled or is disabled, the first terminal device generates the eighth acknowledgement information. Then the first terminal device sends the eighth acknowledgement information to the network device. The network device receives the eighth acknowledgement information. It may be determined that the first terminal device successfully performs transmission on the sidelink by using the eighth resource, the first terminal device does not perform transmission on the eighth resource, the first terminal device does not request a retransmission resource from the network device, the first terminal device successfully performs transmission on the sidelink in a twelfth HARQ process, or the first terminal device does not request a retransmission resource for any one or more of the eighth resource, the twelfth HARQ process ID, and the twelfth HARQ process from the network device. In this case, the network device does not allocate a retransmission resource to the first terminal device, avoiding a waste of resources.

Based on a similar technical concept, an embodiment of this application provides a communication device. The communication device may be the first terminal device in the communication method provided in any one of the foregoing embodiments and any possible design thereof. The first terminal device may include at least one corresponding unit configured to perform method steps or operations or behaviors performed by the first terminal device in the communication method provided in any one of the foregoing embodiments. The at least one unit may be disposed in a one-to-one correspondence with the method steps, the operations, or the behaviors performed by the first terminal device.

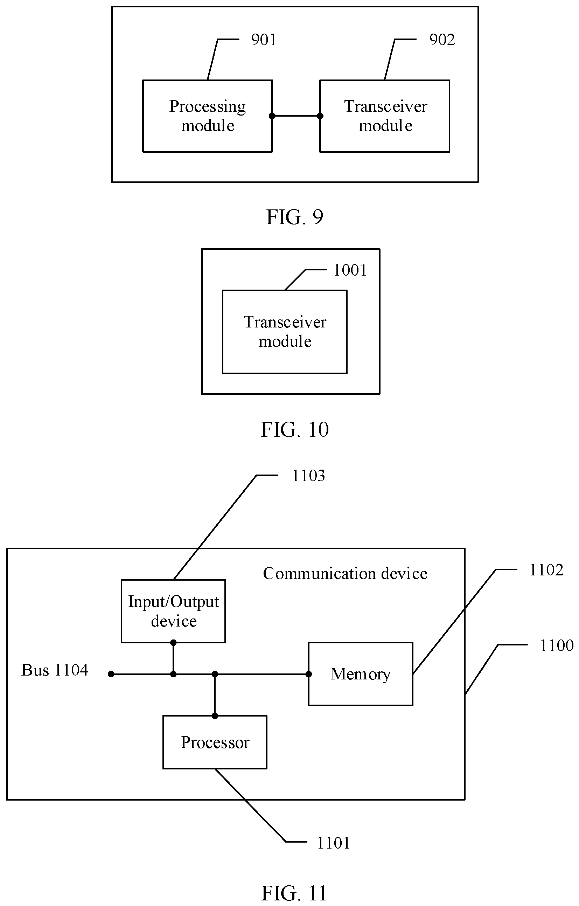

FIG. 9 shows an embodiment of a communication device according to an embodiment of this application. The communication device may be configured to perform the steps performed by the first terminal device in the embodiment shown in FIG. 2. For details, refer to related descriptions in the foregoing method embodiment.

The communication device includes a processing module 901 and a transceiver module 902.

The processing module 901 is configured to generate first acknowledgement information when the communication device does not perform transmission on a sidelink by using a first resource, where the sidelink is a wireless direct communication link between the communication device and a second terminal device.

The transceiver module 902 is configured to send the first acknowledgement information to a network device.

In another possible implementation, the transceiver module 902 is specifically configured to:
send the first acknowledgement information to the network device by using a first PUCCH resource corresponding to the first resource.

In another possible implementation, that the communication device does not perform transmission on a sidelink by using a first resource includes any one or more of the following: Transmission in a fifth HARQ process succeeds or ends, the communication device obtains a retransmission resource allocated by the network device to the fifth HARQ process, and the retransmission resource is the first resource; a HARQ buffer corresponding to a fifth HARQ process is empty, where the first resource is associated with the fifth HARQ process; or no data is obtained in a fifth HARQ process, where the first resource is associated with the fifth HARQ process.

In another possible implementation, the processing module 901 is specifically configured to:

generate the first acknowledgement information when the communication device does not perform transmission on the sidelink by using the first resource and a first preset condition is met, where the first preset condition includes any one or more of the following: The first PUCCH resource corresponding to the first resource exists; the first resource is not preempted by a second resource, where the second resource is a resource scheduled by the network device for the communication device; or the first PUCCH resource corresponding to the first resource is not used to feed back ninth acknowledgement information associated with the fifth HARQ process to the network device.

In another possible implementation, the first resource includes any one or more of the following:

a resource of the sidelink;
a configured grant resource of the sidelink;
a dynamic grant resource of the sidelink;
a mode 1 resource of the sidelink;
a type 1 configured grant resource of the sidelink; or
a type 2 configured grant resource of the sidelink.

In another possible implementation, the first acknowledgement information is generated by a PHY layer of the communication device according to an instruction of a MAC layer of the communication device; the first acknowledgement information is generated by a MAC layer of the communication device, and is sent by the MAC layer of the communication device to a PHY layer of the communication device; or the first acknowledgement information is generated by a PHY layer of the communication device.

In another possible implementation, the transceiver module 902 is further configured to:

receive seventh instruction information from the network device, where the seventh instruction information is used to instruct the communication device to generate or send the first acknowledgement information when the communication device does not perform transmission on the sidelink by using the first resource and/or the first preset condition is met.

In another possible implementation, the first acknowledgement information is an ACK.

Optionally, the communication device shown in FIG. 9 may alternatively be configured to perform the steps performed by the first terminal device in the embodiment shown in FIG. 3. For details, refer to related descriptions in the foregoing method embodiment.

The transceiver module 902 is configured to receive second instruction information sent by a network device, where the second instruction information is used to instruct the communication device to retransmit data of a sidelink by using a type 1 resource when a second preset condition is met, where the type 1 resource includes a resource scheduled by the network device for the communication device and/or a resource selected, contended for, or sensed by the communication device.

The processing module 901 is configured to: retransmit data of a first HARQ process by using a first sidelink grant when the second preset condition is met. The first sidelink grant belongs to the type 1 resource. The second preset condition includes any one or several of the following: The communication device does not obtain, within first preset duration, a resource used for retransmission in the first HARQ process; the communication device does not obtain, when a first timer expires, a resource used for retransmission in the first HARQ process; before, during, or after a time domain position of a resource associated with a first HARQ process ID, the communication device does not obtain a resource used for retransmission in the first HARQ process; for any one or more of the first HARQ process, a first HARQ process ID, a second sidelink grant, data transmitted in the first HARQ process, and data transmitted on the second sidelink grant, a quantity of times the communication device sends a NACK to the network device does not reach a first preset threshold, where the communication device fails to perform transmission on the second sidelink grant; transmission in the first HARQ process fails; transmission on a second sidelink grant fails, where a first HARQ process ID is associated with the first HARQ process, and the second sidelink grant is associated with the first HARQ process ID or the first HARQ process.

In a possible implementation, the processing module 901 is further configured to:

determine that a third HARQ process ID associated with the first sidelink grant is different from the first HARQ process ID.

The transceiver module 902 is further configured to:

send the first HARQ process ID to a second terminal device.

In another possible implementation, the processing module 901 is further configured to:

determine that a third HARQ process ID associated with the first sidelink grant is different from the first HARQ process ID.

The transceiver module 902 is further configured to:

release the first HARQ process and/or flush a HARQ buffer corresponding to the first HARQ process.

In another possible implementation, the first sidelink grant includes any one or several of the following:

a resource of the sidelink;
a mode 1 resource of the sidelink;
a mode 2 resource of the sidelink;
a configured grant resource of the sidelink;
a type 1 configured grant resource of the sidelink;
a type 2 configured grant resource of the sidelink;

a configured grant resource set of the sidelink, where the configured grant resource set includes a configured grant resource corresponding to one or more configured grant resource indexes; or

a dynamic grant resource of the sidelink.

In another possible implementation, that the communication device does not obtain, within first preset duration, a resource used for retransmission in the first HARQ process includes:

The communication device does not obtain, within the first preset duration started or restarted after a second condition is met, the resource used for retransmission of the first HARQ process.

In another possible implementation, that the communication device does not obtain, when a first timer expires, a resource used for retransmission in the first HARQ process includes:

The first timer is started or restarted when a second condition is met; and the resource used for retransmission in the first HARQ process is not obtained when the first timer expires.

In another possible implementation, the second condition includes any one or more of the following:

The communication device sends the second acknowledgement information to the network device, where the second acknowledgement information is used to indicate that the first terminal device fails to perform transmission on the second sidelink grant; before, during, or after a time domain position of a second PUCCH resource, where the second PUCCH resource has a correspondence with the second sidelink grant; the communication device sends data on the second sidelink grant; before, during, or after a time domain position of the second sidelink grant; the communication device receives a NACK for the first HARQ process from the second terminal device; the communication device does not receive feedback for the first HARQ process; or before, during, or after a time domain position of a first PSFCH resource, where the second sidelink grant is associated with the first PSFCH resource.

The second sidelink grant is associated with any one or more of the second acknowledgement information, the first HARQ process ID, the first HARQ process, the second PUCCH resource, and the first PSFCH resource.

In another possible implementation, the first sidelink grant is after the second sidelink grant.

Optionally, the communication device shown in FIG. 9 may be further configured to perform the steps performed by the first terminal device in the embodiment shown in FIG. 4. For details, refer to related descriptions in the foregoing method embodiment.

The processing module 901 is configured to generate fourth acknowledgement information when a fourth preset condition is met. The fourth acknowledgement information is used to indicate that the communication device fails to perform transmission on a sidelink, and the sidelink is a wireless direct communication link between the first terminal device and a second terminal device.

The transceiver module 902 is configured to send the fourth acknowledgement information to a network device by using a PUCCH resource corresponding to a fifth sidelink grant. The fourth preset condition includes any one or several of the following:

The communication device does not obtain, within third preset duration, a resource used for retransmission in a seventh HARQ process;

the communication device does not obtain, when a third timer expires, a resource used for retransmission in a seventh HARQ process; before, during, or after a time domain position of a resource associated with a seventh HARQ process ID, the communication device does not obtain a resource used for retransmission in the seventh HARQ process; for any one or more of the seventh HARQ process, a seventh HARQ process ID, a sixth sidelink grant, data transmitted in the seventh HARQ process, and data transmitted on the sixth sidelink grant, a quantity of times the communication device sends a NACK to the network device does not reach a third preset threshold, where the first terminal device fails to perform transmission on the sixth sidelink grant, and the sixth sidelink grant is associated with the seventh HARQ process ID; transmission in a seventh HARQ process fails; or transmission on the sixth sidelink grant fails, where the seventh HARQ process is associated with the fourth acknowledgement information, the seventh HARQ process is associated with the seventh HARQ process, the sixth sidelink grant is associated with the seventh HARQ process ID, and the fifth sidelink grant is associated with the seventh HARQ process ID.

In another possible implementation, the transceiver module 902 is specifically configured to:

send the fourth acknowledgement information to the network device by using a PUCCH resource corresponding to the fifth sidelink grant, where a HARQ process ID associated with the fifth sidelink grant is the same as a HARQ process ID associated with the sixth sidelink grant.

In another possible implementation, the fifth sidelink grant includes any one of the following:

a resource of the sidelink;
a mode 1 resource of the sidelink;
a configured grant resource of the sidelink;

a type 1 configured grant resource of the sidelink;
a type 2 configured grant resource of the sidelink;
a dynamic grant resource of the sidelink; or
a configured grant resource set of the sidelink, where the configured grant resource set includes a configured grant resource corresponding to one or more configured grant resource indexes.

The sidelink is a wireless direct communication link between the first terminal device and a second terminal device.

In another possible implementation, the transceiver module 902 is further configured to:
receive fourth instruction information from the network device, where the fourth instruction information is used to instruct the communication device to generate or send the fourth acknowledgement information when the fourth preset condition is met.

In another possible implementation, when a quantity of times that the transceiver module 902 sends a NACK to the network device reaches a third preset threshold, and the communication device does not obtain a retransmission resource of the seventh HARQ process, the processing module 901 is further configured to perform any one or several of the following:

discarding the data of the seventh HARQ process;
releasing the seventh HARQ process;
flushing a HARQ buffer corresponding to the seventh HARQ process;
stopping sending the fourth acknowledgement information; or
retransmitting or newly transmitting data on the sidelink by using a type 1 resource.

The sidelink is a wireless direct communication link between the communication processing apparatus and a second terminal device.

In another possible implementation, the fourth acknowledgement information is generated by a PHY layer of the communication device according to an instruction sent by a MAC layer of the communication device; the fourth acknowledgement information is generated by a MAC layer of the communication device, and is sent by the MAC layer of the communication device to a PHY layer of the communication device; or the fourth acknowledgement information is generated by a PHY layer of the communication device.

In another possible implementation, that the communication device does not obtain a retransmission resource of a seventh HARQ process within third preset duration includes: The communication device does not obtain the retransmission resource of the seventh HARQ process within the third preset duration started or restarted after a fourth condition is met.

In another possible implementation, that the communication device does not obtain, when a third timer expires, a resource used for retransmission in the seventh HARQ process includes: The communication device starts or restarts the third timer after a fourth condition is met; and the communication device does not obtain the retransmission resource of the seventh HARQ process when the third timer expires.

In another possible implementation, the fourth condition includes any one or several of the following:

The communication device sends fifth acknowledgement information to the network device, where the fifth acknowledgement information is used to indicate that the first terminal device fails to perform transmission on the sixth sidelink grant;
before, during, or after a time domain position of a fourth PUCCH resource, where the fourth PUCCH resource has a correspondence with the sixth sidelink grant;
the communication device sends data on the sixth sidelink grant;
before, during, or after a time domain position of the sixth sidelink grant;
the communication device receives a NACK for the seventh HARQ process from the second terminal device;
the communication device does not receive feedback for the seventh HARQ process; or
before, during, or after a time domain position of a third PSFCH resource, where the sixth sidelink grant is associated with any one or more of the fifth acknowledgement information, the seventh HARQ process ID, the seventh HARQ process, the fourth PUCCH resource, and the third PSFCH resource.

In another possible implementation, the fourth acknowledgement information is a NACK.

In another possible implementation, the sixth sidelink grant is before the fifth sidelink grant.

An embodiment of this application further provides another communication device. FIG. 10 is a schematic diagram of another structure of a communication device according to an embodiment of this application. The communication device is configured to perform the steps performed by the network device in the embodiments shown in FIG. 2, FIG. 3, FIG. 4, and FIG. 8. For details, refer to related descriptions in the foregoing method embodiments.

The communication device includes a transceiver module 1001.

The transceiver module 1001 is configured to send seventh instruction information, second instruction information, or fourth instruction information to a first terminal device.

The seventh instruction information is used to instruct the first terminal device to generate or send first acknowledgement information when the first terminal device does not perform transmission on a sidelink by using a first resource and/or a first preset condition is met.

The second instruction information is used to instruct the first terminal device to retransmit or newly transmit data of the sidelink by using the type 1 resource when a second preset condition is met.

The fourth instruction information is used to instruct the first terminal device to generate or send fourth acknowledgement information when a fourth preset condition is met, where the sidelink is a wireless direct communication link between the first terminal device and a second terminal device.

This application further provides a communication device 1100. Refer to FIG. 11 which shows an embodiment of a communication device according to an embodiment of this application. The communication device may be a first terminal device, or a chip or a chip system on a first terminal device. The communication device may be configured to perform the steps performed by the first terminal device in the embodiments shown in FIG. 2, FIG. 3, FIG. 4, FIG. 5A, and FIG. 8. For details, refer to related descriptions in the foregoing method embodiments.

The communication device 1100 includes a processor 1101, a memory 1102, an input/output device 1103, and a bus 1104.

In a possible implementation, the processor 1101, the memory 1102, and the input/output device 1103 are separately connected to the bus 1104, and the memory stores computer instructions.

The processing module 901 in the foregoing embodiment in FIG. 9 may be specifically the processor 1101 in this embodiment. Therefore, a specific implementation of the processor 1101 is not described again. The transceiver module 902 in the foregoing embodiment in FIG. 9 may be specifically the input/output device 1103 in this embodiment. Therefore, a specific implementation of the input/output device 1103 is not described again.

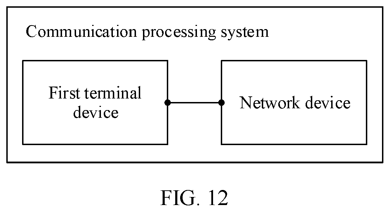

Refer to FIG. 12. An embodiment of this application further provides a communication processing system. The communication processing system includes a communication device. Specifically, the communication device may include a first terminal device. Optionally, the communication device further includes a network device. The first terminal device may be configured to perform all or a part of the steps performed by the first terminal device in the embodiments shown in FIG. 2, FIG. 3, FIG. 4, FIG. 5A, and FIG. 8, and the network device is configured to perform all or a part of the steps performed by the network device in the embodiments shown in FIG. 2, FIG. 3, FIG. 4, FIG. 6, and FIG. 8.

An embodiment of this application provides a chip system. The chip system includes a processor and an input/output port. The processor is configured to implement the processing functions in the embodiments shown in FIG. 2, FIG. 3, FIG. 4, FIG. 5A, FIG. 6, FIG. 7A, and FIG. 8. The input/output port is configured to implement the sending and receiving functions in the embodiments shown in FIG. 2, FIG. 3, FIG. 4, FIG. 5A, FIG. 6, FIG. 7A, and FIG. 8.

In a possible design, the chip system further includes a memory. The memory is configured to store program instructions and data that are used to implement the functions in the embodiments shown in FIG. 2, FIG. 3, FIG. 4, FIG. 5A, FIG. 6, FIG. 7A, and FIG. 8.

The chip system may include a chip, or may include a chip and another discrete component.

Based on the methods provided in embodiments of this application, this application further provides a computer program product. The computer program product includes computer program code. When the computer program code is run on a computer, the computer is enabled to perform the method in the embodiments shown in FIG. 2, FIG. 3, FIG. 4, FIG. 5A, FIG. 6, FIG. 7A, and FIG. 8.

Based on the methods provided in embodiments of this application, this application further provides a computer-readable medium. The computer-readable medium stores program code. When the program code is run on a computer, the computer is enabled to perform the method in the embodiments shown in FIG. 2, FIG. 3, FIG. 4, FIG. 5A, FIG. 6, FIG. 7A, and FIG. 8.

An embodiment of this application further provides a processing apparatus, including a processor and an input/output port. The processor is configured to perform the processing functions in the communication processing method according to any one of the foregoing method embodiments. The input/output port is configured to perform the sending/receiving function in the communication processing method according to any one of the foregoing method embodiments.

It should be understood that the processing apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

It should be understood that "one embodiment" or "an embodiment" mentioned in the whole specification does not mean that particular features, structures, or characteristics related to the embodiment are included in at least one embodiment of this application. Therefore, "in one embodiment" or "in an embodiment" appearing throughout the specification does not refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the terms "system" and "network" in this specification may be used interchangeably in this specification. It should be understood that in embodiments of this application, "B corresponding to A" indicates that B is associated with A, and B may be determined based on A. However, it should further be understood that determining A based on B does not mean that B is determined based on A only; that is, B may also be determined based on A and/or other information.

A person of ordinary skill in the art may be aware that, the units and steps in the examples described with reference to embodiments disclosed in this specification may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part or all of the units may be selected according to actual requirements to achieve the objectives of the solutions of embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware or a combination thereof. When this application is implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a computer. By way of example rather than limitation, the computer-readable medium may include a RAM, a ROM, an EEPROM, a CD-ROM, or another optical disc storage or disk storage medium, or another magnetic storage device, or any other medium that can carry or store expected program code in a form of instructions or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in a meaning of a medium to which they belong. For example, a disk (Disk) and disc (disc) used by this application includes a compact disc (CD), a laser disc, an optical disc, a digital versatile disc (DVD), a floppy disk, and a Blu-ray disc, where the disk generally copies data by a magnetic means, and the disc copies data optically by a laser means. The foregoing combination should also be included in the protection scope of the computer-readable medium.

In summary, what are described above are merely example embodiments of the technical solutions of this application, but are not intended to limit the protection scope of this application. The scope of the invention is depicted by the appended claims.

**Claims**

1. A communication processing method, performed by a first terminal device, or by a chip of the first terminal device, wherein the method comprises:

   generating (201) first acknowledgement information when the first terminal device determines not to transmit data on a sidelink by using a first resource, wherein the sidelink is a wireless direct communication link between the first terminal device and a second terminal device, and the first resource is a resource scheduled by a network device for the first terminal device, wherein the second terminal device comprises any one or more terminal devices other than the first terminal device, wherein the first acknowledgement information is an acknowledgement, ACK; and

sending (202) the first acknowledgement information to the network device,

wherein the first terminal device determines not to transmit data on a sidelink by using the first resource, when no data is obtained in a hybrid automatic repeat request, HARQ, process, wherein the first resource is associated with the HARQ process.

2. The method according to claim 1, wherein the sending (202) the first acknowledgement information to a network device comprises:
sending the first acknowledgement information to a network device by using a first physical uplink control channel, PUCCH, resource.

3. The method according to any one of claims 1 to 2, wherein the generating (201) first acknowledgement information when the first terminal device determines not to transmit data on a sidelink by using a first resource comprises:

generating the first acknowledgement information when the first terminal device determines not to transmit data on the sidelink by using the first resource and a first preset condition is met, wherein

the first preset condition comprises any one or more of the following:

the first PUCCH resource corresponding to the first resource exists;

the first resource is not preempted by a second resource, wherein the second resource is a resource scheduled by the network device for the first terminal device; or

the first PUCCH resource corresponding to the first resource is not used to feed back ninth acknowledgement information associated with the HARQ process to the network device.

4. The method according to any one of claims 1 to 3, wherein the first resource comprises any one or more of:

a resource of the sidelink;
a configured grant resource of the sidelink;
a dynamic grant resource of the sidelink;
a mode 1 resource of the sidelink;
a type 1 configured grant resource of the sidelink; or

a type 2 configured grant resource of the sidelink.

5. The method according to any one of claims 1 to 4, comprising:

the first acknowledgement information is generated by a physical, PHY, layer of the first terminal device according to an instruction of a media access control, MAC, layer of the first terminal device; or

the first acknowledgement information is generated by a MAC layer of the first terminal device, and is sent by the MAC layer of the first terminal device to a PHY layer of the first terminal device.

6. The method according to any one of claims 1 to 5, further comprising:
receiving seventh instruction information from the network device, wherein the seventh instruction information is used to instruct the first terminal device to generate or send the first acknowledgement information when the first terminal device determines not to transmit data on the sidelink by using the first resource and/or the first preset condition is met.

7. A communication apparatus, comprising modules for carrying out steps of the method according to any one of claims 1 to 6.

8. A computer program product, comprising computer program code which, when executed by a processor of an apparatus, cause the apparatus to carry out the steps of the method according to any one of claims 1 to 6.

9. A computer-readable storage medium comprising the computer program product according to claim 8.

**Patentansprüche**

1. Kommunikationsverarbeitungsverfahren, das durch ein erstes Endgerät oder einen Chip des ersten Endgeräts durchgeführt wird, wobei das Verfahren Folgendes umfasst:

Erzeugen (201) erster Bestätigungsinformationen, wenn das erste Endgerät bestimmt, keine Daten unter Verwendung einer ersten Ressource über einen Sidelink zu übertragen,

wobei der Sidelink eine drahtlose direkte Kommunikationsverbindung zwischen dem ersten Endgerät und einem zweiten Endgerät ist und die erste Ressource eine von einer Netzwerkvorrichtung für das erste Endgerät geplante Ressource ist, wobei das zweite Endgerät ein oder mehrere beliebige Endgeräte außer dem ersten Endgerät umfasst,
wobei die ersten Bestätigungsinformationen eine Bestätigung (ACK) sind; und
Senden (202) der ersten Bestätigungsinformationen an die Netzwerkvorrichtung, wobei das erste Endgerät bestimmt, keine Daten unter Verwendung der ersten Ressource über einen Sidelink zu übertragen, wenn in einem hybriden automatischen Wiederholungsanforderungs(HARQ)-Prozess keine Daten erhalten werden, wobei die erste Ressource mit dem HARQ-Prozess verknüpft ist.

2. Verfahren nach Anspruch 1, wobei das Senden (202) der ersten Bestätigungsinformationen an eine Netzwerkvorrichtung Folgendes umfasst:
Senden der ersten Bestätigungsinformationen an eine Netzwerkvorrichtung unter Verwendung einer ersten physischen Uplink-Steuerkanal(PUCCH)-Ressource.

3. Verfahren nach einem der Ansprüche 1 bis 2, wobei das Erzeugen (201) erster Bestätigungsinformationen, wenn das erste Endgerät bestimmt, keine Daten unter Verwendung einer ersten Ressource über einen Sidelink zu übertragen, Folgendes umfasst:

Erzeugen der ersten Bestätigungsinformationen, wenn das erste Endgerät bestimmt, keine Daten unter Verwendung der ersten Ressource über den Sidelink zu übertragen, und eine erste voreingestellte Bedingung erfüllt ist, wobei
die erste voreingestellte Bedingung eines oder mehreres aus Folgendem umfasst:

die erste PUCCH-Ressource, die der ersten Ressource entspricht, existiert;
die erste Ressource wird nicht durch eine zweite Ressource verdrängt, wobei die zweite Ressource eine von der Netzwerkvorrichtung für das erste Endgerät geplante Ressource ist; oder
die der ersten Ressource entsprechende erste PUCCH-Ressource wird nicht verwendet, um der Netzwerkvorrichtung mit dem HARQ-Prozess verknüpfte neunte Bestätigungsinformationen zurückzugeben.

4. Verfahren nach einem der Ansprüche 1 bis 3, wobei die erste Ressource eines oder mehreres aus Folgendem umfasst:

eine Ressource des Sidelinks;
eine konfigurierte Gewährungs-Ressource des Sidelinks;
eine dynamische Gewährungs-Ressource des Sidelinks;

eine Ressource des Sidelinks des Modus 1;
eine konfigurierte Gewährungs-Ressource des Sidelinks vom Typ 1; oder
eine konfigurierte Gewährungs-Ressource des Sidelinks vom Typ 2.

5. Verfahren nach einem der Ansprüche 1 bis 4, das Folgendes umfasst:

die ersten Bestätigungsinformationen werden von einer Bitübertragungs(PHY)-Schicht des ersten Endgeräts gemäß einer Anweisung einer Medienzugriffssteuerungs(MAC)-Schicht, des ersten Endgeräts erzeugt; oder
die ersten Bestätigungsinformationen werden von einer MAC-Schicht des ersten Endgeräts erzeugt und von der MAC-Schicht des ersten Endgeräts an eine PHY-Schicht des ersten Endgeräts gesendet.

6. Verfahren nach einem der Ansprüche 1 bis 5, das ferner umfasst:
Empfangen siebter Anweisungsinformationen von der Netzwerkvorrichtung, wobei die siebten Anweisungsinformationen dazu verwendet werden, das erste Endgerät anzuweisen, die ersten Bestätigungsinformationen zu erzeugen oder zu senden, wenn das erste Endgerät bestimmt, keine Daten unter Verwendung der ersten Ressource über den Sidelink zu übertragen und/oder die erste voreingestellte Bedingung erfüllt ist.

7. Kommunikationseinrichtung, die Module zum Durchführen von Schritten des Verfahrens nach einem der Ansprüche 1 bis 6 umfasst.

8. Computerprogrammprodukt, das Computerprogrammcode umfasst, der, wenn er durch einen Prozessor einer Einrichtung ausgeführt wird, die Einrichtung veranlasst, die Schritte des Verfahrens nach einem der Ansprüche 1 bis 6 durchzuführen.

9. Computerlesbares Speichermedium, das das Computerprogrammprodukt nach Anspruch 8 umfasst.

**Revendications**

1. Procédé de traitement de communication, réalisé par un premier dispositif terminal, ou par une puce du premier dispositif terminal, dans lequel le procédé comprend :

la génération (201) de premières informations d'accusé de réception lorsque le premier dispositif terminal détermine de ne pas transmettre de données sur une liaison latérale en utilisant une première ressource, dans lequel la liaison latérale est une liaison de communication directe sans fil entre le premier dispositif terminal et un second dispositif terminal, et la première ressource est une ressource programmée par un dispositif de réseau pour le premier dispositif terminal, dans lequel le second dispositif terminal comprend un quelconque parmi un ou plusieurs dispositifs terminaux autres que le premier dispositif terminal, dans lequel les premières informations d'accusé de réception sont un accusé de réception, ACK ; et

l'envoi (202) des premières informations d'accusé de réception au dispositif de réseau, dans lequel le premier dispositif terminal détermine de ne pas transmettre de données sur une liaison latérale en utilisant la première ressource, lorsqu'aucune donnée n'est obtenue dans un processus de demande de répétition automatique hybride, HARQ,

dans lequel la première ressource est associée au processus HARQ.

**2.** Procédé selon la revendication 1, dans lequel l'envoi (202) des premières informations d'accusé de réception à un dispositif de réseau comprend :
l'envoi des premières informations d'accusé de réception à un dispositif de réseau en utilisant une première ressource de canal de commande de liaison montante physique, PUCCH.

**3.** Procédé selon l'une quelconque des revendications 1 à 2, dans lequel la génération (201) de premières informations d'accusé de réception lorsque le premier dispositif terminal détermine de ne pas transmettre de données sur une liaison latérale en utilisant une première ressource comprend :

la génération des premières informations d'accusé de réception lorsque le premier dispositif terminal détermine de ne pas transmettre de données sur la liaison latérale en utilisant la première ressource et lorsqu'une première condition prédéfinie est satisfaite, dans lequel la première condition prédéfinie comprend un quelconque parmi le ou les éléments suivants :

la première ressource PUCCH correspondant à la première ressource existe ;
la première ressource n'est pas écartée par une seconde ressource, dans lequel la seconde ressource est une ressource programmée par le dispositif de réseau pour le premier dispositif terminal ; ou
la première ressource PUCCH correspondant à la première ressource n'est pas utilisée pour renvoyer, au dispositif de réseau, des neuvièmes informations d'accusé de réception associées au processus HARQ.

**4.** Procédé selon l'une quelconque des revendications 1 à 3, dans lequel la première ressource comprend une quelconque parmi une ou plusieurs :

d'une ressource de la liaison latérale ;
d'une ressource d'octroi configurée de la liaison latérale ;
d'une ressource d'octroi dynamique de la liaison latérale ;
d'une ressource de mode 1 de la liaison latérale ;
d'une ressource d'octroi configurée de type 1 de la liaison latérale ; ou
d'une ressource d'octroi configurée de type 2 de la liaison latérale.

**5.** Procédé selon l'une quelconque des revendications 1 à 4, comprenant :

les premières informations d'accusé de réception générées par une couche physique, PHY, du premier dispositif terminal selon une instruction d'une couche de commande d'accès au support, MAC, du premier dispositif terminal ; ou
les premières informations d'accusé de réception générées par une couche MAC du premier dispositif terminal et étant envoyées par la couche MAC du premier dispositif terminal à une couche PHY du premier dispositif terminal.

**6.** Procédé selon l'une quelconque des revendications 1 à 5, comprenant en outre :
la réception de septièmes informations d'instruction en provenance du dispositif de réseau, dans lequel les septièmes informations d'instruction sont utilisées pour ordonner au premier dispositif terminal de générer ou d'envoyer les premières informations d'accusé de réception lorsque le premier dispositif terminal détermine de ne pas transmettre de données sur la liaison latérale en utilisant la première ressource et/ou lorsque la première condition prédéfinie est satisfaite.

**7.** Appareil de communication, comprenant des modules pour mettre en œuvre des étapes du procédé selon l'une quelconque des revendications 1 à 6.

**8.** Produit-programme informatique, comprenant un code de programme informatique qui, lorsqu'il est exécuté par un processeur d'un appareil, amène l'appareil à mettre en œuvre les étapes du procédé selon l'une quelconque des revendications 1 à 6.

**9.** Support de stockage lisible par ordinateur comprenant le produit-programme informatique selon la revendication 8.

FIG. 1A

| Slot | 1 | | | | | | | | | | | | | | 2 | | | | | | | | | | | | | | 3 | | | | | | | | | | | | | | 4 | | | | | | | | | | | | | | ... |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| Symbol | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | ... |
| Sidelink grant | | | | | | | | | | | | | | | | | | | | | | | | | | | | | | | | | | | | | | | | | | | | | | | | | | | | | | | | | ... |
| Sidelink grant ID | 0 | | | | | | | | | | | | | | 1 | | | | | | | | | | | | | | 2 | | | | | | | | | | | | | | 3 | | | | | | | | | | | | | | ... |

FIG. 1B

| Slot | 1 | | | | | | | | | | | | | | 2 | | | | | | | | | | | | | | 3 | | | | | | | | | | | | | | 4 | | | | | | | | | | | | | | ... |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| Symbol | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | ... |
| Uplink grant | | | | | | | | | | | | | | | | | | | | | | | | | | | | | | | | | | | | | | | | | | | | | | | | | | | | | | | | | ... |
| Uplink grant ID | 0 | | | | | | | | | | | | | | 1 | | | | | | | | | | | | | | 2 | | | | | | | | | | | | | | 3 | | | | | | | | | | | | | | ... |
| HARQ process ID | 3 | | | | | | | | | | | | | | 4 | | | | | | | | | | | | | | 5 | | | | | | | | | | | | | | 6 | | | | | | | | | | | | | | ... |

FIG. 1C

```
┌─────────────────┐                                    ┌─────────────────┐
│  First terminal │                                    │  Network device │
│     device      │                                    │                 │
└────────┬────────┘                                    └────────┬────────┘
┌ ─ ─ ─ ─┴─ ─ ─ ─ ─ ─ ─ ─ ─ ─ ─ ─ ─ ─ ─ ─ ─ ─ ─ ┐              │
│ 201a. Obtain seventh instruction information   │              │
└ ─ ─ ─ ─┬─ ─ ─ ─ ─ ─ ─ ─ ─ ─ ─ ─ ─ ─ ─ ─ ─ ─ ─ ┘              │
┌────────┴────────────────────────────────────┐               │
│  201. Generate first acknowledgement         │               │
│  information when the first terminal device  │               │
│  does not perform transmission on a sidelink │               │
│  by using a first resource                   │               │
└────────┬─────────────────────────────────────┘               │
         │  202. First acknowledgement information               │
         ├──────────────────────────────────────────────────────►
         │                                                       │
```

FIG. 2

```
┌─────────────────┐         ┌─────────────────┐         ┌─────────────────┐
│    Second       │         │  First terminal │         │    Network      │
│ terminal device │         │     device      │         │     device      │
└────────┬────────┘         └────────┬────────┘         └────────┬────────┘
         │                           │  301. Second instruction information │
         │                           ◄─ ─ ─ ─ ─ ─ ─ ─ ─ ─ ─ ─ ─ ─ ─ ─ ─ ─ ─ ┤
         │              ┌────────────┴─────────────────────────┐           │
         │              │  302. When a second preset condition │           │
         │              │  is met, retransmit or newly transmit│           │
         │              │  data of a first HARQ process by     │           │
         │              │  using a first sidelink grant        │           │
         │              └────────────┬─────────────────────────┘           │
         │  303. First HARQ process ID │                                    │
         ◄─ ─ ─ ─ ─ ─ ─ ─ ─ ─ ─ ─ ─ ─ ┤                                    │
         │          ┌ ─ ─ ─ ─ ─ ─ ─ ─ ┴ ─ ─ ─ ─ ─ ─ ─ ─ ─ ┐              │
         │          │ 304. Release a HARQ process identified │              │
         │          │ by the first HARQ process ID or flushes│              │
         │          │ a HARQ buffer corresponding to a HARQ  │              │
         │          │ process identified by the first HARQ   │              │
         │          │ process ID                             │              │
         │          └ ─ ─ ─ ─ ─ ─ ─ ─ ─┬─ ─ ─ ─ ─ ─ ─ ─ ─ ─┘              │
         │                              │                                   │
```

FIG. 3

First terminal
device

Network device

401a. Obtain fourth instruction information

401. Generate fourth acknowledgement information
when a fourth preset condition is met

402. Fourth acknowledgement information

FIG. 4

First terminal
device

501. Perform any one or more of the following when a fifth
preset condition is met: discarding data corresponding to a tenth
HARQ process; flushing a HARQ buffer corresponding to a
tenth HARQ process; releasing a tenth HARQ process; deleting
a correspondence related to a tenth HARQ process; or deleting a
correspondence related to first SCI

FIG. 5A

Enable an
eighth timer

Enable a
ninth timer

Length of the eighth timer

Length of the
ninth timer

Fourth
moment

FIG. 5B

Start an eighth
timer and a
tenth timer

Length of the eighth timer

Fourth moment

Length of the
tenth timer

FIG. 5C

First time-
frequency
position

Second time-
frequency
position

Third time-
frequency
position

Fourth time-
frequency
position

Time-
frequency
resource
position

FIG. 5D

Network device

601. When the network device receives second
acknowledgement information sent by a first terminal
device or the network device does not receive
feedback sent by a first terminal device, schedule a
retransmission resource of a first HARQ process for
the first terminal device within seventh preset
duration or before a fifth timer expires

FIG. 6

```
                    ┌─────────────────┐
                    │  Fifth terminal │
                    │     device      │
                    └────────┬────────┘
                             │
    ┌────────────────────────┴────────────────────────────┐
    │ 701. Monitor and/or decode a PDCCH or DCI scrambled by│
    │              using a first RNTI                       │
    └────────────────────────┬────────────────────────────┘
                             │
    ┌────────────────────────┴────────────────────────────┐
    │ 702. Obtain a sixth resource scheduled by a network device│
    └────────────────────────┬────────────────────────────┘
                             │
```

FIG. 7A

Share a type 1 configured grant resource

Share a PUCCH resource 1

| UE 1 | | UE 2 |

Share a PUCCH resource 2

| UE 3 | | UE 4 |

FIG. 7B

```
    ┌─────────────────┐                    ┌─────────────────┐
    │  First terminal │                    │ Network device  │
    │     device      │                    │                 │
    └────────┬────────┘                    └────────┬────────┘
             │                                      │
┌────────────┴───────────────────────────────┐     │
│ 801. Generate eighth acknowledgement         │     │
│ information when HARQ feedback of a sidelink  │     │
│ is not enabled or is disabled                 │     │
└────────────┬───────────────────────────────┘     │
             │   802. Eighth acknowledgement information │
             │ ─────────────────────────────────────▶│
             │                                      │
```

FIG. 8

FIG. 9

FIG. 10

FIG. 11

Communication processing system

First terminal device — Network device

FIG. 12

**EP 4 084 546 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013223356 A1

**Non-patent literature cited in the description**

- **INTERDIGITAL, INC.** NR Sidelink Mode 2 Resource Allocation. *3GPP Draft; R1-1912740*